(19) Europäisches Patentamt
European Patent Office
Office européen des brevets

(11) EP 1 906 235 A1

(12) **EUROPEAN PATENT APPLICATION**
published in accordance with Art. 153(4) EPC

(43) Date of publication:
**02.04.2008 Bulletin 2008/14**

(21) Application number: **06780935.0**

(22) Date of filing: **11.07.2006**

(51) Int Cl.:
***G03C 1/498*** *(2006.01)* ***G03B 27/32*** *(2006.01)*
***G03C 5/08*** *(2006.01)* ***G03D 13/00*** *(2006.01)*

(86) International application number:
**PCT/JP2006/313713**

(87) International publication number:
**WO 2007/010777 (25.01.2007 Gazette 2007/04)**

(84) Designated Contracting States:
**DE FR GB**

(30) Priority: **20.07.2005 JP 2005209662**

(71) Applicant: **Konica Minolta Medical & Graphic, Inc.**
**Hino-shi,**
**Tokyo 191-8511 (JP)**

(72) Inventor: **YANAGISAWA, Hiroyuki**
**Konica Minolta M&G, Inc.**
**Tokyo 191-8511 (JP)**

(74) Representative: **Gille Hrabal Struck Neidlein Prop Roos**
**Patentanwälte**
**Brucknerstrasse 20**
**40593 Düsseldorf (DE)**

(54) **METHOD FOR IMAGE FORMATION**

(57) An image forming method comprising the steps of: (1) applying a laser beam to a heat developable photosensitive material with a scanning exposure part comprising a semiconductor laser, a polygon mirror, and an imaging lens formed of a resin, the imaging lens comprising at least one of an fθ lens and a cylindrical lens, and (2) thermally developing the exposed imaging material to record an image, wherein the heat developable photosensitive material is provided on a support with a photosensitive layer, comprising an organic silver salt, a silver halide, a binder and a reducing agent on a support, and the reducing agent is a compound represented by following Formula (RD1):

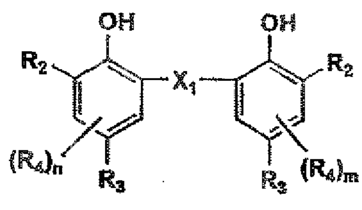

FIG. 1

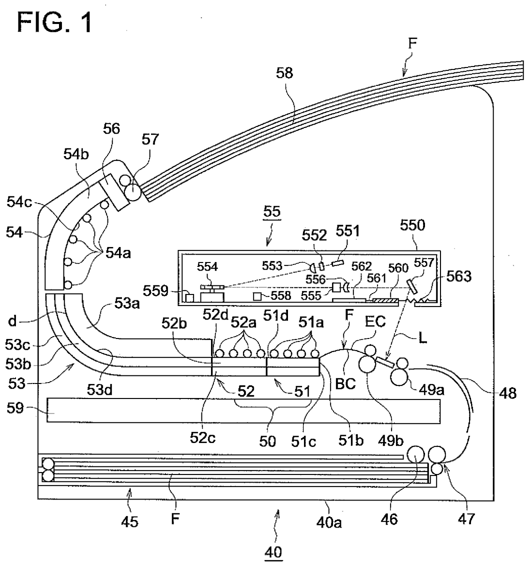

EP 1 906 235 A1

## Description

### FIELD OF THE INVENTION

The present invention relates to an image forming method in which an image is formed by a heat development treatment of a heat developable photosensitive material after having been irradiated by a laser beam from a semiconductor laser.

### BACKGROUND OF THE INVENTION

Heretofore, a heat development apparatus in which an image is recorded by applying a laser beam to a heat developable photosensitive material with a flat scanning optical system, which is comprised of a semiconductor laser, a polygon mirror and an imaging lens comprising at least one of an fθ lens or a cylindrical lens, and then thermally developing the exposed material, has been known (please refer, for exmple, to Patent Document 1).

Medical diagnostic images output from this heat development apparatus are generally required to have quality much higher than images output by an electro-photographic method. To satisfy this requirement, since it is necessary to condense the light emitted from a semiconductor laser into a small spot diameter uniformly over a wide output power range, a glass lens provided with a high manufacturing precision and a small environmental variation has been utilized as an imaging lens in a flat scanning optical system of a heat development apparatus.

On the other hand, in recent years, requirement for a smaller-size and lower-cost heat development apparatus has come to be intensive. As means to answer this requirement, it has been practiced to reduce the number of parts for conveyance by such as shortening the conveying distance of a photosensitive material resulting in a lower cost.

Patent Document 1: Unexamined Japanese Patent Application Publication No. (hereinafter, referred to as JP-A) 2003-195203

### SUMMARY OF THE INVENTION

### PROBLEMS TO BE SOLVED

With respect to a flat scanning optical system, few materials other than glass have been utilized as an imaging lens because of the above-described reason of priority for high image quality, resulting in little advance in cost reduction.

This invention has been made in view of the above-described background. An object of the present invention is to provide an image forming method of a silver salt photothermographic dry imaging material which can form a high-quality image even under an environmental variation in a small-size and low-cost manner.

### MEANS TO SOLVE THE PROBLEMS

The image forming method of this invention is as follows.

Item 1. An image forming method comprising the steps of:

(1) applying a laser beam to a heat developable photosensitive material with a scanning exposure part comprising a semiconductor laser, a polygon mirror, and an imaging lens formed of a resin, the imaging lens comprising at least one of an fθ lens and a cylindrical lens, and
(2) thermally developing the exposed imaging material to record an image,

wherein the heat developable photosensitive material is provided on a support with a photosensitive layer, comprising an organic silver salt, a silver halide, a binder and a reducing agent on a support, and the reducing agent is a compound represented by following Formula (RD1):

Formula (RD1)

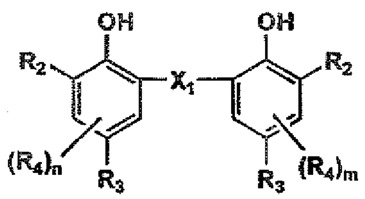

(wherein $X_1$ is a chalcogen atom or $CHR_1$; $R_1$ is a hydrogen atom, a halogen atom, an alkyl group, an alkenyl group, an aryl group or a heterocyclic group; $R_2$ is an alkyl group, and a plurarity of $R_2$s may be the same or different from each other; $R_3$ is a hydrogen atom or a group capable of substituing on a benzene ring; $R_4$ is a group capable of substituing on a benzene ring; and m and n are each an integer of 0 - 2.)

Item 2. The image forming method described in item 1 above, wherein at least one of $R_2$ in the compound represented by Formula (RD1) is a secondary or tertiary alkyl group.

Item 3. The image forming method described in item 1 or 2 above, wherein the photosensitive layer contains a compound represented by following Formula (SE1) or (SE2):

Formula (SE1) $Q_1$-NHNH-$Q_2$

(in the formula, $Q_1$ is an aromatic group or a hetrocyclic group bonding with -NHNH- via a carbon atom; and $Q_2$ is a carbamoyl group, an acyl group, an alkoxycarbonyl group, an aryloxycarbonyl group, a sulfonyl group or a sulfamoyl group.)

Formula (SE2)

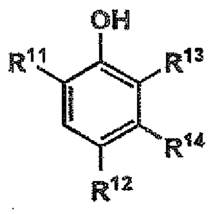

(in the formula, $R^{11}$ is an alkyl group, an acyl group, an acyamino group, a sulfonamide group, an alkoxy group, a carbonyl group or a carbamoyl group; $R^{12}$ is a hydrogen atom, a halogen atom, an alkyl group, an alkoxy group, an aryloxy group, an alkylthio group, an arylthio group, an acyloxy group or a carboxylic acid ester group; $R^{13}$ and $R^{14}$ are each a group capable of substituing on a benzene ring; and $R^{13}$ and $R^{14}$ may bond to each other to form a condensed ring.)

Item 4. The image forming method described in any one of items 1 - 3 above, wherein the resin is cycloolefin polymer.

Item 5. The image forming method described in any one of items 1 - 4 above, wherein the scanning exposure part is covered by a cover member.

Item 6. The image forming method described in items 5 above, wherein a humidity controlling agent is provided in the interior of the cover member.

Item 7. The image forming method described in any one of items 1 - 6 above, wherein a humidity sensor is provided in the interior of the cover member or in the conveying path of the heat developable photosensitive material.

Item 8. The image forming method described in any one of items 1 - 7, wherein a thermo-sensor is provided in the interior of the cover member or in the conveying path of the heat developable photosensitive material.

Item 9. The image forming method described in item 7 above, wherein a development temperature is controlled based on a detection result of the humidity sensor.

Item 10. The image forming method described in item 7, wherein a development time is controlled based on the detection result of the humidity sensor.

Item 11. The image forming method described in item 7, wherein output power of a semiconductor laser is controlled based on the detection result of the humidity sensor.

Item 12. The image forming method described in item 8 above, wherein the development temperature is controlled based on a detection result of the thermo-sensor.

Item 13. The image forming method described in item 8, wherein the development time is controlled based on the detection result of the thermo-sensor.

Item 14. The image forming method described in item 8, wherein output power of the semiconductor laser is controlled based on the detection result of the thermo-sensor.

Item 15. The image forming method described in any one of items 1 - 14 above, wherein a heat treatment is conducted from the photo-insensitive surface of the heat developable photosensitive material.

Item 16. The image forming method described in item 15 above, wherein the heat developable photosensitive material contains a compound represented by following Formula (1):

Formula (1)

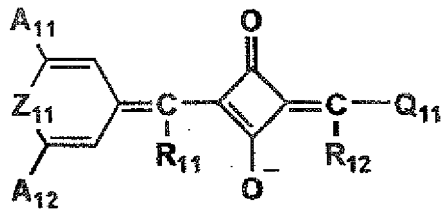

(in the formula, $R_{11}$ and $R_{12}$ are each independently a hydrogen atom or a substituent, $Z_{11}$ is O, S, N-$R_1$, Se or Te; $R_1$ is an alkyl group or an aryl group; $Q_{11}$ is a six-member heterocyclic ring; provided that $A_{11}$ and $A_{12}$ are each independently a substituent; provided that $A_{11}$ and $A_{12}$ are different from each other.)

Item 17. The image forming method described in any one of items 1 - 16 above, wherein a sheet photosensitive material comprising a silver salt photothermographic dry imaging material formed into a sheet form is conveyed at a conveying rate of 33 - 150 mm/sec while being heated.

Item 18. The image forming method described in any one of items 1 - 16, wherein the sheet photosensitive material comprising the silver salt photothermographic dry imaging material formed into a sheet form is developed with a laser imager having a distance between an exposure part and a development part of not less than 0 cm and not more than 50 cm.

**EFFECTS OF THE INVENTION**

According to the image forming method described in item 1 above, high image quality is achieved even in the case of forming an image by use of a scanning exposure part provided with an imaging lens made of resin as well as an excellent level of density unevenness is achieved even in the case of conducting heat development under a low humidity condition. According to the image forming method described in item 2, an image, provided with a high density and excellent image storage stability against light irradiation, can be prepared.

According to the image forming method described in item 3, the level of density unevenness can be further improved even when heat development is conducted under a low humidity condition.

According to the image forming method described in item 4, a high quality image can be prepared because a resin lens, which is provided with characteristics of small refractive index variation and small optical strain due to moisture absorption, is utilized.

According to the image forming method described in item 5, since the environment, where a resin lens is arranged, is separated from the surrounding environment, a stable and high quality image with small humidity variation is obtained even when environmental humidity is largely changed.

According to the image forming method described in item 6, since the environment, where a resin lens is arranged, is maintained as a low humidity environment, a high quality image is obtained.

According to the image forming method described in items 7 - 14, stable image density can be obtained by measuring temperature and humidity, which influence to image density, and conducting feed back on factors capable of controlling image density.

According to the image forming method described in item 15, stable image density can be obtained even when environmental humidity is varied by releasing gases, which may change developability, from the photosensitive surface and by mildly applying heat on the photosensitive surface.

According to the image forming method described in item 16, stable image density can be obtained even when environmental humidity is varied because the storage stability under high temperature and high humidity is excellent.

According to the image forming method described in item 17, density unevenness at the time of heat development is decreased and diagnosis at emergency is possible because of the shortened processing time.

According to the image forming method described in item 18, a series of processing time for exposure and/or development can be extremely decreased.

**BRIEF DESCRIPTION OF THE DRAWINGS**

Fig. 1 is a side view drawing to schematically show the primary portion of a heat development apparatus.
Fig. 2 is a control block diagram of a scanning exposure part.

## DESCRIPTION OF THE SYMBOLS

- 50: temperature raising part
- 51: first heating zone
- 52: second heating zone
- 53: temperature keeping part
- 54: cooling part
- 55: scanning exposure part
- 550: case
- 551: laser diode
- 553: cylindrical lens
- 554: polygon mirror
- 555: fθ lens
- 556: cylindrical lens
- 557: mirror
- 558: humidity sensor
- 559: humidity controlling agent
- 560: shutter
- 561: magnet rod
- 562: electromagnetic plunger
- 563: tension spring

## DESCRIPTION OF THE PREFERRED EMBODIMENT

(Total Constitution of Apparatus)

Fig. 1 is a side view drawing to schematically show the primary portion of a heat development apparatus according to a preferable embodiment.

As shown in Fig. 1, heat development apparatus 40 forms a latent image on the EC surface with laser light L from optical scanning exposure part 55 while conveying film F, which is provided with a photosensitive surface (hereinafter, referred to as an EC surface) comprising a heat developable photosensitive material having been coated on a sheet form support substrate formed of such as PET and a photo-insensitive surface (hereinafter, referred to as a BC surface) on the surface opposite to the EC surface of the support substrate, along the vertical scanning direction; then heats film F from the BC side to develop and visualize the latent image; and conveys and outputs the film upward the apparatus through a curved conveying path.

Heat development apparatus 40 of Fig. 1 is equipped with film storing part 45 to store plural sheets of unused film F which is arranged at the neighborhood of the bottom of apparatus box 40 a, pick-up roller 46 to convey uppermost film F in film storing part 45, conveying roller pair 47 to convey film F from pick-up roller 46, curved guide 48 constituted in a curved form so as to convey film F from conveying roller pair 47 almost inversing the conveying direction, conveying roller pair 49a to convey film F from curved guide 48 in the vertical scanning direction, optical scanning exposure part 55 to form a latent image on an EC surface by exposing film F with laser light L based on image data between conveying roller pair 49a and 49b.

Heat development apparatus 40 is further equipped with temperature raising part 50 to raise temperature up to a predetermined heat development temperature by heating film F, on which a latent image has been formed, from the BC surface side; temperature keeping part 53 to heat and keep film F at a predetermined heat development temperature; cooling part 54 to cool heated film F from the BC surface side; densitometer 56 which is arranged at the outlet side of cooling part 54 and measures the density of film F, conveying roller pair 57 to send out film F from densitometer 56; and film stocking part 58 which is arranged on the upper surface of apparatus box 40a so as to stock film F sent out by conveying roller pair 57.

As shown in Fig. 1, in heat development apparatus 40, film storing part 45, substrate part 59, conveying roller pair 49a, 49b, temperature raising part 50 and temperature keeping part 53 (upstream side) are arranged in this order upward from the bottom of apparatus box 40a, and film storing part 45 is hardly receive heat influence since it is arranged at the most downstream and substrate part 59 is arranged between said film storing part 45 and temperature raising part 50·temerature keeping part 53.

Further, since the conveying path from conveying roller pair 49a and 49b, for vertical scanning conveyance, to temperature raising part 50 is constituted to be relatively short, heat development is conducted for the top side of film

F in temperature raising part 50 and temperature keeping part 53, while exposure against film F from optical scanning part 55 being conducted.

Temperature raising part 50 and temperature keeping part 53 constitute the heating part and heat film F up to heat development temperature and keep said film F at heat development temperature. Temperature raising part 50 is provided with first heating zone 51 to heat film F in the upstream and second heating zone 52 to heat film F in the downstream.

First heating zone 51 is provided with fixed flat-form heating guide 51b which is formed of a metal material such as aluminum, flat form heater 51c which is formed of such as a silicone rubber heater and adhered on the back surface of heating guide 51b, and plural number of counter rollers 51a which are arranged to maintain a gap narrower than the film thickness so as to press film onto fixed guide surface 51d of heating guide 51b and formed of such as silicone rubber the surface of which has a heat insulating property compared to metals.

Second heating zone 52 is provided with fixed flat-form heating guide 52b which is formed of a metal material such as aluminum, flat form heater 52c which is formed of such as a silicone rubber heater and adhered on the back surface of heating guide 52b, and plural number of counter rollers 51a which are arranged to maintain a gap narrower than the film thickness so as to press film onto fixed guide surface 52d of heating guide 52b and formed of such as silicone rubber the surface of which has a heat insulating property compared to metals.

Temperature keeping part 53 is provided with fixed flat-form heating guide 53b which is formed of a metal material such as aluminum; flat form heater 53c which is formed of such as a silicone rubber heater and adhered on the back surface of heating guide 53b; and guide part 53a which is arranged opposing to and having a predetermined gap (slit) d against fixed guide surface 53d, which is constituted on the surface of heating guide 53b, and formed of such as a heat insulating material. Temperature keeping part 53 is constituted in a flat plane form continuous to second heating zone 52 on the side of temperature rising part 50 and in a curved plane form having a predetermined curvature on the way to upward the apparatus.

In first heating zone 51 of temperature raising part 50, film F, which is conveyed by conveying roller pair 49a and 49b from the upstream side of temperature raising part 50, is pressed against fixed guide surface 51d by each roller pair 51a, which are rotating driven, to be conveyed, while being in cross contact on fixed guide surface 51d and heated.

Similarly in second heating zone 52, film F, which is conveyed from first heating zone, is pressed against fixed guide surface 52d by each roller pair 52a, which are rotating driven, to be conveyed, while being in cross contact on fixed guide surface 51d and heated.

Herein, a concave part, which is open in a V letter form upward between second heating zone 52 of temperature raising part 50 and temperature keeping part 53, may be arranged, whereby it is possible to prevent foreign matters from temperature raising part 50 from being brought into temperature keeping part 53, by making foreign matters from temperature raising part 50 fall in the convex part.

In temperature keeping part 53, film F, which has been conveyed from second heating zone 52, passes through gap d by conveying power of counter roller 52a on the second heating zone 52 side while being heated (kept warm) by the heat from heating guide 53b in gap d between fixed guide surface 53d of heating guide 53b and guide part 53a. At this time, film F is conveyed toward cooling part 54 while gradually changing the conveying direction from the horizontal direction to the vertical direction in gap d.

In cooling part 54, film F having been conveyed in the vertical direction from temperature keeping part 53 is conveyed changing the direction from the vertical direction to gradually the oblique direction and toward film stocking part 58, while being cooled by being brought in contact with cooling guide surface 54c of cooling plate 54b which is formed of such as a metal material by counter roller 54a. Herein, cooling plate 54b may be provided with a fin-attached heat sink structure to increase the cooling effect. A part of cooling plate 54b may be provided with a fin-attached heat sink structure.

Cooled film F having been sent out from cooling part 54 is subjected to density measurement with densitometer 56 and is conveyed by conveying roller pair 57 to be fed out onto film stocking part 58. Film stocking part 58 can temporarily stock plural sheets of film F.

As described above, in heat development apparatus 40 of Fig. 1, film F, the BC surface of which is faced to fixed guides 51d, 52d and 53d in a heated state in temperature raising part 50 and temperature keeping part 53, is conveyed in a state of the EC surface, on which heat developable photosensitive material is coated, being open. Further, in cooling part 54, film F, the BC surface of which is in contact with cooling guide surface 54c, is conveyed in a state of the EC surface, on which heat developable photosensitive material is coated, being open.

Further, film F is conveyed by counter rollers 51a and 51b so as to make the time to pass through temperature raising part 50 and temperature keeping part 53 not longer than 10 seconds. Therefore, heating time from temperature raise to temperature keep is also not longer than 10 seconds.

As described above, by employing heat development apparatus 40 of Fig. 1, since film F is conveyed while ensuring contact heat transmission by being adhered on fixed guide surfaces 51d and 52d by use of heating guides 51b and 52b and plural number of counter rollers 51a and 52a which press film F against heating guides 51b and 52b, in

temperature raising part 50 where uniform heat transfer is required; the whole surface of the film is uniformly heated and the temperature is uniformly raised to provide finished film having a high quality image with minimum generation of density unevenness.

Further, after raising film temperature to heat development temperature, film is conveyed into gap d between fixed guide surface 53d of heating guide 53b and guide part 53a in temperature keeping part 53, and film temperature is controlled within a predetermined range against heat development temperature even when film is heated in gap d without being particularly adhered on fixed guide surface 53d (heat transmission by direct contact on fixed guide surface 53d and/or heat transmission by contact with surrounding high temperature air). In this manner, since film temperature difference is less than $\pm 0.5$ °C even when film is conveyed along either the wall surface of heating guide 53b or the wall surface of curved guide 53a in gap d to maintain uniform warmed state, there hardly generated defects such as density unevenness in finished film. Therefore, no driving parts such as rollers are required in temperature keeping part 53 to enable reducing the number of parts.

Further, since heating time of film F is finished within 10 seconds, a rapid heat development process can be realized; and sine temperature keeping part 53 which is extended from temperature raising part 50 toward the horizontal direction is constituted to be a curved surface form facing toward the vertical direction and film F is fed out onto film stocking part 58 by almost reversing the direction of film F in cooling part 54, it is possible to answer minimization of the required floor area and the whole apparatus.

Since a conventional large-size apparatus is provided with a heating and conveying structure same as a temperature raising part even for the part sufficient to have only a temperature keeping function after raising the temperature of film to a development temperature, unnecessary parts are utilized to induce increase of the number of parts and cost up; while in a conventional small-size apparatus, it has been difficult to ensure a high image quality because of a problem of density unevenness generated due to difficulty of assuring heat transmission at the time of temperature raising; on the other hand, according to a preferable embodiment of this invention, any of these problems can be dissolved by conducting a heat development process separately in temperature raising part 50 and in temperature keeping part 53.

Further, by heating film F from the BC surface side while the EC surface, on which heat developable photosensitive material is coated, is open in temperature raising part 50 and temperature keeping part 53, at the time of conducting a heat development process in a rapid process of not longer than 10 seconds, since solvent (such as a water content and an organic solvent) contained in film F which is ready to vaporize (evaporate) by being heated is dispersed in a minimum distance due to opening of the EC surface, influence of time shortening is hardly generated even with a reduced heating time (evaporation time) as well as temperature difference is relaxed by a heat diffusion effect of a PET base on the BC surface even when there is a bad contact portion between film F and fixed guide surfaces 51 d and 52d, resulting in bare generation of density difference, whereby density is stabilized and an image quality is stabilized. Herein, generally it has been considered that EC surface heating is better in consideration of heat efficiency; however, the time delay is small to be easily canceled by such as increasing the heater capacity, in consideration of a thermal conductivity of PET as a support substrate of film F of 0.17 W/m °C and a thickness of PET base of approximately 170 $\mu$m, and it is preferable to expect the above-described effect to relieve contact unevenness.

Further, solvent (such as a water content and an organic solvent) in film F is ready to vaporize (evaporate) while approaching cooling part 54 due to high temperature, however, since the EC surface of film F is in an open state even in cooling part 54 and solvent (such as a water content and an organic solvent) is not trapped to be vaporized for a longer time, the image quality is stabilized. In this manner, cooling time also cannot be neglected in a rapid processing and heating from BC surface is specifically effective for a rapid processing having heating time as short as not more than 10 seconds.

In this invention, heat development temperature is preferably in a range of 110 - 150 °C and more preferably in a range of 115 - 135°C. Sufficient image density cannot be obtained within a short time when heating temperature is lower than 80 °C, while transfer to a roller and bad effects on conveying behavior and a development apparatus may be caused at high temperature (particularly not lower than 200 °C) due to such as melting of a binder. By heating, a silver image is formed by an oxidation-reduction reaction between organic silver salt (functions as an oxidant) and a reducing agent. This reaction process proceeds without any supply of processing liquid such as water from outside.

As a heating means, any one of contact heating such as a heating plate or non-contact heating such as radiation may be employed; however, contact heating with a heating plate is preferable. A contact heating surface may be either the photosensitive layer side or the photo-insensitive layer side; however, it is preferable that the photo-insensitive layer side is a contact heating surface with respect to stability against processing environment. A development part is preferably constituted of plural zones, where temperature is independently controlled, and plural means in combination, and further, it is preferably provided with at least one temperature keeping zone to maintain specific development temperature. Therefore, in a heat development apparatus preferably utilized in this invention, heat development process can apply separate constitutions depending on a temperature raising part and a temperature keeping part, and intimate contact between a heating means such as a heating member and sheet film is promoted, in a temperature raising part, to restrain generation of density unevenness, while such an intimate contact is not necessarily promoted in a temperature keeping

part, resulting in utilization of a different and optimum heating method depending on a temperature raising part and a temperature keeping part, whereby it is possible to achieve a constitution capable of rapid processing as well as a small-size and low-cost apparatus design, for heat development process, while maintaining a high image quality without density unevenness.

The above-described heat development apparatus can apply a constitution in which the aforesaid temperature raising part heats the aforesaid film while being pressed against and brought into contact with a plate heater by a counter roller, the aforesaid temperature keeping part heats the aforesaid film in a slit formed between guides at least one of which is provided with a heater. Since, in a temperature raising part, intimate contact of a plate heater and sheet film is possible by pressing the sheet film against a plate heater by a counter roller to be brought into contact with the plate heater, and on the other hand, in a temperature keeping part, it is possible to convey the sheet film with conveying power by a counter roller in a temperature raising part while being heated (kept warm) between a slit, whereby driving parts in conveying system are not required and dimension precision is not required so much resulting in achievement of a small-size and low-cost apparatus.

According to this heat development apparatus, in the first zone, temperature raise is conducted by assuring intimate contact between a heating means such as a heating member to depress generation of density unevenness, while in the second zone, it is not required to promote such intimate contact and temperature of the sheet film is kept in a guide gap, whereby a constitution which enable rapid processing, a small-size and low-cost apparatus of heat development process while maintaining a high image quality without density unevenness. When the guide gap is not more than 3 mm, there is small influence on temperature keeping ability in the second zone regardless of conveying pose of sheet film, as well as arrangement precision of a fixed guide and the other guide is not required so much, whereby there is a large allowance against curvature error at manufacturing and installation precision of the both guides resulting in significant increase of the degree of freedom in design which can contribute cost reduction of the apparatus.

In the above-described heat development apparatus, the guide gap of the aforesaid second zone is preferably in a range of 1 - 3 mm. When the guide gap is not less than 1 mm, it is preferable that the coated surface of a heat developable photosensitive material of sheet film may hardly touch the guide surface to reduce the risk of abrasion generation.

Further, the aforesaid fixed guide and the aforesaid guide in the aforesaid second zone are preferably provided with an approximately same curvature. When guides in the second zone are provided with a curvature such as to make a small-size apparatus, it is possible to constitute guides having an approximately constant guide gap.

Further, it is possible to constitute the apparatus so as to make the processing time, in the aforesaid temperature raising part and the aforesaid temperature keeping part, of not more than 10 seconds, which enables to shorten the period of the temperature raising process and the temperature keeping process resulting in rapid processing of a heat development process.

Further, by providing a concave part between the aforesaid temperature raising part and the aforesaid temperature keeping part so that foreign matters from the aforesaid temperature raising part will fall into said concave part, it is possible to prevent foreign matters, which have been accumulates and transferred by the film top portion during being conveyed through the temperature raising part, from being carried into the temperature keeping part, whereby it is possible to prevent generation of jamming, abrasion and density unevenness on sheet film.

Herein, the aforesaid temperature raising part and the aforesaid temperature keeping part are preferably constituted so as to heat the aforesaid sheet film while the coated side of the aforesaid heat developable photosensitive material is open. In cooling part it is also preferable to cool the aforesaid sheet film while the coated side of the aforesaid heat developable photosensitive material is open.

Herein, the constitution of a temperature keeping part may be a constitution provided to maintain the raised film temperature, and not limited to the above description. Further, development time is preferably 5 - 10 seconds.

Further, the above-described heat development apparatus may be provided with a pre-heating zone to heat a silver salt photothermographic dry imaging material at 70 - 100 °C after having been subjected to image-wise exposure and before heat development process to heat at a desired development temperature. Further, the material is more preferably heated at 90 - 100 °C. The mechanism of a pre-heating zone is not specifically limited; however, contact heating with a heating plate is preferable with respect to cost and controllability. The heating temperature precision in a preheating zone is preferably $\pm 1$ °C and more preferably $\pm 0.5$ °C. Suitable heating time differs depending on the heating mechanism, however, is preferably in a range of 0.5 - 7 seconds and more preferably in a range of 1 - 3 seconds.

Further, the above-described heat development apparatus may be provided with a gradual cooling zone to stop development of a silver salt photothermographic dry imaging material, after having been subjected to image-wise exposure and heated at a desired development temperature, by adjusting the temperature to a temperature lower than the heat development temperature by 10 - 20 °C. Further, it is more preferable to adjust the temperature to a temperature lower than the heat development temperature by 10 - 15 °C. The mechanism of a gradual cooling zone is not specifically limited; however, contact cooling with a plate controlled at a desired temperature is preferable with respect to cost and controllability. The heating temperature precision in a gradual cooling zone is preferably $\pm 1$ °C and more preferably

±0.5 °C. Gradual cooling time is preferably not less than 0.25 times of the development time and more preferably in a range of 0.25 - 1.0 times in consideration of rapid processing.

Further, it is necessary to answer an embodiment to simultaneously conduct exposure process and heat development process with respect to rapid processing. To simultaneously conduct exposure process and development process, that is, to start development in a part of a sheet having been already exposed while a part of the sheet is exposed, the distance between an exposure part to conduct exposure process and a development part is preferably 0 - 50 cm, whereby a series of processing time for exposure and development becomes very short. A preferable range of this distance is 3 - 40 cm and more preferably 5 - 30 cm.

Herein, an exposure part refers to a position where light from an exposure light source is irradiated on a silver salt photothermographic dry imaging material, and a development part refers to a position where a heat developable photosensitive material is heated for the first time to conduct heat development.

Herein, a conveying rate in a heat development part of a silver salt photothermographic dry imaging material is 20 - 200 mm/second, preferably 30 - 180 mm/second and specifically preferably 33 - 150 mm/second. By setting the conveying rate in this range, it is preferable that density unevenness at heat development is decreased and processing time is shortened to answer emergency diagnosis.

Further, in this invention, by arranging a temperature and humidity sensor in the neighborhood of a conveying path extended from film storing part 45 to temperature raising part 50 and controlling development time and development temperature based on measured temperature or humidity, it is possible to maintain stable image quality. For example, it is possible to stabilize image density by descending development temperature or shortening development time in the case of high environmental humidity.

(Constitution of Optical Scanning Exposure Part)

Optical scanning exposure part 55 irradiates laser beam L of infrared region in a range of 780 - 860 nm which has been modulated based on image signals, such as a laser beam of 810 nm, on film F. Whereby, a latent image is formed on film F.

Fig. 1 is a constitutional drawing of a scanning exposure part. Optical scanning exposure part 55 is constituted of such as case 550, laser diode 551, lens 552, cylindrical lens 556, polygon mirror (rotating poly-surface mirror) 554, fθ lens 555, cylindrical lens 556, mirror 557, temperature and humidity sensor 558 to detect temperature and humidity in case 550, shutter 560 to conduct open and close of an irradiation opening of a laser beam in case 550, magnetic rod 561 combined to shutter 560, electromagnetic plunger 562 to attract magnetic rod 561 and tension spring 563 to be combined to the shutter.

In this invention, cylindrical lens 553, fθ lens 555 and cylindrical lens 556 constituting an imaging lens part are formed of resin (plastic).

A resin lens is provided being a plastic lens formed of a raw material which is capable of being ejection molded, and a lens containing a raw material such as polycarbonate resin, polyolefin resin and polyester resin can be utilized. In this invention, cycloolefin polymer of a polyolefin resin type, which is provided with characteristics with small variation of a refractive index and small optical distortion due to humidity, is preferably utilized.

Fig. 2 is a control block diagram of a scanning exposure part. The scanning exposure part is constituted of such as D/A conversion part 565 to convert image signal S output from image signal output apparatus 564 into an analogue signal, modulation part 566 to accumulate a high frequency wave on the analogue signal output from D/A conversion part, and optical monitor signal 567 to monitor output power from laser diode 551 to make a constant strength of a laser beam; and is controlled by control part 60 of the main body.

In this scanning exposure part 55, laser beam L, which has been strength modulated based on image signal S output from image signal output apparatus 564, is deflected by a polygone mirror (rotating poly-surface mirror) and horizontally scanned on film F via fθ lens 555, and simultaneously relatively shifting the laser beam in the direction approximately vertical to the horizontal scanning direction against film F to conduct vertically scan, whereby a latent image is formed on film F. Image signal S output from image signal output apparatus 564 is converted into an analogue signal in D/A conversion part 565 and is input to modulation part 566 having a modulation circuit. Modulated signal is generated in modulation part 566 based on such an analogue signal. This modulated signal, after having been accumulated with a high frequency wave by a high frequency wave accumulating circuit with which modulation part 566 is equipped, drives laser diode 551, whereby laser beam is irradiated from laser diode 551.

Modulation part 566 is provided with a high frequency wave accumulation circuit and can control optical output of laser diode 551 by applying electric current on laser diode 551 to modulate electric current to be output to laser diode 551. In detail, modulation part 566 drives laser diode 551 by high frequency wave accumulation to analogue-directly modulate the light irradiated from laser diode 551 based on a dynamic range of not less than 1 /100. This modulation part 566 is designed to be able to apply electric current having the maximum of 180 mA and to modulate laser emission light from said laser diode 551. Further, strength of laser beam L is controlled to be constant by inputting the light quantity

monitor signal from a light quantity sensor (not shown in the drawing) which receive laser beam L irradiated from laser diode 41.

Laser diode 551 generates natural emission light and laser emission light depending on applied electric current quantity and can control light output depending on applied electric current quantity. In detail, laser light is not output until the applied electric current exceeds a predetermined threshold value (for example, 20 mA) but only natural light is output. Natural emission light increases as applied current increases, however, laser emission light is output when the current exceeds the threshold value and a ratio of natural emission light becomes small in the whole emission light as the output increases resulting in essentially only laser emission light being output.

As shown in Fig. 1, laser beam L irradiated from laser diode 551, after having passed through lens 552, is condensed only in the up and down direction by cylindrical lens 553 and incident against polygon mirror 554 as a liner image vertical to drive axis thereof. Polygon mirror 554 reflects and deflects laser beam L along the horizontal scan direction, and this deflected laser beam L, after having passed through imaging lens part comprising fθ lens 555 and cylindrical lens 556, is reflected by mirror 557 which is arranged extended along the horizontal scan direction on the light path to repeatedly scan the surface of film F to be scanned.

fθ lens 555 is constituted so as to have a magnification color aberration of not more than 5 $\mu$m/nm. That is, when the wavelength of laser beam L having been incident to fθ lens 555 is shifted by 10 nm against the surface of film F on which the laser beam is focused, the ray of light shifts to a position from a predetermined position by not more than 0.05 mm, or fθ lens 555 is designed to make a shift of not more than 5 $\mu$m per 1 nm. In other words, fθ lens 555 is designed to shift the image point focused on the film F surface only in a range of not more than 5 $\mu$m by changing 1 nm of wavelength.

Cylindrical lens 556 which constitutes imaging lens part together with fθ lens 555 is designed to converge incident laser beam L on the surface to be scanned Fa of film F only along the vertical scan direction. Further, the distance from fθ lens 555 to the surface to be scanned Fa of film F is set to be equal to the focusing distance of the whole fθ lens 555. In this manner, since scanning exposure part 55 is provided with an imaging lens part equipped with cylindrical lens 553, fθ lens 555 and cylindrical lens 556 and laser beam is once converged on polygon mirror 554 only along the vertical scan direction, the scanning position of laser beam L on the surface to be scanned Fa of film F will be never shifted along the vertical scan direction even when plane inclining or axial shake is caused in polygon mirror 554, whereby scanning lines can be formed with an even pitch. In the above manner, image recording is conducted by forming a latent image based on an image signal on film F in scanning exposure part 55.

In this manner, according to scan exposure part 55 in heat development apparatus 40, since fθ lens 555 among an imaging lens part which irradiate light from laser diode 551 driven with high frequency wave accumulation on the surface of film F is designed to have a magnification color aberration of not more than 5 $\mu$m/nm, it is possible to prevent generation of interference fringes as well as to prevent increase of a laser beam diameter at the time of recording an image on film F by irradiating and scanning laser beam L from laser diode 551 via fθ lens 555, whereby deterioration of sharpness of an image can be prevented. Herein, in the above embodiment, it is constituted that modulation part 566 modulating drives laser diode 551 with high frequency wave accumulation and drives light of laser diode 551 with analogue direct modulation at a dynamic range of not less than 1/100, it may be also constituted so as to conduct that at least one drive of high frequency wave accumulation modulation drive and analogue direct modulation drive of a dynamic range of not less than 1/100. In addition to these, appropriate changes are naturally possible with respect to such as specific structures. Herein, the invention has been specifically explained based on each embodiment, however, is not limited to the above-described embodiments and various variations are possible within a range of not deviating from the point.

With respect to exposure employed for exposure of a silver salt photothermographic dry imaging material of this invention or exposure employed for an image forming method of this invention, various conditions can be adopted as for such as a light source suitable for obtaining an aimed appropriate image and exposure time.

A silver salt thermographic dry imaging material of this invention preferably utilizes laser rays at the time of image recording. Further, in this invention, a light source suitable for spectral sensitivity given to said photosensitive material is preferably utilised. For example, any light source is applicable provided being in an infrared region in the case of said photosensitive material is infrared sensitive; however, an infrared semiconductor laser (780 nm, 820 nm) is more preferably utilized with respect that laser power is high and a silver salt photthermographic dry imaging material can be made to be transparent.

Next, scanning exposure part 55, as shown in Fig. 1, is provided with a shield structure surrounded by case 550 and has an opening part at the irradiation portion of laser beam, and has a constitution having an opening capable of being opened and closed by shutter 560. The constitution is designed so that shutter 560 is opened when laser beam is irradiated and otherwise shutter 560 is closed. Shutter 560 is operated to open by shifting toward left by magnetic rod 561 which is suctioned toward left when current is applied on electromagnetic plunger 562. Further, shutter 560 is operated to close by being shifted toward right by force of a tension spring simultaneous with magnetic rod 561 being stopped to be suctioned, when current is stopped to flow on an electromagnetic plunger 562.

In this manner, since the interior is kept at an approximately constant humidity even when the external humidity is largely varied by closing shutter 550 to shield the inside of case 550 except when irradiation of laser beam is conducted, even when resin lens is utilized as in this invention, variation of refractive index of resin lens and deformation of a lens form are restrained to minimize variation of a beam diameter and an imaging position, whereby high quality image can be obtained.

Further, in scan exposure part 55, humidity controlling agent 559 is provided to further restrain humidity variation, whereby a high quality image can be obtained. The type and amount of a humidity controlling agent is not specifically limited provided that humidity variation can be restrained within 20% RH.

Further, in scan exposure part 55, temperature and humidity sensor 558 is provided so that control part 60 controls exposure quantity of laser diode 551 based on measured temperature or humidity, whereby a stable image quality can be maintained. For example, it is possible to stabilize image density by decreasing exposure quantity in the case of a high environmental humidity.

(Heat Developable Photosensitive Material)

[Photo-insensitive Silver Aliphatic Carboxylate Grains]

Photo-insensitive silver aliphatic carboxylate utilized in this invention is a silver salt which is relatively stable against light but functions as a silver ion supplying substance when being heated at 80 °C or higher, in the presence of exposed photosensitive silver halide and a reducing agent, to form a silver image. Photo-insensitive silver aliphatic carboxylate may be arbitrary silver aliphatic carboxylate which can supply silver ion reducible by a reducing agent. Silver salt of aliphatic carboxylic acid is specifically preferably silver salt of long-chain aliphatic carboxylic acid (having a carbon number of 10 - 30 and preferably of 15 - 28). Preferable examples of silver aliphatic carboxylate include such as silver lignocerate, silver behenate, silver arachidate, silver stearate, silver oleate, silver laurate, silver caproate, silver myristate, silver palmitate, silver erucate and mixtures thereof. In this invention, silver aliphatic carboxylate contains 70 - 99 mol% of silver behenate. Further, it contains preferably not less than 80 mol% and less than 90 mol% of silver behenate. Further, silver aliphatic carboxylate having a content of silver erucate of not more than 2 mol%, more preferably not more than 1 mol% and furthermore preferably not more than 0.1 mol% is preferably utilized.

An equivalent spherical diameter of photo-insensitive silver aliphatic carboxylate grains is characterized by being not less than 0.05 μm and not more than 0.5 μm. It is preferably not less than 0.10 μm and not more than 0.5 μm. Further, the grain size distribution is preferably monodispersed. A degree of monodispersion can be represented by of a standard deviation of a mean diameter, and a standard deviation of silver aliphatic carboxylate grains of this invention is characterized by being not more than 0.3 and preferably not more than 0.2.

A grain size and a size distribution in this case each can be determined by a measurement method of a size distribution, such as a laser diffraction method, a centrifugal precipitation optical transmission method, an X ray transmission method, an electric detection method, a light shielding method, an ultrasonic attenuation spectroscopy and a method to calculate based on images, which is generally known, however, among them, a laser diffraction method and a method to calculate based on images are preferable for micro-particles. Further, a laser diffraction method is preferable and silver aliphatic carboxylate grains dispersed in a solution can be subjected to the measurement utilizing a laser diffraction grain size distribution analyzer available on the market.

A measurement method of grain size and grain size distribution will now be explained.

A sample of silver aliphatic carboxylate grains of 0.01 g is charged in a 100 ml beaker, after which has been added with 0.1 g of Nonion NS-210 (produced by NOF Corp.) and 40 ml of water, is ultrasonic dispersed at room temperature, and utilizing the prepared dispersion, a mean grain size and a standard deviation can be measured by use of Laser Diffraction Grain size Analyzer SALD-2000 (manufactured by Shimadzu Corp.).

To prepare said photo-insensitive silver aliphatic carboxylate so as to have a mean equivalent spherical particle diameter of not less than 0.05 μm and 0.5 μm, and a standard deviation of an equivalent spherical particle diameter of not more than 0.3, it is preferable to prepare by a reaction according to the following mixing method.

Silver aliphatic carboxylate grains of this invention are preferably prepared by a reaction of a solution containing silver ion and a solution or a suspension of alkali metal aliphatic carboxylate. A solution containing silver ion is preferably a silver nitrate aqueous solution and a solution or a suspension of alkali metal aliphatic carboxylate is preferably an aqueous solution or a water dispersion; the addition mixing thereof are preferably conducted simultaneously; and the method may be either a method to conduct addition into the liquid surface of a reaction bath or a method to conduct addition into the liquid, however, is preferably a method to conduct addition mixing into a transfer means. Mixing in a transfer means refers to a line mixing, and is characterized in that mixing of a solution containing silver ion and a solution or a suspension of alkali metal aliphatic carboxylate is conducted before going into the batch to store a mixed solution containing a reaction product. As a stirring means in a mixing part, any one of a mechanical stirring such as a homomixer, a static mixer or a turbulence flow effect can be employed; however, it is preferable not to employ a mechanical stirring.

Herein, at mixing in a transfer means, the third solution or suspension, such as a circulating solution of a mixed solution stored in a batch after mixing, may be mixed in addition to a solution containing silver ion and a solution or a suspension of alkali metal aliphatic carboxylate.

In this invention, concentration of a silver nitrate aqueous solution is preferably in a range of 1 - 15 weight% and concentration of an aqueous solution or an aqueous dispersion of metal aliphatic carboxylate is preferably in a range of 1 - 5 weight%. Out of the above-described concentration range, it is not practical due to significant deterioration of productivity at a low concentration range, while a grain size and a size distribution are difficult to be adjusted into a range of this invention at a high concentration range. Further, a mixing ratio of silver nitrate against alkali metal aliphatic carboxylate is preferably in a range of 0.9 - 1.1, and at out of this range, a grain size and a size distribution are difficult to be adjusted into a range of this invention as well as easily induced are such as yield decrease of silver aliphatic carboxylate and generation of silver oxide which will be a cause of fog.

In this invention, prepared silver aliphatic carboxylate is preferably subjected to washing with water and successive drying with respect to the storage stability. Washing with water is conducted primarily to eliminate such as unreacted ion, however, washing may be conducted by an organic solvent in consideration of a drying process to be followed. Washing with water is preferably conducted at not higher than 50 °C and more preferably at not higher than 30 °C. When washing is conducted at over 50 °C, it becomes difficult to adjust a grain size and a size distribution into a range of this invention. Further, drying is preferably conducted at not higher than a phase transition temperature. It is conducted more preferably at not higher than 50 °C and at low temperature as possible. Drying at not lower than a transition temperature will make adjustment of a grain size and a size distribution into a range of this invention possible.

In this invention, preparation of silver aliphatic carboxylate is preferably conducted in the absence of photosensitive silver halide grains. In preparation in the presence of photosensitive silver halide, a grain size and a size distribution are difficult to be adjusted into a range of this invention.

Silver aliphatic carboxylate of this invention can be utilized at any desired amount, however, is preferably in a range of 0.8 - 1.5 g/$m^2$ and more preferably in a range of 1.0 - 1.3 g/$m^2$ based on the total amount including silver halide.

[Type of Alkali Metal Salt]

Examples of the type of alkali metal salt utilized in this invention include such as sodium hydroxide, potassium hydroxide and lithium hydroxide. Among these, it is preferable to utilize one type of alkali metal salt such as potassium hydroxide; however, it is also preferable to utilize sodium hydroxide and potassium hydroxide in combination. The using ratio is preferably 10/90 - 75/25 as a mole ratio of the aforesaid both hydroxide salt. When these are reacted with aliphatic carboxylic acid to form alkali metal salt of aliphatic carboxylic acid, it is possible to control viscosity of a reaction solution in a suitable range by applying the above range of the ratio.

[Silver Salt Grains of High Silver Ratio]

Emulsion containing silver aliphatic carboxylate grains according to this invention is a mixture of a free aliphatic carboxylic acid which does not form silver salt and silver aliphatic carboxylate, and it is preferable that a ratio of the former is preferably lower than the latter with respect to image storage stability. That is, said emulsion according to this invention preferably contains 3 - 10 mol% of aliphatic carboxylic acid against silver aliphatic carboxylate grains and specifically preferably contains 4 - 8 mol%.

Herein, specifically, by determining each of the total aliphatic carboxylic acid amount and the free aliphatic carboxylic acid amount according to the following methods, such as the amount and each ratio of silver aliphatic carboxylate and free aliphatic carboxylic acid, or a ratio of free aliphatic carboxylic acid to the total aliphatic carboxylic acid can be calculated.

(Determination of Total Aliphatic Carboxylic Acid (Total Arising from Both of Silver Aliphatic Carboxylate and Free Acid))

(1) A sample of approximately 10 mg (peeled-off weight when being peeled off from a photosensitive material) is precisely weighed and charged into a 200 ml eggplant type flask.
(2) (1) was added with 15 ml of methanol and 3 ml of 4 mol/L hydrochloric acid, and then subjected to ultrasonic dispersion for 1 minute.
(3) Reflux was conducted for 60 minutes after addition of a boiling stone made of Teflon (a registered trade mark).
(4) After cooling, 5 ml methanol is added from the top of a condenser to wash out those adhered on the condenser into the eggplant type flask (twice).
(5) The obtained reaction solution was extracted with ethyl acetate (Separating extraction with addition of 100 ml

of ethyl acetate and 70 ml of water was conducted twice).
(6) Vacuum drying for 30 minutes at room temperature is conducted.
(7) Benzanthrone solution of 1 ml as an internal standard is charged in a 10 ml messflask (Benzanthrone of approximately 100 mg is dissolved in toluene, which is made up to 100 ml).
(8) The sample is dissolved in toluene and charged in the messflask of (7), and the solution is made up to a predetermined volume with toluene.
(9) Gas chromatography (GC) measurement is conducted under the following condition.
Apparatus: HP-5890 + HP-Chemistation
Column: HP-1 30m x 0.32 mm x 0.25 μm (manufactured by HP)
Injection inlet: 250 °C
Detector: 280 °C
Oven: 250 °C constant
Carrier gas: He
Head pressure: 80 kPa

<Determination of Free Aliphatic Carboxylic Acid>

(1) A sample of approximately 20 mg is precisely weighed and charged into a 200 ml eggplant type flask, which was added with 10 ml of methanol and then subjected to ultrasonic dispersion for 1 minute (free organic carboxylic acid is extracted).
(2) Dispersion (1) is filtered and the filtrate is charged into a 200 ml eggplant type flask to be made to dryness (free organic carboxylic acid is isolated).
(3) Methanol of 15 ml and 3 ml of 4 mol/L hydrochloric acid were added, and ultrasonic dispersion is conducted for 1 minute.
(3) Reflux was conducted for 60 minutes after adding a boiling stone made of Teflon (a registered trade mark).
(5) The obtained reaction solution is added with addition of 60 ml of water and 60 ml of ethyl acetate, and methyl esterified substance of organic carboxylic acid is extracted into an ethyl acetate phase. The extraction is conducted twice.
(6) The ethyl acetate phase is made to dryness and subjected to vacuum drying for 30 minutes.
(7) Benzanthrone solution of 1 ml is charged in a 10 ml messflask (Internal standard: Benzanthrone of approximately 100 mg is dissolved in toluene, which is made up to 100 ml).
(8) (6) is dissolved in toluene and charged in the messflask of (7), and the solution is made up to a predetermined volume with toluene.
(9) Gas chromatography (GC) measurement is conducted under the following condition.
Apparatus: HP-5890 + HP-Chemistation
Column: HP-1 30m x 0.32 mm x 0.25 μm (manufactured by HP)
Injection inlet: 250 °C
Detector: 280 °C
Oven: 250°C constant
Carrier gas: He
Head pressure: 80 kPa

[Structure and Form of Aliphatic Carboxylic Acid]

As a form of silver aliphatic carboxylate, there is no specific limitation and any one of a needle form, a bar form, a plane form or a flake form can be utilized. In this invention, silver aliphatic carboxylate of a flake form and silver aliphatic carboxylate of a short-needle form or silver aliphatic carboxylate of a rectangular parallelepiped form having a ratio of the long axis to the short axis of not more than 5 is preferably utilized.

Herein, in this publication, silver aliphatic carboxylate of a flake form is defined as follows. Silver aliphatic carboxylate is observed through an electron microscope, and calculation based on shorter values a and b to determine x as follows when a form of silver aliphatic carboxylate is approximated to a rectangular parallelepiped, the edge of which is defined as a, b, and c (c may be as same as b) in the order of from the shortest.

$$x = b/a$$

x is determined for approximately 200 particles in this manner, those satisfying the relationship of x (average) ≥ 1.5 are defined as a flake form when the average value is x (average) . It is preferably 30 ≥ x (average) ≥ 1.5 and more preferably 20 ≥ x (average) ≥ 2.0. Herein, a needle form means 1 ≤ x (average) ≤ 1.5.

In flake form grains, "a" is regarded as a thickness of a tabular grain having a primary plane edges of which are b and c. The average of a is preferably not less than 0.01 μm and not more than 0.23 μm and more preferably not less than 0.1 μm and not more than 0.20 μm. An average of c/b is preferably not less than 1 and not more than 6, more preferably not less than 1.05 and not more than 4 and furthermore preferably not less than 1.1 and not more than 2.

Silver aliphatic carboxylate according to this invention may be crystalline grains having a core/shell structure disclosed in European Pate No. 1168069A1 and JP-A 2002-23303. Herein, in the case to employ a core/shell structure, the whole of or a part of a core portion or a shell portion may be an organo-silver salt other than silver aliphatic carboxylate, that is, silver salt of an organic compound such as phthalic acid and benzoimidazole may be utilized as a constitutional component of said crystalline grains.

In this invention, silver salt aliphatic carboxylate grains of a tabular form, after having been pre-dispersed appropriately together with such as a binder and a surfactant, are preferably dispersing ground by use of such as a media homogenizer or a high pressure homogenizer. As a pre-dispersion method, for example, a general stirrer of such as an anchor type and a propeller type, a high speed rotation centrifugal radial stirrer (a dissolver) and a high speed rotation share type stirrer (a homomixer) can be utilized.

Further, as the above-described media homogenizer, rotary mills such as a ball mill, a planet ball mill and a vibration ball mill; and medium stirring mils such as a beads mill, an atliter and other basket mill can be utilized; and as a high pressure homogenizer, various types such as a type in which collision against a wall or a plug is conducted, a type in which a liquid is divided into plural portions which are collided each other at a high speed, and a type in which a liquid is made to pass through a narrow orifice can be utilized.

As ceramics utilized as ceramics beads employed at the time of media dispersion, yttrium stabilized zirconia and zirconia reinforced alumina (hereinafter, ceramics containing these zirconia is abbreviated as zirconia) are specifically preferably utilized because of a reason such as minimum generation of impurities due to friction with beads and a homogenizer at the time of dispersion.

In apparatuses utilized to disperse tabular silver aliphatic carboxylate grains, as a material to which silver aliphatic carboxylate grains contact, for example, ceramics such as zirconia, alumina, silicon nitride and boron nitride; or diamond is preferably utilized, and among them zirconia is more preferably utilized. At the time of the above-described dispersion, a binder concentration is preferably added at 0.1 - 10% of a weight of silver aliphatic carboxylate, the liquid temperature preferably not to exceeds 45 °C throughout from pre-dispersion to primary dispersion. Further, as a preferable operation condition of primary dispersion, for example, 29 - 100 MPa and an operation time of not less than twice are preferable, when a high pressure homogenizer is utilized as a dispersion means. Further, in the case of utilizing a medium homogenizer, a peripheral velocity of 6 - 13 m/second is a preferable condition.

In this invention, photo-insensitive silver aliphatic carboxylate grains are preferably those formed in the presence of a compound which functions as a crystal growth restraining agent or a dispersant. Further, the compound which functions as a crystal growth restraining agent or a dispersant is preferably an organic compound provided with a hydroxyl group or a carboxyl group.

In this invention, a compound which functions as a crystal growth restraining agent or a dispersant against silver aliphatic carboxylate grains refers to a compound provided with a function and effect to make smaller grain size or monodispersion when silver aliphatic carboxylate is prepared in the presence of said compound, compared to when silver aliphatic carboxylate is prepared in the absence of said compound, in preparation process of silver aliphatic carboxylate grains. Specific examples include mono-hydric alcohols having a carbon number of not more than 10 and preferably tertiary alcohol, glycols such as ethylene glycol, propylene glycol, polyethers such as polyethylene glycol, and glycerin. A preferable addition amount is 10 - 200 weight% against silver aliphatic carboxylate.

On the other hand, branched aliphatic carboxylic acid such as isoheptanoic acid, isodecanoic acid, isotridecanoic caid, isomyristic acid, isopalmitic acid, isostearic acid, isoarachidic acid, isobehnic acid and isohexaconoic acid, including isomers thereof, is also preferable. In this case, a preferable side chain includes an alkyl group or an alkenyl group having a carbon number of not more than 4. Further, listed are aliphatic unsaturated carboxylic acid such as palmitreic acid, oleic acid, linolic acid, linolenic acid, moroctic acid, eicosenic acid, arachidonic acid, eicosapentaenic acid, erucic acid, docosapentaenic acid, docosahexaenic acid and selachorenic acid. A preferable addition amount is 0.5 - 10 mol% of silver aliphatic carboxylate.

The preferable compound also includes glycoside such as gulucoside, galactoside and fructoside; trehalose type disaccharide such as trehalose and sucrose; polysaccharide such as glycogen, dextrin, dextran and alginic acid; cellosolves such as methyl cellosolve and ethyl cellosolve; water soluble organic solvents such as sorbitan, sorbite, ethyl acetate, methyl acetate and dimethylformamide; and water soluble polymers such as polyvinyl alcohol, polyacrylic acid, acrylic acid copolymer, maleic acid copolymer, carboxymethyl cellulose, hydroxypropyl cellulose, hydroxypropylmethyl cellulose, polyvinyl pyrrolidone and gelatin. A preferable addition amount is 0.1 - 20 mol% of silver aliphatic

carboxylate.

Alcohol having a carbon number of not more than 10, and preferably secondary alcohol such as isopropyl alcohol and tertiary alcohol such as t-butyl alcohol increase solubility of alkali metal aliphatic carboxylate to decrease viscosity and increase stirring efficiency in grain preparation process, whereby monodispersed and small-size grains are prepared.

Branched aliphatic carboxylic acid and aliphatic unsaturated carboxylic acid exhibit higher steric hindrance compared to straight chain aliphatic carboxylate as a main component at the time of crystallization of silver aliphatic carboxylate and cause larger disturbance of the crystal lattice, whereby a large crystal is not formed resulting in small size grains.

[Photosensitive Silver Halide Grains]

Photosensitive silver halide grains (hereinafter, also referred to as photosensitive silver halide or silver halide) according to this invention are silver halide crystal particles which is essentially capable of light absorption as an intrinsic ability of a silver halide crystal or artificially capable of light absorption of visible light or infrared light by a physicochemical method, as well as is produced by processing so that physicochemical change will be caused in the interior or on the surface of said silver halide crystal when light is absorbed in any wavelength range of light from an ultraviolet light to infrared light range.

Silver halide grains according to this invention themselves can be prepared as a silver halide grain emulsion (also referred to as a silver halide emulsion) by a method well known in the art. That is, the method may be any of an acid method, a neutral method or an ammonia method, and any of such as a single-jet precipitation, a double-jet precipitation or combinations thereof may be utilized as a method to react soluble silver salt and soluble halogen salt, however, a so-called controlled double-jet precipitation, which prepares silver halide grains while controlling the forming condition, is preferable among the above-described methods.

Generally, preparation of silver halide grains is divided into two steps of generation of seed grains or grain nuclei and grain growth, and these steps may be conducted at once or in succession, and further nucleus (seed grain) formation and grain growth may be separately conducted. A controlled double-jet method which conduct grain formation while controlling a grain forming condition such as pAg and pH is preferable because of capability of controlling the grain form and size. For example, In the case of practicing the method which separately conducts nuclei formation and grain growth, silver halide grains are prepared firstly by a nuclei formation process in which nuclei (seed grains) formation is conducted by uniform and rapid mixing of a silver salt aqueous solution and a halide aqueous solution in a gelatin aqueous solution, and then by a grain growth process in which grain growth is conducted by supplying a silver salt aqueous solution and a halide aqueous solution under controlled state of such as pAg and pH. After grain formation, such as unnecessary salts is removed by a desalting method well known in the art such as a noodle method, a flocculation method, an ultra-filtration method and an electrophoresis method, whereby a desired silver halide emulsion can be prepared.

In this invention, size distribution of silver halide grains is preferably mono-dispersion. Herein, mono-dispersion refers that the coefficient of variation determined according to the following equation is not more than 30%. It is preferably not more than 20% and furthermore preferably not more than 15%.

Coefficient of variation of grain size (%) = (standard deviation of grain size/average of grain size) x 100

A form of silver halide grains includes such as cubic grains, octahedron grains, tetradecahedral grains, tabular grains, spherical grains, bar-form grains and potato-form grains, however, among them, silver halide grains of cubic, octahedral and tabular are specifically preferable.

In the case of utilizing tabular silver halide grains, the mean aspect ratio is preferably 1.5 - 100 and more preferably 2 - 50. These are described in USP Nos. 5,264,337, 5,314,798 and 5,320,958, and aimed tabular grains can be easily prepared. Further, silver halide grains the corners of which are rounded can be also preferably utilized.

The crystal habit of the outer surface of silver halide grains is not specifically limited; however, silver halide grains provided with a crystal habit, which fits the selectivity at a higher ratio, are preferably utilized in the case of employing a spectral sensitizer having a selectivity of a crystal habit (surface). For example, when a sensitizing dye which selectively adsorbs on a crystal surface of Miller's index [100] is employed, it is preferable that the occupying ratio of [100] surface in the outer surfaces of silver halide grains is high, and this ratio is preferably not less than 50%, more preferably not less than 70% and specifically preferably not less than 80%. Herein, the ratio of Miller's index [100] surface can be determined based on T.Tani, J. Imaging Sci., 29, 165 (1985) which utilizes the adsorption dependence of [111] surface and [100] surface in adsorption of sensitizing dyes.

Silver halide grains utilized in this invention are preferably prepared by employing low molecular weight gelatin having a mean molecular weight of not more than 50,000 at the grain formation. The gelatin is specifically preferably employed at the nucleation of silver halide grains.

In this invention, low molecular weight gelatin preferably has a mean molecular weight of not more than 50,000, more preferably 2,000 - 40,000 and specifically preferably 5,000 - 25,000. The mean molecular weight of gelatin can be measured by means of gel permeation chromatography. Low molecular weight gelatin can be prepared by enzyme decomposition with addition of a gelatin decomposing enzyme, by hydrolysis with addition of acid or alkali, by decomposition with ultrasonic irradiation, or by a combination method thereof, of a gelatin aqueous solution of generally utilized gelatin having a mean molecular weight of approximately 100,000.

The concentration of a dispersion medium at the time of nucleation is preferably not more than 5 weight% and the nucleation is more preferably conducted at a concentration as low as 0.05 - 3.0 weight%.

Silver halide grains utilized in this invention preferably incorporate a compound represented by the following Formula at said grain formation.

$$YO(CH_2CH_2O)_m[CH(CH_3)CH_2O]_p(CH_2CH_2O)_nY$$

wherein, Y is a hydrogen atom, $-SO_3M$ or -CO-B-COOM; M is a hydrogen atom, an alkali metal, an ammonium group or an ammonium group substituted by an alkyl group having a carbon number of not more than 5; and B represents a chain or cyclic group which forms an organic dibasic acid. m and n each are 0 - 50, and p is 1 - 100.

Polyethylene oxide compounds represented by the above formula have been preferably utilized as a defoaming agent against violent foaming in the case of stirring or transporting of the emulsion raw materials, such as in a process to prepare a gelatin solution, a process to add a water-soluble halide compound and a water-soluble silver salt into the gelatin solution, and a process to coat a silver halide emulsion on a support, at the time of manufacturing a silver halide photographic material; and techniques employed as a defoaming agent are described, for example, in JP-A 44-9497. Polyethylene oxide compounds represented by the above formula also function as a defoaming agent at the time of nucleation. Polyethylene oxide compounds represented by the above formula are preferably employed at not more than 1 weight% and more preferably at 0.01 - 0.1 weight% based on silver.

Polyethylene oxide compounds represented by the above formula preferably present at the time of nucleation and are preferably added in a dispersion medium before nucleation in advance, however, may be added during nucleation, or may be utilized by being added in a silver salt aqueous solution or a halide aqueous solution which is employed at the time of nucleation. It is preferable to utilize the compound by being added in a halide aqueous solution or in the both aqueous solutions at 0.01 - 2.0 weight%. Further, the compound represented by the above formula is preferably made to be present during at least 50% time range of a nucleation process, and more preferably during at least 70% time range. Compounds represented by the above formula may be added as powder or by being dissolved in a solvent such as methanol.

Herein, temperature at nucleation is 5 - 60 °C and preferably 15 - 50 °C, and is preferably controlled to be in said temperature range, in any case of a constant temperature pattern, a rising temperature pattern (for example, the temperature at start of nucleation is 25 °C, and the temperature is gradually raised during nucleation to reach 40 °C at the end of nucleation) and a contrary pattern.

The concentration of a silver salt aqueous solution and a halide aqueous solution is preferably not more than 3.5 mol/L and is more preferably utilized at a low concentration region of 0.01 - 2.5 mol/L. The addition rate of silver ion at nucleation is preferably $1.5 \times 10^{-3}$ - $3.0 \times 10^{-1}$ - mol/minute and furthermore preferably $3.0 \times 10^{-3}$ - $8.0 \times 10^{-2}$ per 1 L of a reaction solution.

The pH at nucleation can be set in a range of 1.7 - 10, however, is preferably set at 2 - 6 because pH of alkaline side widens the grain size distribution. Further, the pBr at nucleation is generally 0.05 - 3.0, preferably 1.0 - 2.5 and more preferably 1.5 - 2.0.

In this invention, the mean grain size of silver halide is generally 10 - 50 nm, preferably 10 - 40 nm and more preferably 10 - 35 nm. When the mean grain size is not more than 10 nm, image density may be decreased or light irradiation image storage stability (storage stability of an image formed by heat development in the case of being utilized in a daylight room for diagnosis or stored in a daylight room) may be deteriorated. Further, when it is over 50 nm, image density may be decreased.

Herein, a mean grain size means an edge length of a silver halide grain in the case of a silver halide grain contained in silver halide grain emulsion being a so-called normal crystal such as a cube or an octahedron. Further, a mean grain size means a diameter of a circular image having the same area as the projected area of the primary surface in the case of a silver halide grain is a tabular grain. In addition to this, in the case of abnormal crystals such as a cubic grain and a bar-shaped grain, a diameter of a supposed cube, which has the same volume as a silver halide grain, is determined by calculation as a mean grain size. The measurement was carried out by use of an electronmicroscope, and the mean grain size was determined by averaging grain size values of 300 grains.

Further, in this invention, it is possible to increase image density or to improve (depress) image density decrease due to aging in addition to adjust gradation of image density, by employing silver halide grains having a mean grain size of 55 - 100 nm and those having a mean grain size of 10 - 50 nm in combination. The ratio (weight ratio) of silver halide grains having a mean grain size of 10 - 50 nm to silver halide grains having a mean grain size of 55 - 100 nm is preferably 95/5 - 50/50 and more preferably 90/10 - 60/40.

Herein, as in the above case of utilizing silver halide emulsions having two types of mean grain sizes, said two types of silver halide emulsions may be mixed and incorporated in a photosensitive layer. Further, such as to control the gradation, a photosensitive layer may be comprised of at least two layers and said silver halide emulsions having two types of mean grain sizes may be separately in each layer.

(Silver Halide Grains Having Silver Iodide Content of 5 - 100 mol%)

As silver halide grains according to this invention, silver halide grains containing silver iodide can be preferably utilized. As the halogen composition, the silver iodide content is preferably 5 - 100mol%, more preferably 40 - 100 mol%, furthermore preferably 70 - 100 mol% and specifically preferably 90 - 100 mol%. Halogen composition distribution in the interior of the grain may be uniform, vary stepwise or vary continuously, provided that the silver iodide content is in this range. Further, silver halide grains provided with a core/shell structure, having high silver iodide content in the interior and/or on the surface can be preferably utilized. The structure is preferably 2 - 5 fold structure and more preferably 2 - 4 fold structure.

As a method to introduce silver iodide in silver halide grains according to this invention, preferable is such as a method to add an alkali iodide aqueous solution during grain formation; a method to add at least one of micro-particle silver iodide, micro-particle silver iodo-bromide, micro-particle silver iodo-chloride or micro-particle silver iodo-chloro-bromide; and a method to utilize an iodide ion releasing agent described in JP-A Nos. 5 -323487 and 6-11780.

Silver halide grains according to this invention are preferably provided with direct transition absorption arising from a silver iodide crystal structure in the wavelength range of 350 - 440 nm. Whether these silver halides have direct transition absorption or not can be easily identified based on excimer absorption around 400 - 430 nm arising from direct transition.

(Thermal Conversion Internal Latent Image Type Silver Halide Grains)

Photosensitive silver halide grains according to this invention are preferably thermal conversion internal latent image type silver halide grains, that is, silver halide grains the surface sensitivity of which is decreased due to conversion from a surface latent image type to an internal latent image type by heat development, which has been disclosed in JP-A 2003-270755 and Japanese Patent Application No. 2003-337269. In other words, silver halide grains, in which a latent image being able to function as a catalyst of a development reaction (a reduction reaction of silver ions by a silver ion reducing agent) is formed on the surface of said silver halide grains at exposure before heat development, while latent image formation on the surface is restrained because a latent image comes to be formed more in the interior than on the surface of said silver halide grains at exposure after the elapse of heat development process, are preferable with respect to sensitivity and image storage stability.

Thermal conversion internal latent image type silver halide grains according to this invention, similar to ordinary surface latent image type silver halide grains, are preferably utilized at 0.001 - 0.7 mol and preferably 0.03 - 0.5 mol against 1 mol of silver aliphatic carboxylate which is capable of functioning as a silver supply source.

In a manufacturing process of a silver salt photothermographic imaging material, it is preferable to prevent aggregation of silver halide grains, to relatively uniformly disperse silver halide grains, and finally to enable to control developed silver to a desired form, with respect to photographic abilities and improvement of color tone.

Such as for aggregation prevention and uniform dispersion described above, gelatin utilized in this invention is preferably those characteristics of which are changed by chemically modifying a hydrophilic group such as an amino group and a carboxyl group, which are contained in gelatin, corresponding to such as using conditions

For example, hydrophobic modification of an amino group in a gelatin molecule includes phenylcarbamoylation, phthalation, succination, acethylation, benzoylation and nitrophenylation, however, is not specifically limited thereto. The substitution degree thereof is preferably not less than 95% and more preferably not less than 99%. Further, hydrophobic modification of a carboxyl group may be combined, the modification includes such as methylesterification and amidation, however, is not specifically limited thereto. The substitution ratio of a carboxyl group is preferably 50 - 90% and more preferably 70 - 90%. Herein, a hydrophobic group of the above-described hydrophobic modification refers to a group which increases hydrophobicity by substituting an amino group and/or a carboxyl group in gelatin.

Further, silver halide grain emulsion according to this invention is also preferably prepared depending on the purpose by utilizing the following polymer, which is soluble in both of water and an organic solvent, instead of gelatin or in combination with gelatin. For example, it is specifically preferable in the case of coating silver halide grain emulsion

being uniformly dispersed in an organic solvent.

Herein, the above-described organic solvent includes compounds of an alcohol type, an ester type and a ketone type. Particularly, a ketone type organic solvent such as acetone, methyl ethyl ketone and diethyl ketone is preferable.

Polymer soluble in both of water and an organic solvent may be any of natural polymer, synthetic polymer and copolymer. Such as gelatins and rubbers having been modified to be in the category of this invention can be also utilized. Further, polymer belonging to the following classification can be utilized by introducing a functional group suitable for the purpose such as aggregation prevention and uniform dispersion.

For example, the above-described polymer according to this invention includes such as poly(vinyl alcohol)s, hydroxyetyl celluoses, cellulose acetates, cellulose acetate butylates, poly(vinyl pyrrolidone)s, casein, starch, poly(acrylic acid and acrylic ester)s, poly(methacrylic acid and methacrylic ester)s, poly(viny chloride)s, poly(methacrylic acid)s, styrene-maleic acid anhydride copolymers, poly(vinyl acetal)s (such as poly(vinyl formal) and poly(viny butyral)), poly (ester)s, poly(urethane)s, phenoxy resin, poly(vinylidene chloride)s, poly(epoxide)s, poly(carbonate)s, poly(vinyl acetate) s, poly(olefin)s, cellulose esters and poly(amide)s.

A few types of these polymers may form copolymer, however, specifically preferable are polymers with which monomer of acrylic acid, methacrylic acid or esters thereof is copolymerized.

Said polymer according to this invention may be polymer, which is soluble in both of water and an organic solvent in the same state, however, also includes polymer, which can be made soluble or insoluble in water or an organic solvent by control of pH or by control of temperature.

For example, polymer, depending on the type, having an acidic group such as a carboxylic group becomes hydrophilic in a dissociation state but becomes hydrophobic to be soluble in a solvent when being made to be in a non-dissociation state by decrease of pH. On the contrary, polymer having an amino group becomes hydrophobic when pH is increased, while the water-solubility is increased at decreased pH.

In nonionic surfactant, a phenomenon of a clouding point is well known, and polymer having abilities of becoming hydrophobic, that is, to be soluble in an organic solvent with raised temperature, while becoming hydrophilic, that is, to be soluble in water with decreased temperature, is also included in this invention. These polymers can be utilized when being uniformly emulsified by forming micelles even though not being completely dissolved.

In this invention, to combine various types of polymers, it is difficult to say indiscriminately how much amount of a certain polymer should be used, however, it can be understood that a desired polymer can be easily obtained by combining hydrophilic polymer and hydrophobic polymer in a suitable ratio.

The aforesaid polymer soluble in both of water and an organic solvent is preferably provided with a solubility of not less than 1 weight% (at 25 °C) against water and a solubility of not less than 5 weight% (at 25 °C) against methyl ethyl ketone as an organic solvent, despite of whether a condition such as pH at dissolution is adjusted or not.

As polymer soluble in both of water and an organic solvent, according to this invention, suitable is so-called block polymer, graft polymer and comb-form polymer, rather than straight chain polymer, with respect to solubility. comb-form polymer is specifically preferable. Herein, an isoelectric point of polymer is preferably not more than pH of 16.

In the case of manufacturing comb-form polymer, various procedures can be employed; however, monomer capable of introducing a side chain having a molecular weight of not less than 200 at the comb potion (the side chain) is desirably utilized. In particular, ethylenic unsaturated monomer containing a polyalkylene group such as ethylene oxide and propylene oxide is preferably utilized.

As ethylenic unsaturated monomer containing a polyalkylene group is preferably those specifically containing polyalkylene oxide represented by the following formula.

$$-(EO)k-(PO)m-(TO)n-R$$

(wherein, E is an ethylene group; P is a propylene group: T is a butylene group; and R is a substituent. A butylene group includes such as a tetramethylene group and isobutylene group. k is an integer of 1 - 300; m is an integer of 0 - 60; and n is an integer of 0 - 40. It is preferably that k is 1 - 200, m is 0 - 30, and n is 0 - 20. Herein, $k+m+n \geq 2$.) One type of an ethylenic unsatulated monomer containing a polyoxyalkylene group may be utilized alone or not less than two types thereof may be simultaneously utilized.

A substituent represented by R is such as an alkyl group, an aryl group or a hetrocyclic group, and includes a group of such as methyl, ethyl, propyl, butyl, hexyl, octyl and dodecyl as an alkyl group; a group of such as phenyl and naphthyl as an aryl group; and a group of such as thienyl and pyridyl as a heterocyclic group. Further, these groups may be further substituted by a halogen atom, an alkoxy group (such as a methoxy group, an ethoxy group and a butoxy group), an alkylthio group (such as a methylthio group and a butylthio group), an acyl group (such as an acetyl group and a benzoyl group), an alkaneamido group (such as an acetoamido group and a propioneamido group) and an arylamido group (such as a benzoylamido group). Further, these substituents may be further substituted by these groups.

A polyoxyalkylene group represented by the aforesaid formula can be introduced in polymer by utilizing an ethylenic unsaturated monomer having these polyoxyalkylene groups. An ethylenic unsaturated monomer having these

polyoxyalkylene groups includes such as (polyoxyalkylene)acrylate and methacrylate, which can be prepared by reacting hydroxypoly(oxyalkylene) materials available on the market such as those available under product names of "Pluronic" (produced by Asahi Denka Kogyo K.K.), Adeka Polyether (produced by Asahi Denka Kogyo K.K.), Carbowax (produced by Glico Products), Toriton (produced by Rohm and Haas) and P. E. G. (produced by Daiichi Pharmaceutical Co., Ltd.) with such as acrylic acid, methacrylic acid, acrylchloride, methacrylchloride or acrylic acid anhydride. In addition to these, it is possible to also utilize such as poly(oxyalkylene) diacrylate produced by a method well known in the art.

Further, monomer available on the market includes such as Blenmer PE-90, Blenmer PE-200, Blenmer PE-350, Blenmer AE-90, Blenmer AE-200, Blenmer AE-40, Blenmer PP-500, Blenmer PP-800, Blenmer AP-150, Blenmer AP-400, Blenmer AP-550, Blenmer AP-800, Blenmer 50PEP-300, Blenmer 70PEP-350B, Blenmer AEP series, Blenmer 55PET-400, Blenmer 30PET-800, Blenmer 55PET-800, Blenmer AET series, Blenmer 30PPT-800, Blenmer 50PPT-800, Blenmer 70PPT-800, Blenmer APT series, Blenmer 10PPB-500B and Blenmer 10APB-500B, as polyalkylene glycol mono(meth)acrylate having a hydroxyl group at the end, which is produced by NOF Corp. Similarly, listed are such as Blenmer PME-100, Blenmer PME-200, Blenmer PME-400, Blenmer PME-1000, Blenmer PME-4000, Blenmer AME-400, Blenmer 50POEP-800B, Blenmer 50AOEP-800B, Blenmer PLE-200, Blenmer ALE-200, Blenmer ALE-800, Blenmer PSE-1300, Blenmer ASEP series, Blenmer PKEP series, Blenmer AKEP series, Blenmer ANE-300, Blenmer ANE-1300, Blenmer ANEP series, Blenmer PNPE series, Blenmer 43ANEP-500 and Blenmer 70ANEP-500, as polyalkylene glycol mono(meth)acrylate having a alkyl group at the end, which are produced by NOF Corp., Ltd.; and further listed are such as Light Ester MC, Light Ester 130MA, Light Ester 041MA, Light Acrylate BO-A, Light Acrylate EC-A, Light Acrylate MTG-A, Light Acrylate 130A, Light Acrylate DPM-A, Light Acrylate P200-A, Light Acrylate NP-4EA and Light AcrylateNP-8EA, which are produced by Kyoei Chemicals Co., Ltd.

As polymer according to this invention, graft polymer utilizing so-called macromer may be also employed. For example, it is described in "New Polymer Experiments 2, Synthesis·Reaction of Polymer", edited by Japan Polymer Association, published by Kyoritsu Publisher Co., Ltd. (1995). Further, it is also detailed in "Chemistry and Industry of Macro-monomer", Yuya Yamashita, published by IPC (1989). Useful molecular weight of macromer is in a range of 10,000-100,000, preferably in a range of 10,000 - 50,000 and specifically preferably in a range of 10,000 - 20,000. The effect can not be achieved when the molecular weight is less than 10,000 while polymerizing ability with copolymer, which constitutes the primary chain, will be deteriorated when the molecular weight is over 100,000. Specifically, such as AA-6, AS-6S and AN-6S, produced by Toa-Gosei Co., Ltd. can be utilized.

Herein, it is natural that this invention is not limited at all by the above-described specific examples. One type of ethylenic unsaturated monomer containing a polyoxyalkylene group may be utilized alone or at least two types thereof may be simultaneously utilized.

Other monomer specifically reacted with the above-described monomer includes acrylic esters, methacrylic esters, acrylamides, methacrylamides, allyl esters, alyloxyethanols, vinyl ethers, vinyl esters, dialkyl itaconate, dialkyl easters or monoalkyl esters of fumaric acid, crotonic acid, itaconic acid, acrylonitrile, methacrylonitrile, maleylonitril and styrene. Specific examples include the following compounds.

Listed are acrylic esters: such as methyl acrylate, ethyl acrylate, propyl acrylate, chloroethyl acrylate, 2-hydroxyethyl acrylate, trimethirolpropane monoacrylate, benzyl acrylate, methoxybenzyl acrylate, furufryl acryalte and tetrafurufryl acrylate,

methacrylic esters: such as methyl methacrylate, ethyl methacrylate, propyl methacrylate, chloroethyl methacrylate, 2-hydroxyethyl methacrylate, trimethirolpropane monomethacrylate, benzyl methacrylate, methoxybenzyl methacrylate, furufryl methacryalte and tetrafurufryl methacrylate,

acrylamides: such as acrylamide, N-alkylacryamide (alkyl group is one having a carbon number of 1 - 3 such as a methyl group, an ethyl group and a propyl group), N,N-dialkylacrylamide, N-hydroxyethyl-N-methylacrylamide, N-2-acetoamideethyl-N-acetylacrylamide; in addition to these, such as such as methoxymethylacrylamide and butoxymethylacrylamide, as alkyloxyacryamide;

methacrylamides: methacrylamide, N-alkylmethacryamide, N-hydroxyethyl-N-methylmethacrylamide, N-2-acetoamideethyl-N-acetylmethacrylamide, methoxymethylmethacrylamide and butoxymethylmethacrylamide,

allyl compounds: allyl esters (such as allyl acetate, allyl caproate, allyl caprylate, allyl laurate, allyl palmitate, allyl stearate, allyl benzoate, allyl acetoacetate and allyl lactate) and allyloxyethanol,

vinyl ethers: alkyl vinyl ether (such as hexyl vinyl ether, octyl vinyl ether, decyl vinyl ether, ethylhexyl vinyl ether, methoxyethyl vinyl ether, ethoxyethyl vinyl ether, chloroethyl vinyl ether, 1-methyl-2,2-dimethylpropyl vinyl ether, 2-ethylbutyl vinyl ether, hydroxyethyl vinyl ether, diethyleneglycol vinyl ether, dimethylaminoethyl vinyl ether, diethylaminoethyl vinyl ether, butylaminoethyl vinyl ether, benzyl vinyl ether and tetrahydrofurururyl vinyl ether),

vinyl esters: such as vinyl butyrate, viny isobutyrate, vinyl trimetylacetate, vinyl diethylacetate, vinyl varate, vinyl caproate, vinyl chloroacetate, vinyl dichloroacetate, vinyl methoxyacetate, vinyl butoxyacetate, vinyl phthalate, vinyl-β-phenylbutyrate and vinyl cyclohexylcarboxylate,

dialkyl itaconate: dimethyul itacoate, diethyl itacoate and dibutyl itacoate,

dialkyl esters or monoalkyl esters of fumaric acid: such as dibutyl fumarate,

in addition to these, such as crotonic acid, itaconic acid, acrylonitrile, methacrylonitrile, maleilonitril and styrene.

In the case of introducing an amino group and a straight chain or branched alkyl group of C4 - C22, an aromatic group or a heterocyclic group of not less than 5-member ring, monomer having these functional group is selected among the above-described monomers or other monomers. For example, in the case of introducing a heterocyclic group of not less than 5-member ring, 1-vinyl imidazole and derivatives thereof can be utilized. Further, an isocyanate or epoxy group is introduced in polymer in advance, and they are reacted with alcohols or amines containing a straight chain or branched alkyl group, an aromatic group or a heterocyclic group of not less than 5-member ring, whereby various functional groups may be introduced in polymer. To introduce an isocyanate or epoxy group, Karenz MOI (produced by Showa Denko K. K.) or Blenmer G (produced by NOF Corp.) can be employed. It is also preferable to introduce a urethane bond.

As a polymerization initiator, an azo type polymerization initiator and organic peroxide can be utilized. An azo type polymerization initiator includes such as ABN-R; 2,2'-azobisisobutyronitrile, ABN-V; 2,2'-azobis(2,4-dimethylvarelonitrile) and ABN-E; 2,2'-azobis(2-methylbutyronitrile), produced by Nippon Hydrazine Industrial Co., Ltd. Organic peroxide includes such as benzoyl peroxide; dimethyl ethyl ketone peroxide; lauryl peroxide; Pertetra A, Perhexa HC, Perhexa TMH, Perhexa C, Perhexa V, Perhexa 22, Perhexa MC, Perbutyl H, Percmyl P, Permenta H, Perocta H, Perbutyl C, Perbutyl D, Perhexyl D, Peroyl IB, Peroyl 355, Peroyl L, Peroyl S, Peroyl SA, Nyper BW, Nyper BMT-K40, Nyper BMT-T40, Nyper BMT-M, Peroyl IPP, Peroyl NPP, Peroyl TCP, Peroyl EEP, Peroyl MBP, Peroyl OPP, Peroyl SBP, Percmyl ND, Perocta ND, Percyclo ND, Perhexyl ND, Perbutyl ND, Perhexyl PV, Perhexa 250, Perocta O, Perhexyl O, Perbutyl O, Perbutyl IB, Perbutyl L, Perbutyl 355, Perhexyl I, Perbutyl E, Perhexyl 25Z, Perhexa 25MT, Perbutyl A, Perhexyl Z, Perbutyl ZT and Perbutyl Z.

Further, as a polymerization inhibitor of this invention, an inhibitor of a quinine type is utilized, and includes hydroquinone and p-methoxyphenol; and phenothiazine, methoquinone, Nonflexalba, MH (methylhydroquinone), TBH (tert-butylhydroquinone), PBQ (p-benzoquinone), toluquinone, TBQ (tert-butyl-p-benzoquinone) and 2,5-diphenyl-p-benzoquinone, produced by Seiko Chemical Co., Ltd.

An isoelctric point of polymer according to this invention is preferably not higher than pH6. When polymer having a high isoelectric point is utilized, decomposition of silver halide micro-grains is accelerated at the time of conducting desalt of silver halide grains by a aggregation precipitation method, resulting in bad affects on photographic ability. Further, it is also difficult to disperse silver halide micro-grains in a solvent without raising the pH, which is not preferable with respect to fog. A measurement of an isoelectric point can be made by such as an isoelectric point electrophresis method or by measurement of pH of a 1% aqueous solution after having been passed through a mixed bed column comprising cationic and anionic ion exchange resin.

To lower an isoelectric point of polymer, various types of acidic groups can be introduced. The examples include a carboxylic acid group and a sulfonic acid group. To introduce a carboxylic acid group, monomer of acrylic acid or methacrylic acid, in addition to, polymer containing such as methylmethacrylate which is partially hydrolyzed, can be utilized. To introduce a sulfonic acid group, styrene sulfonic acid and 2-acrylamido-2-mehylpropane sulfonic acid as monomer are utilized, and in addition to these, it can be introduced after polymer preparation by various sulfonification procedures. It is specifically preferable to utilize carboxylic acid, because the solubility against a solvent in a not neutralized state is relatively high, and it is possible to change the characteristic to be water-soluble by neutralization or half neutralization. The neutralization can be conducted by sodium or potassium salt, and ammonia, or organic salt such as ethanol amine, diethanol amine and triethanol amine. Imidazoles, triazoles and amidoamines can be also utilized.

Polymerization can be conducted either in the presence of or in the absence of a solvent; however, the case of being in the presence of a solvent is preferable with respect to a working property. Herein, a preferable solvent includes alcohols such as ethanol, isopropyl alcohol, n-butanol, isobutanol and tert-butanol; ketones such as acetone, methyl ethyl ketone and methyl amyl ketone; esters such as methyl acetate, ethyl acetate, methyl lactate, ethyl lactate and butyl lactate; monocarboxylic esters such as methyl 2-oxypropionate, ethyl 2-oxypropionate, propyl 2-oxypropionate, butyl 2-oxypropionate, methyl 2-methoxypropionate, ethyl 2-methoxypropionate, propyl 2-methoxypropionate and butyl 2-methoxypropionate; polar solvents such as dimethylformamide, dimethylsulfoxide and N-methylpyrroridone; ethers such as methyl cellosolve, cellosolve, butyl cellosolve and ethl cellosolve acetate; propylene glycols and esters thereof such as propylene glycol, propylene glycol monomethyl ether, propylene glycol monomethyl ether acetate, propylene glycol monoethyl ether acetate and propylene glycol monobutyl ether acetate; halogen type solvents such as 1,1,1-trichloroethane and chloroform; ethers such as tetrahydrofurane and dioxane; an aromatic compounds such as benzene, toluene and xylene; and further fluorinated inert liquids such as perfluorooctane, and perfluorotri-n-butylamine.

A titration polymerization method, in which monomer and an initiator are titrated into a reaction vessel corresponding to polymerizing property of each monomer, is effective to prepare polymer having a uniform composition. It is possible to remove non-reacted monomer by elimination by means of such as column filtration, purification by reprecipitation, solvent extraction. Non-reacted monomer having a low boiling point can be removed by stripping.

In a manufacturing process of a silver halide photothermographic dry imaging material of this invention, it is also preferable to incorporate a surfactant and specifically a nonionic surfactant in a silver halide grains emulsion for the purpose of such as aggregation prevention and uniform dispersion of the above-described silver halide grains.

According to Griffin W. C. [J. Soc. Cosm. Chem., 1,311 (1949)], the nonionic surfactants is generally selected from nonionic hydrophilic compounds having hydrophilicity/hydrophobicity equilibrium, which is defined by the "HLB" value reflecting the ratio of a hydrophilic group and a phydrophobic group in a molecule, of -18 - 18 and preferably of -15 - 0.

As a nonionic surfactant utilized in photosensitive silver halide emulsion according to this invention is preferably surfactants represented by following Formula (NSA1) and (NSA2).

Formula (NSA1): HO-(EO)a-(AO)b-(EO)c-H

Formula (NSA2): HO-(AO)d-(EO)e-(AO)f-H

Wherein, EO is an oxyethylene group; AO is an oxyalkylene group having a carbon number of not less than 3; a, b, c, d, e and f each are a number not less than 1.

These are all referred as Pluronic type nonion surfactants; in Formulas (NSA1) or (NSA2), an oxyalkylene group having a carbon number of not less than 3 represented by AO includes such as an oxypropylene group, an oxybutylene group and an oxy long-chain alkylene group, however, an oxypropylene group is the most preferable.

Further, a, b and c each are a number of not less than 1; d, e and f are a number of not less than 1. a or c each is preferably 1 - 200 and more preferably 10 - 100; b is preferably 1 - 300 and more preferably 10 - 200. d and f each are preferably 1 - 100 and more preferably 5 - 50; e is preferably 1 - 100 and more preferably 2 - 50.

A mean molecular weight of a Pluronic type nonionic surfactant represented by Formula (NSA1) or (NSA2) each is preferably 500 - 30,000 and more preferably approximately 1,000 - 20,000. As a Pluronic type nonionic surfactant represented by Formula (NSA1) or (NSA2), at least one type is preferably one having a ratio of an oxyethylene group in a whole molecule of not more than 50 weight%.

As this type nonionic surfactant, there are such as Pluronic P94 and Pluronic F68 (trade marks).

In this invention, a nonionic surfactant is utilized at a concentration of 0.5 - 2% and preferably of 0.9 - 1.5%.

In a photosensitive silver halide emulsion of this invention, a large ring compound containing a hetero atom is utilized. A large ring compound containing a hetero atom is a large ring compound of not less than 9-member ring containing at least one type of a nitrogen atom, an oxygen atom, a sulfur atom or a selenium atom as a hetero atom. Further, it is preferably a 12 - 24-member ring and furthermore preferably 15 - 21-member ring.

Typical compounds include a compound known as crown ether, which is described in detail in such as C. J. Pederson, Journal of American Chemical Society Vol. 86 (2495), 7017 - 7036 (1967); G. W. Gokei, S. H. Korzeniowski, "Macrocyclic polyether synthesis", Springer-Vergal, (1982); "Chemistry of Crown Ether", edited by Oda, Shono and Tabuse, Kagakudojin (1978); "Host -Gest", edited by Tabuse, Kyoritsu Syuppan (1979); and Sasaki and Koga, "Organic Synthetic Chemistry" Vol. 45 (6), 571 - 582 (1987).

Photosensitive silver halide grains according to this invention can be subjected to chemical sensitization. For example, by such as methods described in JP-A Nos. 2001-249428 and 2001-249426, utilizing a compound which releases chalcogen such as sulfur, selenium and tellurium or a noble metal compound which releases such as a gold ion, silver halide grains can be provided with a chemical sensitization center (a chemical sensitization nucleus) which is capable of capturing an electron or a positive hole (a hole) generated by photo-excitation of photosensitive silver halide grains or spectral sensitizer on said grains. Particularly, chemical sensitization is preferably conducted by an organic sensitizer containing a chalcogen atom.

These organic sensitizers containing a chalcogen atom are preferably compounds which are provided with a group capable being adsorbed by silver halide and with an unstable chalcogen atom portion.

As these organic sensitizers, organic sensitizers of various structures disclosed in such as JP-A Nos. 60-150046, 4-109240, 11-218874, 11-218875, 11-218876 and 11-194447 can be utilized, however, among them, preferable is at least one type of compounds having a structure in which a chalcogen atom bonds to a carbon atom or a phosphor atom via a double bond. In particular, such as thiourea derivatives and triphenylphosphin sulfide derivatives are preferable.

As a method of chemical sensitization, technologies according to various chemical sensitization technologies commonly employed at the time of manufacturing of a silver halide photosensitive material for conventional wet processing can be utilized (references: (1) "The Theory of the Photographic Process" 4th edition, edited by T. H. James, Macmillan Publishing Co., Ltd. 1977 ; (2) "Fundamentals of Photographic Engineering (Silver Salt Photography)" edited by Japan Photographic Society, Corona Corp. 1977). In particular, in the case of mixing silver halide grain emulsion, which has been subjected to chemical sensitization in advance, with photo-insensitive organic silver salt grains, chemical sensitization can be provided by a conventional common method.

The using amount of a chalcogen compound as an organic sensitizer differs depending on such as a utilized chalcogen compound, silver halide grains, reaction environment to provide chemical sensitization, however, is preferably $10^{-8}$ - $10^{-2}$ mol and more preferably $10^{-7}$ - $10^{-3}$ mol, against 1 mol of silver halide.

Environmental conditions to provide chemical sensitization are not specifically limited; however, it may be preferable to provide chalcogen sensitization by utilizing an organic sensitizer containing a chalcogen atom in the presence of a compound which is capable of extinguishing nuclei of silver chalcogenide or silver on photosensitive silver halide grains or decrease the size, and particularly in the presence of an oxidant capable of oxidizing silver nuclei. As for sensitization conditions in this case, sensitization is preferably provided at a pAg of 6 - 11 and more preferably of 7 - 10, a pH of 4 - 10 and more preferably of 5 - 8, and a temperature of not higher than 30°C.

Further, chemical sensitization utilizing these organic sensitizers is preferably conducted in the presence of a spectral sensitizer or a hetero atom containing compound having adsorption ability against silver halide grains. By conducting chemical sensitization in the presence of a compound having adsorption ability against silver halide grains, dispersion of a chemical sensitization center is prevented to achieve high sensitivity and low fog. It will be described later with respect to a spectral sensitizer, however, a heteroatom containing compound having adsorption ability against silver halide includes nitrogen-containing heterocyclic compounds described in JP-A 3-24537 as preferable examples. In a nitrogen containing heterocyclic compound, a heteroyclic ring includes such as a pyrazole ring, a pyridine ring, a 1,2,4-triazole ring, a 1,2,3-triazole ring, a 1,3,4-thiadiazole ring, a 1,2,3-thiadiazole ring, a 1,2,4-thiadiazole ring, a 1,2,5-thiadiazole ring, 1,2,3,4-tetrazole ring, a pyridazine ring, 1,2,3-triazine ring, and rings in which a few of these rings bond together, such as triazolotriazole ring, diazaindene ring, a triazaindene ring and a pentaazaindene ring. A heterocyclic ring, in which a monocyclic heterocycle and an aromatic ring are condenced, such as a phthalazine ring, a benzimidazole ring, an indazole ring and a benzthiazole ring can be also utilized.

Among them preferable are an azaindene ring; an azaindene compound having a hydroxyl group as a substituent such as a hydroxytriazaindene, tetrahydroxyazaindene and hydroxypentaazindene compounds are more preferable.

The heterocyclic ring may be provided with a substituent other than a hydroxyl group. The substituent includes such as an alkyl group, a substituted alkyl group, an alkylthio group, an amino group, a hydroxyamino group, an alkylamino group, a dialkylamino group, an arylamino group, a carboxyl group, an alkoxycarbonyl group, a halogen atom and a cyano group.

The addition amount of a nitrogen-containing heterocyclic compound varies over a wide range depending on such as a size and a component and other conditions of silver halide grains, however, the approximate amount is in a range of $10^{-8}$ - 1 mol and preferably in a range of $10^{-4}$ - $10^{-1}$ mol, against 1 mol of silver halide.

Photosensitive silver halide according to this invention can be subjected to noble metal sensitization by utilizing a compound which releases a noble metal ion such as a gold ion. For example, as a gold sensitizer, a chloroaurate and an organic gold compound can be utilized. Herein, referred can be a gold sensitization technology disclosed in JP-A 11-194447.

Further, in addition to the above-described sensitizing method, such as a reduction sensitization method can be also utilized, and such as ascorbic acid, thiourea dioxide, stannous chloride, a hydrazine derivative, a borane compound, a silane compound and a polyamine compound can be utilized as a specific compound for reduction sensitization. A reduction sensitization can be conducted by ripening an emulsion while keeping the pH at not lower than 7 and pAg at not higher than 8.3.

In this invention, silver halide grains to be subjected to chemical sensitization may be either those formed in the presence of silver aliphatic carboxylate or those formed in the absence of said organic silver salt, or those in which the both are mixed.

In this invention, in the case of photosensitive silver halide grains the surface of which has been subjected to chemical sensitization, it is preferable that said chemical sensitization effect is essentially extinguished after passing the heat development process. Herein, a chemical sensitization effect being essentially extinguish refers that sensitivity of said imaging material prepared by the aforesaid chemical sensitization technology is decreased to not more than 1.1 times of sensitivity in the case of chemical sensitization being not provided after heat development process. Herein, to extinguish a chemical sensitization effect in a heat development process, it is necessary to incorporate an appropriate amount of an oxidant, which can destroy a chemical sensitization center (a chemical sensitization nucleus) by a reduction reaction, such as a halogen radical releasing compound in an emulsion layer or/and a photo-insensitive layer. The content of said oxidant is preferably adjusted in consideration of such as oxidation power of the oxidant and the decrease width of a chemical sensitization effect.

Photosensitive silver halide of this invention is preferably subjected to spectral sensitization by adsorbing a spectral sensitizer. As a spectral sensitizer, such as cyanine dye, merocyanine dye, complex cyanine dye, complex merocyanine dye, holopoler cyanine dye, styryl dye, hemicyanine dye, oxonol dye and hemioxonol dye can be utilized. For example dye described in JP-A Nos. 63-159841, 60-140335, 63-231437, 63-259651, 63-304242, 63-15245; and in USP Nos. 4,639,835, 4,740,455, 4,741,966, 4,751,175 and 4,835,096; can be utilized.

Useful sensitizing dyes utilized in this invention are described, for example, in Research Disclosure (hereinafter, being abbreviated as RD) 17643, item IV-A (p. 23, Dec. 1978) and RD 18431, item IX (p. 437, Aug. 1978) or in references thereof. In particular, it is preferable to utilize sensitizing dye having spectral sensitivity suitable for spectral characteristics of a light source of various laser imagers and scanners. For example, compounds described in JP-A Nos. 9-34078, 9-54409 and 9-80679 can be utilized.

Useful cyanine dye is, for example, cyanine dye having a basic nucleus such as a thiazoline nucleus, an

oxazoline nucleus, a pyrroline nucleus, a pyridine nucleus, an oxazole nucleus, a thiazole nucleus, a selenazole nucleus and an imidazole nucleus. Preferable one of useful merocyanine dye contains also an acidic nucleus such as a thiohydantoin nucleus, a rhodanine nucleus, an oxazolidinedione nucleus, a thiazolinedione nucleus, a barbituric acid nucleus, a thiazolinone nucleus, a malonitrile nucleus and a pyrazolone nucleus, in addition to the basic nucleus described above.

In this invention, in particular, a spectral sensitizer having spectral sensitivity in an infrared region can be also utilized. An infrared spectral sensitizer preferably utilized includes those disclosed in such as USP Nos. 4,536,473, 4,515,888 and 4,959,294.

In a silver salt phtothermographic dry imaging material of this invention, at least one type of sensitizing dye represented by following Formula (SD-1) and sensitizing dye represented by Formula (SD-2) is preferably selected and incorporated.

Formula (SD-1)

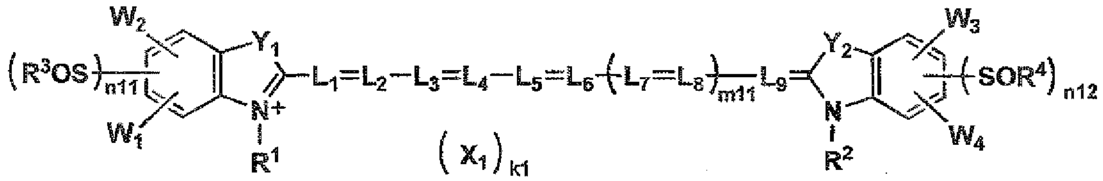

Formula (SD-2)

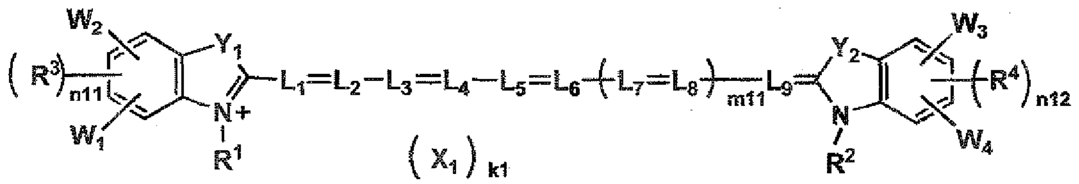

In the formula, $Y_1$ and $Y_2$ each are an oxygen atom, a sulfur atom, a selenium atom or a -CH=CH- group; and $L_1$ - $L_9$ each are a methine group. $R^1$ and $R^2$ each are an aliphatic group. $R^1$ and $R^4$ each are a lower alkyl group, a cycloalkyl group, an alkenyl group, an aralkyl group, an aryl group or a heterocyclic group. $W_1$, $W_2$, $W_3$, and $W_4$, each are a hydrogen atom, a substituent or a non-metal atomic group necessary to form a condensed ring by bonding between $W_1$ and $W_2$, $W_3$ and $W_4$; or a non-metal atomic group to form a 5- or 6-member condensed ring by bonding between $R^3$ and $W_1$, $R^3$ and $W_2$, $R^4$ and $W_3$, $R^4$ and $W_4$. $X_1$ is an ion necessary to compensate charges in the molecule and k1 is a number of ions necessary to compensate charges in the molecule. m1 is 0 or 1. n1 and n2 each are 0, 1 or 2, however, n1 and n2 are not simultaneously 0.

The above-described infrared sensitizing dye can be easily synthesized according to the method described, for example, in F. M. Harmer, The Chemistry of Heterocyclic Compounds, 18th volume, The Cyanine Dyes and Related Compounds (A. Weissberger ed. Interscience Corp., New York 1964) .

The addition timing of these infrared sensitizing dyes may be an arbitrary timing after silver halide preparation, and the dyes may be added into silver halide grains or into photosensitive silver halide emulsion containing silver halide grains/silver aliphatic carboxylate grains, for example, by being dissolved in a solvent or dispersed in a micro-particle form, that is, a so-called solid dispersion state. Further, similar to a hetero atom containing compound having adosorbing ability on the aforesaid silver halide grains, chemical sensitization can be performed after the dye has been adsorbed on silver halide grains prior to chemical sensitization, whereby, dispersion of chemical sensitivity nuclei can be prevented resulting in achievement of high sensitivity and low fog.

In this invention, one type of the above-described spectral sensitizer may be utilized alone; however, it is preferable to utilize plural types of spectral sensitizers in combination, and such combinations of sensitizing dyes are often utilized, in particular, for the purpose of such as supersensitization and enlargement or adjustment of the photosensitive wavelength range.

In an emulsion which contains photosensitive silver halide and silver aliphatic carboxylate and is utilized for a silver salt photothermographic dry imaging material, a substance which is not provided with a spectral photosensitizing effect or does not essentially absorb visible light but exhibits a supersensitization effect itself, may be contained together

with a sensitizing dye in the emulsion to supersensitize the silver halide grains.

Useful sensitizing dyes, dye combinations which exhibit supersensitization and substances which exhibit supersensitization are described in such as RD 17643, p.23 item IV-J (Dec. 1978), Examined Japanese Patent Application Publication Nos. 9-25500 and 43-4933, JP-A Nos. 59-19032, 59-192242 and 5-341432, however, heterocyclic aromatic mercapto compounds or mercapto derivatives represented by the following formula are preferable.

Ar-SM

wherein, M is a hydrogen atom or an alkali metal atom, and Ar is a hetero-aromatic ring or a condensed aromatic ring provided with at least one nitrogen, sulfur, oxygen, selenium or tellurium atom.

The hetero-aromatic ring is preferably benzimidazole, naphthoimidazole, benzthiazole, naphthothiazole, benzoxazole, naphthooxazole, benzselenazole, benztellurazole, imidazole, oxazole, pyrazole, triazole, triazine, pyrimidine, pyridazine, pyradine, pyridine, purine, quinoline or chinazoline. However, other hetero-aromatic rings are also included.

Herein, mercapto derivative compounds, which essentially generate the mercapto compound described above when being contained in a silver aliphatic carboxylate or in a dispersion of silver halide grain emulsion, are also included. In particular, preferable examples include mercapto derivatives represented by the following formula.

Ar-S-S-Ar

In the formula, Ar is identical to that in the case of mercapto compounds represented above.

The above-described hetro-aromatic ring may be provided with a substituent selected from a group comprising such as a halogen atom (such as chlorine, bromine, iodine), a hydroxyl group, an amino group, a carboxyl group, an alkyl group (for example, having at least 1 and preferably 1 - 4 carbon atoms) and an alkoxy group (for example, having at least 1 and preferably 1-4 carbon atoms).

In addition to the super sensitizers described above, large ring compounds having a hetero atom, which are disclosed in JP-A No. 2001-330918, can be utilized as a super sensitizer.

A super sensitizer is preferably utilized at 0.001 - 1.0 and specifically preferably at 0.01 - 0.5 mol, per 1 mol of silver, in a photosensitive layer which contains organic silver salt and silver halide grains.

In this invention, spectral sensitization is provided by adsorbing a spectral sensitizer on the surface of photosensitive silver halide grains, and it is necessary to essentially lose said spectral sensitization effect after a heat development process. Herein, to lose a spectral sensitization effect refers that the sensitivity of said imaging material, which is obtained by such as a sensitizing dye and a super sensitizer, is decreased to not more than 1.1 times of the sensitivity in the case of not being spectrally sensitized, after a heat development process.

Further, to extinguish a chemical sensitization effect in a heat development process, it is necessary to utilize a spectral sensitizer which is liable to be released from silver halide grains by heat, or/and to incorporate an oxidant which can destroy a spectral sensitizer by an oxidation reaction, such as an appropriate amount of the aforesaid halogen radical releasing compound, in a emulsion layer or/and a photo-insensitive layer of said imaging material, at the time of heat development. The content of said oxidant is preferably adjusted in consideration of oxidizing power of the oxidant, a decreasing degree of the spectral sensitization effect.

A reducing agent according to this invention is one capable of reducing silver ion in a photosensitive layer, and is also referred to as a developer. A reducing agent includes compounds represented by following Formula (RD1).

Formula (RD1)

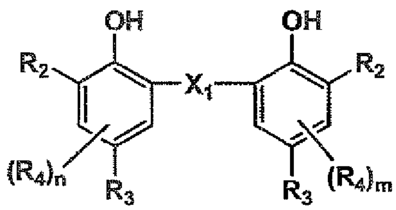

wherein, $X_1$ is a chalcogen atom or $CHR_1$, and $R_1$ represents a hydrogen atom, a halogen atom, an alkyl group, an alkenyl group, an aryl group or a heterocyclic group. $R_2$'s are an alkyl group, and may be same or different. $R_3$ is a hydrogen atom or a group capable of substitution on a benzene ring. $R_4$ is a group capable of substitution on a benzene ring, and m and n each are an integer of 0 - 2.

Among compounds represented by Formula (RD1), particularly, a highly active reducing agent (hereinafter, referred to as a compound of Formula (RD1a)), in which at least one of $R_2$'s is a secondary or tertiary alkyl group, is

preferably utilized with respect to obtaining a heat developable photosensitive material which exhibits high density and excellent image storage stability against light irradiation. In this invention, it is preferable to utilize a compound of Formula (RD1a) and a compound of Formula (RD2) in combination to obtain desirable tone.

Formula (RD2)

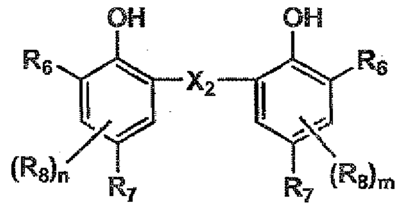

In the formula, $X_2$ is a chalcogen atom or $CHR_5$, and $R_5$ is a hydrogen atom, a halogen atom, an alkyl group, an alkenyl group, an aryl group or a heterocyclic group. $R_6$'s are an alkyl group, and may be same or different; however, are never a secondary or tertiary alkyl group. $R_7$ is a hydrogen atom or a group capable of substitution on a benzene ring. $R_8$ is a group capable of substitution on a benzene ring, and m and n each are an integer of 0 - 2.

The using amount ratio, [weight of compound of Formula (RD1a)] / [weight of compound of Formula (RD2)] is preferably 5/95 - 45/55 and more preferably 10/90 - 40/60.

In Formula (RD1), $X_1$ is a chalcogen atom or $CHR_1$. The chalcogen atom is a sulfur atom, a selenium atom or a tellurium atom and preferably a sulfur atom. $R_1$ in $CHR_1$ is a hydrogen atom, a halogen atom, an alkyl group, an alkenyl group, an aryl group or a heterocyclic group. The halogen atom is such as a fluorine atom, a chlorine atom or a bromine atom; the alkyl group is preferably a substituted or unsubstituted alkyl group having a carbon number of 1 - 20 and specific examples are each group of such as methyl, ethyl, propyl, butyl, hexyl and heptyl; alkenyl groups are each groups of such as vinyl, allyl, butenyl, hexenyl, hexadienyl, ethenyl-2-propenyl, 3-butenyl, 1-methyl-3-propenyl, 3-pentenyl and 1-methyl-3-butenyl; aryl groups are such as a benzene ring and naphthalene ring; and heterocyclic groups are each group of thiophene, furan, imidazole and pyrrole.

These groups may be further provided with a substituent and specific examples of the substituent include halogen atoms (such as fluorine, chlorine and bromine), alkyl groups (such as methyl, ethyl, propyl, butyl, pentyl, i-pentyl, 2-ethylhexyl, octyl and decyl), cycloalkyl groups (such as cyclohexyl and cycloheptyl), alkenyl groups (such as ethenyl-2-propenyl, 3-butenyl, 1-methyl-3-propenyl, 3-pentenyl and 1-methyl-3-butenyl), cycloalkenyl groups (such as 1-cycloalkenyl and 2-cycloalkenyl group), alkynyl groups (such as ethynyl and 1-propynyl), alkoxy groups (such as methoxy, ethoxy and propoxy), alkylcarbonyloxy groups (such as acetyloxy), alkylthio groups (such as methylthio and trifluoromethylthio), acyl groups (such as an acetyl group and a benzoyl group), a carboxyl group, alkylcarbonylamino groups (such as acetylamino), ureido groups (such as methylaminocarbonylamino), alkylsulfonylamino groups (such as methanesulfonylamino), alkylsulfonyl groups (such as methanesulfonyl and trifluoromethanesulfonyl), carbamoyl groups (such as carbamoyl, N,N-dimethylcarbamoyl and N-morphorinocarbonyl), sulfamoyl groups (such as sulfamoyl, N,N-dimethylsulfamoyl and morphorinosulfamoyl), a trifluoromethyl group, a hydroxyl group, a nitro group, a cyano group, alkylsulfonamido groups (such as methanesulfonamido and butanesulfonamido), alkylamino groups (such as amino, N,N-dimethylamino and N,N-diethylamino), a sulfo group, a phosphono group, a sulfite group, a sulfino group, alkylsulfonylaminocarbonyl groups (such as methanesulfonylaminocarbonyl and ethanesulfonylaminocarbonyl), alkylcarbonylaminosulfonyl groups (such as acetoamidosulfonyl and methoxyacetoamidosulfonyl), alkylaminocarbonyl groups (such as acetoamidocarbonyl and methoxyacetoamidocarbonyl) and alkylsulfinylaminocarbonyl groups (such as methanesulfinylaminocarbonyl and ethanesulfinylaminocarbonyl). Further, in the case of at least two substituents being provided, they may be same or different. A specifically preferable substituent is an alkyl group.

Ra' s are an alkyl group, and may be same or different; however, at least one of them is preferably a secondary or tertiary alkyl group. The alkyl groups are preferably substituted or unsubstituted ones having a carbon number of 1 - 20, and specifically include groups of such as methyl, ethyl, propyl, i-propyl, butyl, i-butyl, t-butyl, t-pentyl, t-octyl, cyclohexyl, cyclopentyl, 1-methylcyclohexyl and 1-methylcyclopropyl.

Substituents of the alkyl groups are not specifically limited and include such as an aryl group, a hydroxyl group, an alkoxy group, an aryloxy group, an alkylthio group, an arylthio group, an acyamino group, a sulfonamide group, a sulfonyl group, a phosphoryl group, an acyl group, a carbamoyl group, an ester group and a halogen atom. Further, $R_2$ may form a saturated ring together with $(R_4)_n$ and $(R_4)_m$. $R_2$'s are both preferably a secondary or tertiary alkyl group having a carbon number of 2 - 20; more preferably a tertiary alkyl group, furthermore preferably a t-butyl group, a t-pentyl group or a 1-methylcyclohexyl group, and most preferably a t-butyl group.

$R_3$ is a hydrogen atom or a group which is capable of substitution on a benzene ring, and a group which is capable of substitution on a benzene ring includes, for example, a halogen atom such as fluorine, chlorine and bromine,

an alkyl group, an aryl group, a cycloalkyl group, an alkenyl group, a cycloalkenyl group, an alkynyl group, an amino group, an acyl group, an acyoxy group, an acyamino group, a sulfonylamino group, a sulfamoyl group, a carbamoyl group, an alkylthio group, a sulfonyl group, an alkylsulfonyl group, a sulfinyl group, a cyano group and a heterocyclic group.

$R_3$ preferably includes methyl, ethyl, i-propyl, t-butyl, cyclohexyl, 1-methylcyclohexyl and 2-hydroxyethyl, and more preferably methyl and 2-hydroxyethyl.

These groups may be further provided with a substituent and those listed in aforesaid $R_1$ can be utilized as the substituent. $R_3$ is preferably an alkyl group having a carbon number of 1 - 20, provided with a hydroxyl group or a precursor group thereof, more preferably an alkyl group having a carbon number of 1 - 5 and most preferably 2-hydroxyethyl. The most preferable combination of $R_2$ and $R_3$ is one in which $R_2$ is a tertiary alkyl group (such as t-butyl and 1-methycyclohexyl) and $R_3$ is a primary alkyl group (such as 2-hydroxyethyl) provided with a hydroxyl group or a precursor group thereof. Plural number of $R_2$ and $R_3$ may be same or different.

$R_4$ is a group capable of substitution on a benzene ring, and specifically includes alkyl groups having a carbon number of 1 - 25 (such as methyl, ethyl, propyl, i-propyl, t-butyl, pentyl, hexyl and cyclohexyl), halogenated alkyl groups (such as trifluoromethyl and perfluorooctyl), cycloalkyl groups (such as cyclohexyl and cyclopentyl), alkynyl groups (such as propargyl), a glycidyl group, an acrylate group, a methacrylate group, aryl groups (such as phenyl), heterocyclic groups (such as pyridyl, thiazolyl, oxazolyl, imidazolyl, furyl, pyrrolyl, pyrazinyl, pirimidinyl, pyridazinyl, selenazolyl, sulforanyl, pyperidinyl, pyrazolyl and tetrazolyl), halogen atoms (such as chlorine, bromine, iodine and fluorine), alkoxy groups (such as methoxy, ethoxy, propyloxy, pentyloxy, cyclpentyloxy, hexyloxy and cyclohexyloxy), aryloxy groups (such as phenoxy), alkoxycarbonyl groups (methyloxycarbonyl, ethyloxycarbonyl and butyloxycarbonyl), aryloxycarbonyl groups (such as phenyloxycarbonyl), sulfonamide groups (methanesulfonamide, ethanesulfonamide, butanesulfonamide, hexanesulfonemide, cyclohexanesulfonemide and benzenesulfonamide), sulfamoyl groups (such as aminosulfonyl, methylaminosulfonyl, dimethyaminosulfonyl, butylaminosulfonyl, hexylaminosulfonyl, cyclohexylaminosulfonyl, phenylaminosulfonyl and 2-pyridylaminopsulfonyl), urethane groups (such as methylureido, ethylureido, pentylureido, cyclohexylurido, phenylureido and 2-pyridylureido), acyl groups (such as acetyl, propionyl, butanoyl, hexanoyl, cyclohexanoyl, benzoyl and pyridinoyl), carbamoyl groups (such as aminocarbonyl, methylaminocarbonyl, dimethyaminocarbonyl, propylaminocarbonyl, pentylaminocarbonyl, cyclohexylaminocarbonyl, phenyaminocarbonyl and 2-pyridylaminocarbonyl), amido groups (such as acetamido, propioneamido, butaneamido, hexaneamido and benzamido), sulfonyl groups (such as methylsulfonyl, ethylsulfonyl, butylsylfonyl, cyclohexylsulfonyl, phenylsulfonyl and 2-pyridylsulfonyl), amino groups (such as amino, ethylamino, dimethylamino, butylamino, cyclopentylamino, anilino and 2-pyridylamino), a cyano group, a nitro group, a sulfo group, a carboxyl group, a hydroxyl group and an oxamoyl group. These groups may be further substituted by these groups. n and m are an integer of 0 - 2, and most preferably n and m are both 0.

Further, $R_4$ may form a saturated ring with $R_2$ and $R_3$. $R_4$ is preferably a hydrogen atom, a halogen atom or an alkyl group and more preferably a hydrogen atom. Plural number of $R_4$'s may be same or different.

In Formula (RD2), $R_5$, $R_7$ and $R_8$ each are similar groups to $R_1$, $R_3$ and $R_4$, respectively. Alkyl groups represented by $R_6$ may be same or different, however, are never a secondary or tertiary alkyl group. The alkyl groups are preferably those having a carbon number of 1 - 20, and specifically include groups of such as methyl, ethyl, propyl and butyl.

Substituents of the alkyl groups are not specifically limited, and include such as an aryl group, a hydroxyl group, an alkoxy group, an aryloxy group, an alkylthio group, an arylthio group, an acylamino group, a sulfonamido group, a sulfonyl group, a phosphoryl group, an acyl group, a carbamoyl group, an ester group and a halogen atom.

Further, $R_6$'s may form condensed rings together with $(R_8)_n$ and $(R_8)_m$. $R_6$ is preferably methyl. Preferably utilized compounds among compounds represented by Formula (RD2) are those which satisfy Formula (S) and Formula (T) described in European Patent No. 1,278,101, and specifically, include compounds of (1-24), (1-28) - (1-54), (1-56) - (1-75) described in pp. 21 - 28 of said publication.

In the following, specific examples of compounds represented by Formulas (RD1) and (RD2) are listed; however, this invention is not limited thereto.

(RD1−1)

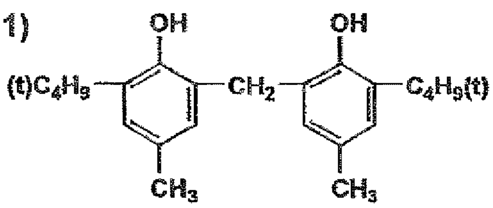

(RD1−2)

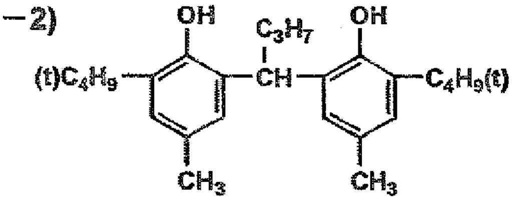

(RD1−3)

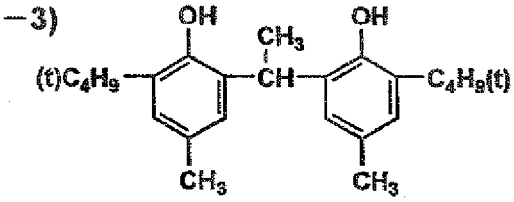

(RD1−4)

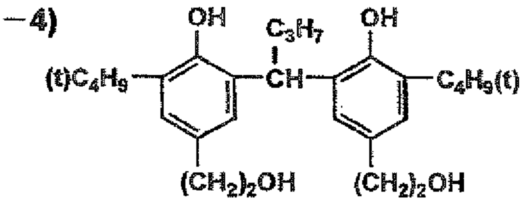

(RD1−5)

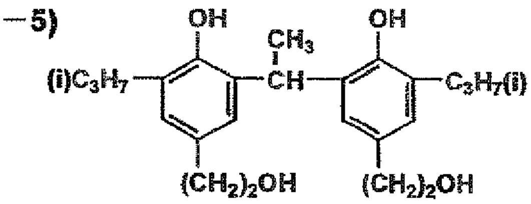

(RD1−6)

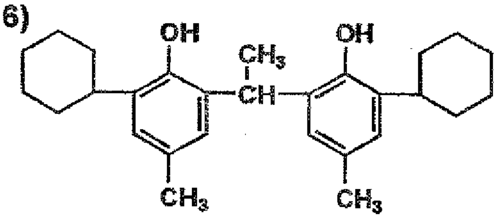

(RD1−7)

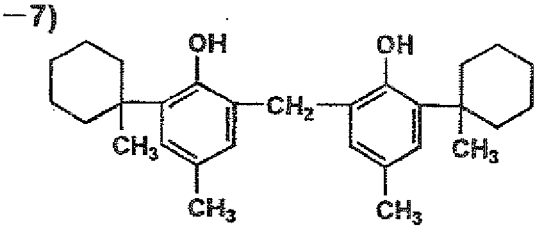

(RD1−8)

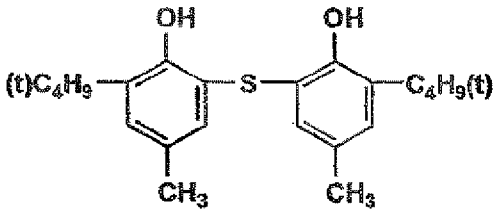

(RD1−9)

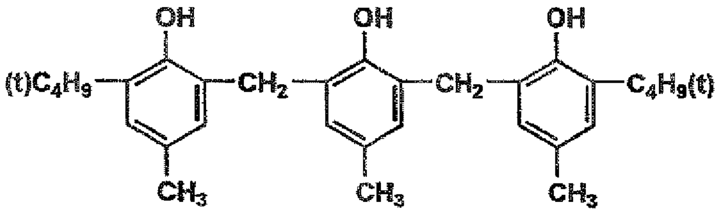

(RD1−10)

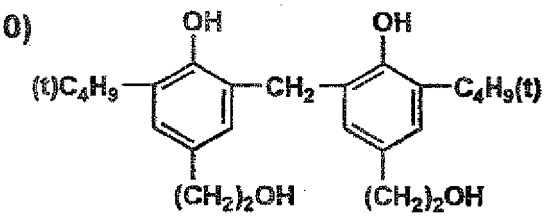

(RD2−1)

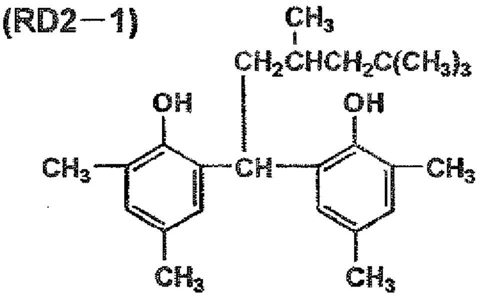

(RD2−2)

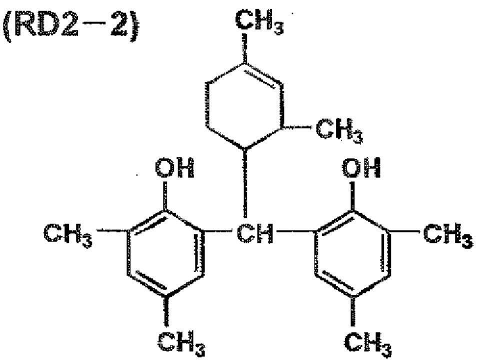

(RD2−3)

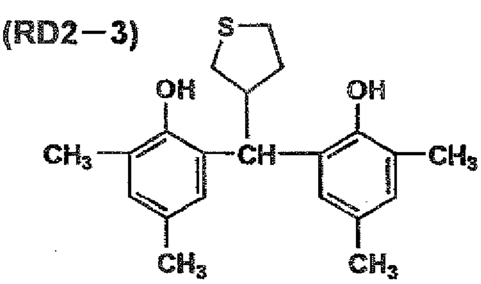

(RD2−4)

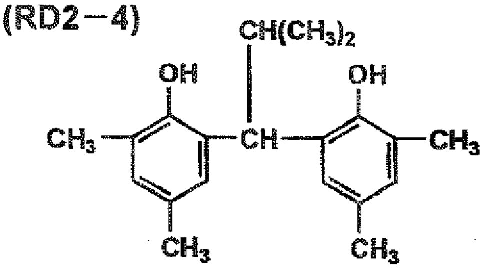

(RD2−5)

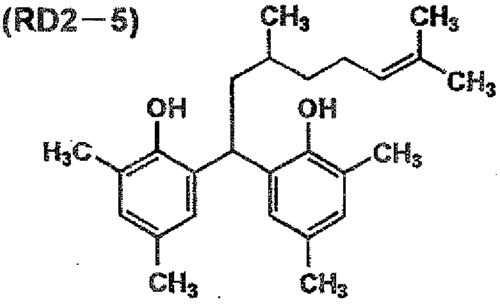

(RD2−6)

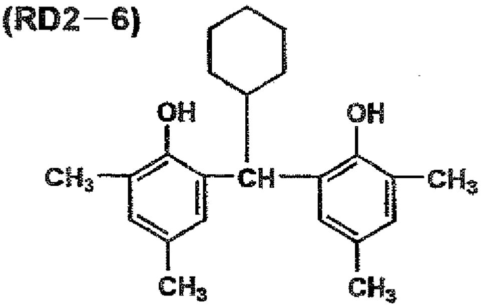

(RD2−7)

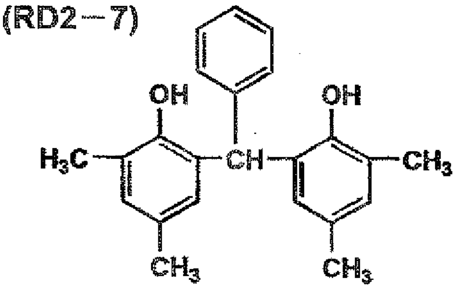

(RD2−8)

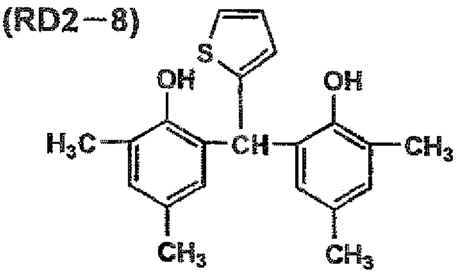

Bisphenol compounds represented by Formulas (RD1) and (RD2) described above can be easily synthesized by a conventionally well known method.

Reducing agents, which can be utilized in combination with reducing agents of this invention, include those described in such as USP Nos. 3,770,448, 3,773,512 and 3,593,863; RD Nos. 17029 and 29963; and JP-A Nos. 11-119372 and 2002-62616.

The using amount of a reducing agent such as compounds represented by aforesaid Formula (RD1) is preferably $1 \times 10^{-2}$ - 10 mol and specifically preferably $1 \times 10^{-2}$ - 1.5 mol, per 1 mol of silver.

Next, tone of images obtained by heat development of a silver salt photothermographic material will be described.

It is said that tone of output images for medical diagnostic application such as conventional X-ray photographic film is preferably cold image tone to easily obtain more accurate diagnostic observation results for an examiner. Herein, cold image tone referred to pure black tone or bluish black tone in which black images have a bluish tone. On the other hand, warm tone refers to warm black tone in which black images have brownish tone, however, to discuss more precisely and quantitatively, in the following, it will be explained based on an expression method proposed by International Commission on Illumination (CIE).

Terms related to tone, "colder tone" and "warmer tone" can be expressed by hue angles hab at the minimum density Dmin and an optical density of 1.0. That is, hue angle hab is determined according to the following equation by utilizing color coordinates a*, b* in color space L*a*b*, which is a color space having approximately uniform visual steps and has been recommended by International Commission on Illumination 1976.

$$hab = \tan^{-1}(b^*/a^*)$$

As a result of study according to the above expression based on color angle, it has been proved that tone after development of a photothermographic dry imaging material of this invention is preferably 180° < hab < 270°, more preferably 200° < hab < 270° and most preferably 220° < hab < 260°, based on a range of a hue angle. This fact is disclosed in JP-A No. 2002-6463.

Herein, conventionally, it has been known that a diagnostic image having a preferable visual tone can be obtained by adjusting u*, v* or a*, b* in CIE 1976 (L*u*v*) or (L*a*b*) color space around an optical density of 1.0 to a specific values, which is described, for example, in JP-A No. 2000-29164.

However, as a result of further intensive study on a silver salt photothermographic material of this invention, it has been found that when u*, v* or a*, b* are plotted at various photographic densities on a graph having u* or a* as abscissa and v* or b* as ordinate in CIE 1976 (L*u*v*) space or (L*a*b*) space to form a linear regression line, a diagnostic

capability higher than a conventional wet processing silver salt photosensitive material can be obtained by adjusting the linear regression line in a specific region. In the following, the preferable region of conditions will be described.

(1) When each density at optical densities of 0.5, 1.0, 1.5 and the minimum of a silver image obtained by heat development of a silver salt photothermographic dry imaging material was measured, decision coefficient (double decision) $R^2$ of a linear regression line, which is formed by u* and v* at the above optical densities being arranged in a two dimensional coordinate having u* as abscissa and v* as ordinate in CIE 1976 (L*u*v*) color space, is preferably 0.998 - 1.000. Further, v* value at the crossing point of said linear regression line with the ordinate is -5 - 5 and the slope (v*/u*) is preferably 0.7 - 2.5.

(2) Further, when each density at optical densities of 0.5, 1.0, 1.5 and the minimum, of said silver salt photothermographic dry imaging material was measured, decision coefficient (double decision) $R^2$ of a linear regression line, which is formed by a* and b* at the above optical densities being arranged in a two dimensional coordinate having a* as abscissa and b* as ordinate in CIE 1976 (L*a*b*) color space, is preferably 0.998 - 1.000. Further, b* value at the crossing point of said linear regression line with the ordinate is -5 to 5 and the slope (b*/a*) is preferably 0.7 - 2.5.

Next, a forming method of the above-described linear regression line, that is, an example of a measuring method of u*, v* and a*, b* in CIE 1976 color space will be explained.

A four-step wedge sample including an unexposed portion and optical densities of 0.5, 1.0 and 1.5 is prepared by use of a thermal processor. Each wedge density portion thus prepared is measured by use of a spectral color meter (such as CM-3600d, manufactured by Minolta Co. Ltd.) to calculate u*, v* or a*, b*. As the measurement conditions at that time, measurement is carried out employing F7 light source at a viewing angle of 10° in a transparent measurement mode. Measured u*, v* or a*, b* are plotted on a graph having u* or a* as abscissa and v* or b* as ordinate to determine a linear regression line and determining coefficient (double determination) $R^2$, an intercept and an inclination are obtained.

Next, a specific method to obtain a linear regression line provided with the above characteristics will be explained.

In this invention, it is possible to optimize the developed silver shape to result in a preferable tone by adjusting the addition amount of such as directly or indirectly related compounds in a development reaction process, such as a reducing agent (a developer), silver halide grains and silver aliphatic carboxylate and a toning agent described below. For example, to form developed silver of a dendrite shape provides a tendency of being bluish while to form developed silver of a filament shape provides a tendency of being yellowish. That is, it is possible to control the tone in consideration of such characters of a developed silver shape.

Conventionally, phthalazinone or phthalazine and phthalic acids, and phthalic acid anhydrides have been generally utilized as a toning agent. Examples of a preferable toning agent are disclosed in such as RD 17029, and USP Nos. 4,123,282, 3,994,732, 3,846,136 and 4,021,249.

In addition to such toning agents, couplers disclosed in such as JP-A No. 11-288057 and European Patent No. 1,134,611 A2, and leuco dyes which will be detailed below can be utilized to control the tone. In particular, it is preferable to utilize a coupler or a leuco dye for fine tuning of the tone.

In a silver salt photothermographic dry imaging material of this invention, the tone can be adjusted by use of a leuco dye as described above. A leuco dye is preferably any compound which is colorless or slightly colored and is oxidized to be a colored state when being heated at a temperature of approximately 80 - 200°C for approximately 0.5 - 30 seconds, and any leuco dye, which is oxidized by a oxidized substance of the above-described reducing agent to form a dye, can be also utilized. A compound which is provided with pH sensibility and can be oxidized into a colored state is useful.

Typical leuco dyes suitable to be utilized in this invention are not specifically limited, and include such as bisphenol leuco dyes, phenol leuco dyes, indoaniline leuco dyes, acrylated azine leuco dyes, phenoxazine leuco dyes, phenodiazine leuco dyes and phenothiazine leuco dyes. Further, useful are leuco dyes disclosed in such as USP Nos. 3,445,234, 3, 846, 136, 3,994,732, 4,021,249, 4,021,,250, 4,022,617, 4,123,282, 4,368,247 and 4,461,681; and JP-A Nos. 50-36110, 59-206831, 5-204087, 11-231460, 2002-169249 and 2002-236334.

To adjust the tone to a predetermined value, it is preferable to utilize leuco dyes of various colors alone or in combination of plural types. In this invention, to prevent change of tone (particularly, being yellowish) depending on the using amount and using ratio thereof in the case of employing a highly active reducing agent, or to prevent the image particularly at a density portion as high as not lower than 2.0 from having excessive reddish tone in the case of employing micro-particle silver halide, it is preferable to utilize leuco dyes which provide yellow color and cyan color in combination and adjust the using amount.

The color density is preferably controlled depending on the tone of developed silver itself. In this invention, it is preferable to be colored so as to have an optical reflection density of 0.01 - 0.05 or a transparent density of 0.005 to 0.50 and to adjust the tone of an image in a preferable range described above. The total of the maximum densities at the maximum absorption wavelength of color images formed by leuco dyes is preferably set to 0.01 - 0.50, more preferably 0.02 - 0.30 and most preferably 0.03 - 0.10.

[Yellow Coloring Leuco Dye]

In a silver salt photothermographic dry imaging material of this invention, the tone can be adjusted by use of leuco dye as described above. In this invention, a color image forming agent which increases absorbance at 360 - 450 nm by being oxidized is specifically preferably utilized as yellow color leuco dyes. As these color image forming agents, those represented by following Formula (YA) are specifically preferred.

Formula (YA)

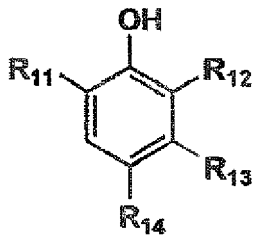

wherein, $R_{11}$ is a substituted or unsubstituted alkyl group, and $R_{12}$ is a hydrogen atom, a substituted or unsubstituted alkyl group, or a substituted or unsubstituted acylamino group, however, $R_{11}$ and $R_{12}$ are never a 2-hydroxyphenylmethyl group. $R_{13}$ is a hydrogen atom or a substituted or unsubstituted alkyl group, and $R_{14}$ is a group which can be substituted on a benzene ring.

In Formula (YA), $R_{11}$ is a substituted or unsubstituted alkyl group, however, $R_{11}$ is an alkyl group in the case of $R_{12}$ being a substituent other than a hydrogen atom. Said alkyl group is preferably an alkyl group having a carbon number of 1 - 30 and may be provided with a substituent.

Specifically, such as methyl, ethyl, butyl, octyl, i-propyl, t-butyl, t-octyl, t-pentyl, sec-butyl, cyclohexyl and 1-methyl-cyclohexyl are preferable, and groups being sterically not smaller than i-propyl (such as i-propyl, i-nonyl, t-butyl, t-amyl, t-octyl, cyclohexyl, 1-methylcyclohexyl and adamantyl) are preferable; among them, secondary or tertiary alkyl groups are preferable; and tertiary alkyl groups such as t-butyl, t-octyl and t-pentyl are specifically preferable. Substituents with which $R_{11}$ may be provided include such as a halogen atom, an aryl group, an alkoxy group, an amino group, an acyl group, an acyamino group, an alkylthio group, an arylthio group, a sulfonamide group, an acyloxy group, an oxycarbonyl group, a carbamoyl group, a sulfamoyl group, a sulfonyl group and a phosphoryl group.

$R_{12}$ is a hydrogen atom or a substituted or unsubstituted alkyl group or a substituted or unsubstituted acylamino group. Alkyl groups represented by $R_{12}$ are preferably alkyl groups having a carbon number of 1 - 30, and acylamino groups are preferably acylamino groups having a carbon number of 1 - 30. Among them, explanation of an alkyl group is similar to that of $R_{11}$ described above.

Acylamino groups represented by $R_{12}$ may be either substituted or unsubstituted, and specifically include such as an acetylamino group, an alkoxy acetylamino group and an aryloxy acetylamino group. $R_{12}$ is preferably a hydrogen atom or an unsubstituted alkyl group having a carbon number of 1-24, and specifically include such as methyl, i-propyl and t-butyl. Further, $R_{11}$ and $R_{12}$ are never a 2-hydroxyphenylmethyl group.

$R_{13}$ is a hydrogen atom or a substituted or unsubstituted alkyl group. Alkyl groups preferably have a carbon number of 1 - 30, the explanation of the alkyl groups is similar to that of aforesaid $R_{11}$. $R_{13}$ is preferably a hydrogen atom or an unsubstituted alkyl group having a carbon number of 1- 24, and specifically include such as methyl, i-propyl and t-butyl. Further, at least one of $R_{12}$ and $R_{13}$ is preferably a hydrogen atom.

$R_{14}$ represents a group which is capable of substitution on a benzene ring, and for example, are groups similar to those explained as substituent $R_{14}$ in aforesaid Formula (RD1). $R_{14}$ is preferably an alkyl group having a carbon number of 1 - 30, or an oxycarbonyl group having a carbon number of 2 - 30, and more preferably an alkyl group having a carbon number of 1 - 24, which may be substituted or unsubstituted. Substituents to an alkyl group include such as an aryl group, an amino group, an alkoxy group, an oxycarbonyl group, an acylamino group, an acyloxy group, an imido group and an ureido group, and more preferable are an aryl group, an amino group, an oxycarbonyl group and an alkoxy group. These substituents of an alkyl group may be further substituted by these substituents.

Next, bisphenol compounds represented by following Formula (YB), which are specifically preferably utilized among compounds represented by general (YA), will be explained.

Formula (YB)

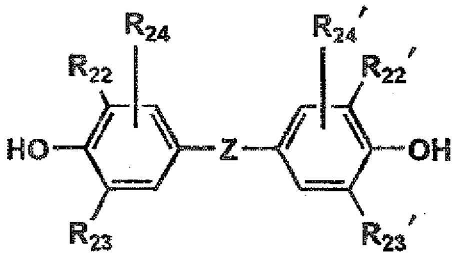

wherein, Z is -S- or -C ($R_{21}$) ($R_{21'}$)-, and $R_{21}$ and $R_{21'}$ each are a hydrogen atom or a substituent.

Substituents represented by $R_{21}$ and $R_{21'}$ include similar groups to substituents listed up in the explanation of $R_1$ in aforesaid Formula (RD1). $R_{21}$ and $R_{21'}$ are preferably a hydrogen atom or an alkyl group.

$R_{22}$, $R_{23}$, $R_{22'}$ and $R_{23'}$ each are a substituent, and the substituents include groups similar to substituents listed up as $R_2$ and $R_3$ in Formula (RD1).

$R_{22}$, $R_{23}$, $R_{22'}$ and $R_{23'}$ are preferably an alkyl group, an alkenyl group, an alkynyl group, an aryl group and a heterocyclic group, however, more preferably an alkyl group. Substituents on the alkyl group include groups similar to substituents listed up in the explanation of substituents in Formula (RD1).

$R_{22}$, $R_{23}$, $R_{22'}$ and $R_{23'}$ are more preferably tertiary alkyl groups such as t-butyl, t-pentyl, t-octyl and 1-methylcyclohexyl.

$R_{24}$ and $R_{24'}$ each are a hydrogen atom or a substituent, and the substituent includes groups similar to the substituents listed up in the explanation of $R_4$ in Formula (RD1).

Compounds represented by Formulas (YA) and (YB) include, for example, compounds (II-I) - (II-40) described in paragraphs "0032" - "0038" of JP-A No.2002-169249, and compounds (ITS-1) - (ITS-12) described in paragraph "0026" of European Patent No. 1,211,093.

In the following, specific examples of bisphenol compounds represented by Formulas (YA) and (YB) will be shown; however, this invention is not limited thereto.

(YA−1)

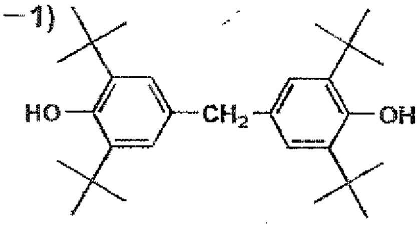

(YA−2)

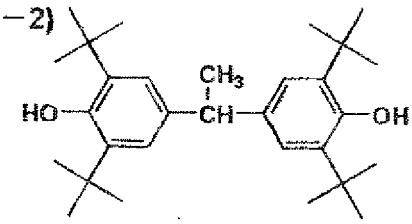

(YA−3)

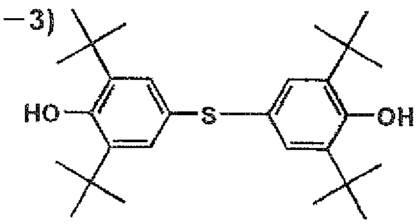

(YA−4)

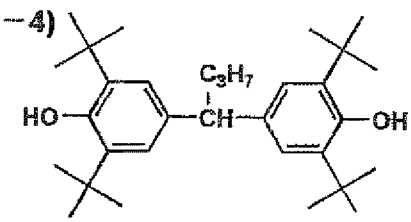

(YA-5)

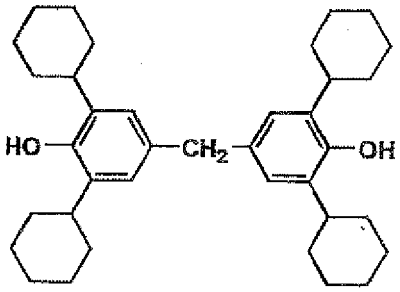

(YA-6)

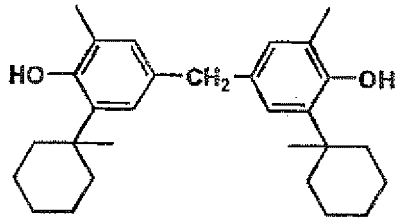

(YA-7)

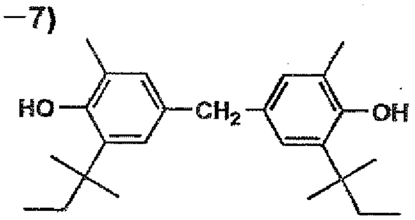

(YA-8)

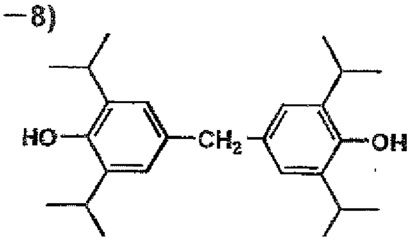

(YA-9)

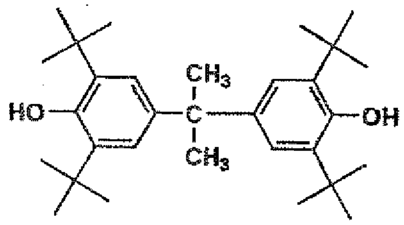

(YA-10)

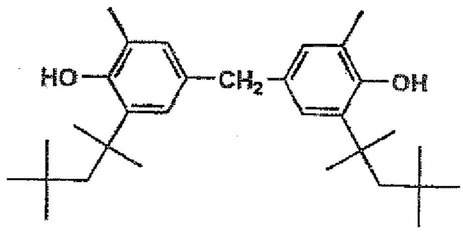

(YA-11)

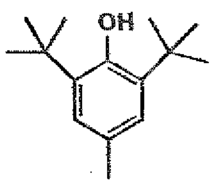

(YA-12)

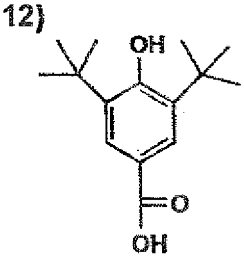

(YA-13)

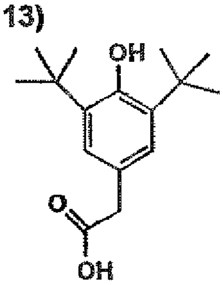

(YA-14)

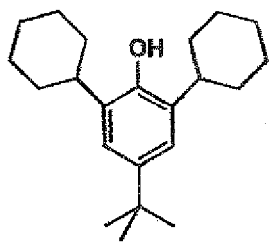

(YA-15)

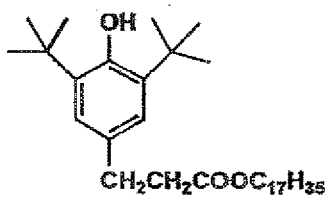

The addition amount of a compound represented by Formula (YA) (including hindered phenol compounds represented by Formula (YB)) is generally 0.00001 - 0.01 mol, preferably 0.0005 -0.01 mol and more preferably 0.001 - 0.008 mol, per 1 mol of silver.

Further, the addition ratio of a yellow coloring leuco dye against the total of reducing agents represented by aforesaid Formulas (RD1) and (RD2) is preferably 0.001 - 0.2 and more preferably 0.005 - 0.1 based on a mol ratio.

(Cyan Coloring Leuco Dye)

In a silver salt photothermographic dry imaging material of this invention, the tone can be adjusted also by use of cyan coloring leuco dye, other than the above-described yellow coloring leuco dye.

A leuco dye is preferably any compound which is colorless or slightly colored and is oxidized to be a colored state when being heated at a temperature of approximately 80 - 200 °C for approximately 0.5 - 30 seconds, and any leuco dye which is oxidized by an oxidized substance of a reducing agent to form a dye, can be also utilized. A compound which is provided with pH sensibility and can be oxidized into a colored state is useful.

In this invention, cyan coloring leuco dyes specifically preferably utilized are preferably color image forming agents which increase absorbance at 600 - 700 nm by being oxidized, and include compounds represented by Formulas (I) - (IV) described in JP-A Nos. 59-206831 (specifically, compounds having λmax in a range of 600 - 700 mm) and 5-204087 (specifically, compounds (1) - (18), described in paragraphs "0032" - "0037"), and compounds represented by Formulas 4 - 7 described in JP-A No. 11-231460 (specifically, compounds Nos. 1 - 79, described in paragraph "0105").

In this invention, cyan coloring leuco dyes, which are particularly preferably utilized, are represented by following Formula (CL).

Formula (CL)

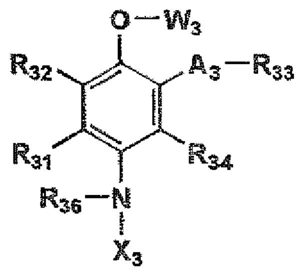

wherein, $R_{31}$ and $R_{32}$ are a hydrogen atom or a halogen atom; an alkyl group, an alkenyl group, an alkoxy group or a -NHCOR$_{30}$ group ($R_{30}$ is an alkyl group, an aryl group or a heterocyclic group), which may be substituted or unsubstituted; or groups which bond to each other to form an aliphatic hydrocarbon ring, an aromatic hydrocarbon ring or a heterocyclic ring. $A_3$ is a -NHCO- group, a -CONH- group or a -NHCONH- group, and $R_{33}$ is an alkyl group, an aryl group or a heterocyclic group, each of which may be substituted or unsubstituted.

Further, -$A_3$-$R_{33}$ may be a hydrogen atom. For example, -A3-R33 portion is a hydrogen atom, or $A_3$ is a -NHCO- group, a -CONH- group or a -NHCONH- group, and $R_{33}$ is an alkyl group, an aryl group or a heterocyclic group, each of which may be substituted or unsubstituted.

$W_3$ is a hydrogen atom, a -CONHR$_{35}$ group, a -COR$_{35}$ group or a -COOR$_{35}$ group ($R_{35}$ is an alkyl group, an aryl group or a heterocyclic group, which may be substituted or unsubstituted); and $R_{34}$ is a hydrogen atom, a halogen atom; or an alkyl group, an alkenyl group, an alkoxy group, a carbamoyl group or a nitrile group, each of which may be substituted or unsubstituted. $R_{36}$ is a -CONHR$_{37}$ group, a COR$_{37}$ group or a -COOR$_{37}$ group ($R_{37}$ is an alkyl group, an aryl group or a heterocyclic group, which may be substituted or unsubstituted). $X_3$ represents an aryl group or a heterocyclic

group which may be substituted or unsubstituted.

In Formula (CL), halogen atoms represented by $R_{31}$ and $R_{32}$ include such as a fluorine atom, a bromine atom and a chlorine atom; alkyl groups include alkyl groups having a carbon number of not more than 20 (such as a methyl group, an ethyl group, a butyl group and a dodecyl group), alkenyl groups include alkenyl groups having a carbon number of not more than 20 (such as a vinyl group, an allyl group, a butenyl group, a hexenyl group, a hexadienyl group, an ethenyl-2-propenyl group, a 3-butenyl group, a 1-methyl-3-propenyl group, a 3-pentenyl group and a 1-methyl-3-butenyl group), and alkoxy groups include alkoxy groups having a carbon number of not more than 20 (such as a methoxy group and an ethoxy group). Further, an alkyl group represented by $R_{30}$ in a -NHCOR$_{30}$ group includes alkyl groups having a carbon number of not more than 20 (such as a methyl group, an ethyl group, a butyl group and a dodecyl group), an aryl group includes groups having a carbon number of 6 - 20 such as a phenyl group and a naphthyl group, and a heterocyclic group includes such as a thiophene group, a furan group, an imidazole group, a pyrazole group and a pyrrole group. Alkyl groups represented by $R_{33}$ are preferably alkyl groups having a carbon number of not more than 20 and include such as a methyl group, an ethyl group, a butyl group and a dodecyl group; an aryl group is preferably an aryl group having a carbon number of 6 - 20 and includes such as a phenyl group and a naphthyl group; and a heterocyclic group includes such as a thiophene group, a furan group, an imidazole group, a pyrazole group and a pyrrole group.

In a -CONHR$_{35}$ group, a -COR$_{35}$ group or a -COOR$_{35}$ group, which is represented by $W_6$, an alkyl group represented by $R_{35}$ is an alkyl group having a carbon number of not more than 20, and includes such as a methyl group, an ethyl group, a butyl group and a dodecyl group; an aryl group is a group having a carbon number of 6 - 20 and includes such as a phenyl group and a naphthyl group; and a heterocyclic group includes such as a thiophene group, a furan group, an imidazole group, a pyrazole group and pyrrole group.

A halogen atom represented by $R_{34}$ includes such as a fluorine atom, a chlorine atom, a bromine atom and an iodine atom; an alkyl group includes a chain or cyclic alkyl group such as a methyl group, a butyl group, a dodecyl group and a cyclohexyl group; an alkenyl group includes an alkenyl group having a carbon number of not more than 20 (such as a vinyl group, an allyl group, a butenyl group, a hexenyl group, a hexadienyl group, an ethenyl-2-propenyl group, a 3-butenyl group, a 1-methyl-3-propenyl group, a 3-pentenyl group and a 1-methyl-3-butenyl group); an alkoxy group includes such as a methoxy group, a butoxy group and a tetradecyloxy group; and a carbamoyl group includes such as a diethylcarbamoyl group and a phenylcarbamoyl group. Further, a nitrile group is also preferable. Among them, more preferable are a hydrogen atom and an alkyl group. Aforesaid $R_{33}$ and $R_{34}$ may bond to each other to form a ring structure. The above-described group may be provided with a single substituent or a plural number of substituents. Typical substituents include a halogen atom (such as a fluorine atom, a chlorine atom and a bromine atom), an alkyl group (such as a methyl group, an ethyl group, a propyl group, a butyl group and a dodecyl group), a hydroxyl group, a cyano group, a nitro group, an alkoxy group (such as a methoxy grouop and an ethoxy group), an alkylsulfonamido group (such as a methylsulfonamido group and an octylsulfonamido group), an arylsulfonamido group (such as a phenylsulfonamido group and a naphthylsulfonamido group), an alkylsulfamoyl group (such as a butylsulfamoyl group), an arylsulfamoyl group (such as a phenylsulfamoyl group), an alkyloxycarbonyl group (such as a methoxycarbonyl group), an aryloxycarbonyl group (such as a phenyloxycarbonyl group), an aminosulfoneamido group, an acylamino group, a carbamoyl group, a sulfonyl group, a sulfinyl group, a sulfoxy group, a sulfo group, an aryloxy group, an alkoxy group, an alkylcarbonyl group, an arylcarbonyl group and an aminocarbonyl group.

$R_{30}$ or $R_{35}$ is preferably a phenyl group and more preferably a phenyl group provided with a plural number of halogen atoms and cyano groups as substituents.

In a -CONHR$_{37}$ group, a -COR$_{37}$ group and a -COOR$_{37}$ group, which is represented by $R_{36}$; an alkyl group represented by $R_{37}$ is preferably an alkyl group having a carbon number of not more than 20, and includes such as a methyl group, an ethyl group, a butyl group and a dodecyl group; an aryl group is preferably an aryl group having a carbon number of 6 - 20 and includes such as a phenyl group, a naphthyl group and a thienyl group; and a heterocyclic group includes such as thiophen, furyl, imidazolyl, pyrazolyl and pyrrolyl.

As a substituent, with which the group represented by $R_{37}$ can be provided, utilized can be substituents similar to those listed up in explanation of $R_{31}$ - $R_{34}$ in Formula (CL).

Aryl groups represented by $X_6$ include aryl groups having a carbon number of 6 - 20 such as phenyl and naphthyl, and heterocyclic groups include such as thienyl, furyl, imidazolyl, pyrazolyl and pyrrolyl.

A substituent with which a group represented by $X_3$ can be provided includes a substituent similar to those listed up in explanation of $R_{31}$ - $R_{34}$ in Formula (CL). A group represented by $X_3$ is preferably an aryl group or a heterocyclic group which are provided with an alkylamino group (such as a diethylamino group) at the para-position.

These groups may contain a photographically useful group.

In the following, specific examples of a cyan coloring leuco dye (LC) will be shown; however, a cyan coloring leuco dye utilized in this invention is not limited thereto.

(CA-1)

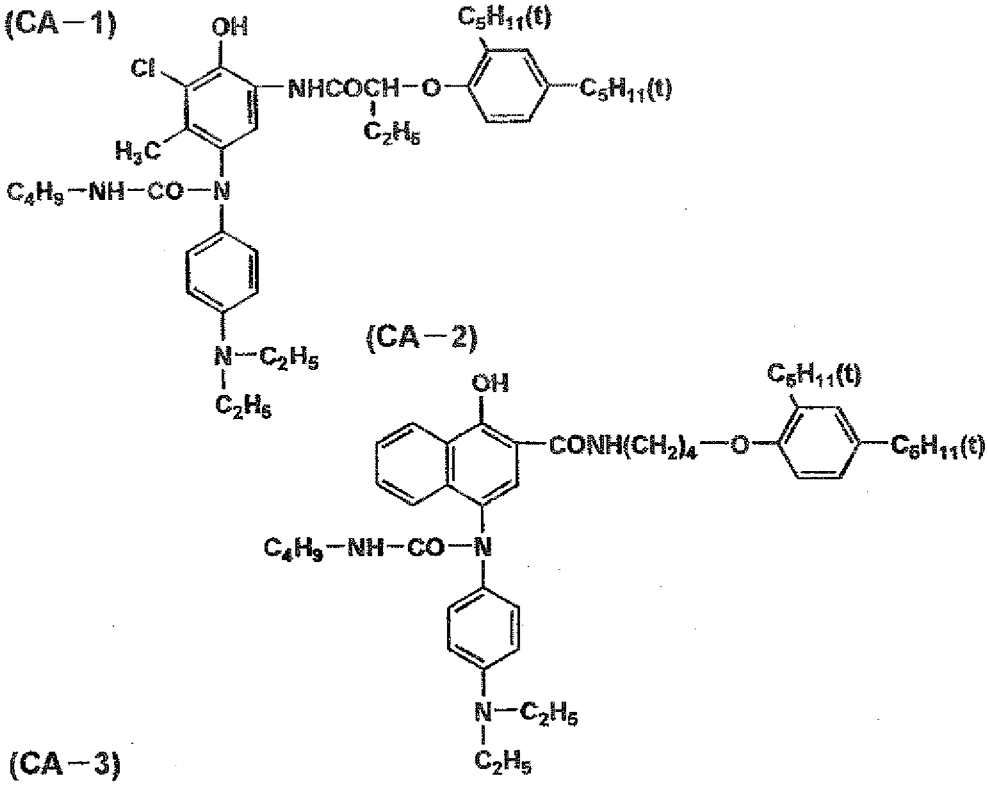

(CA-2)

(CA-3)

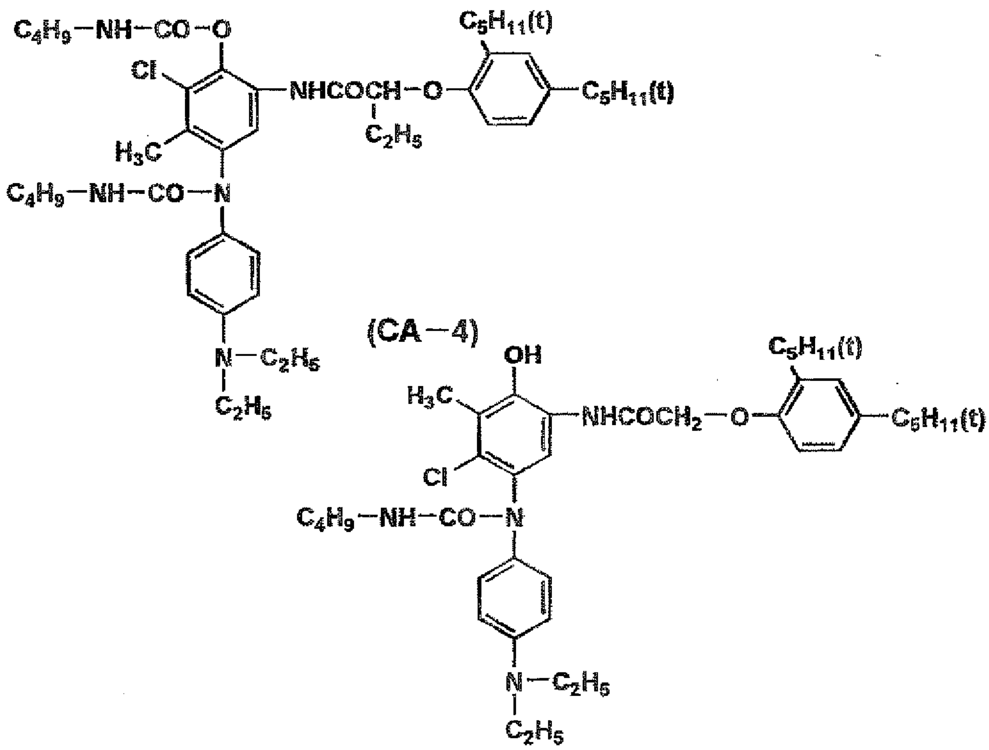

(CA-4)

(CA-5)

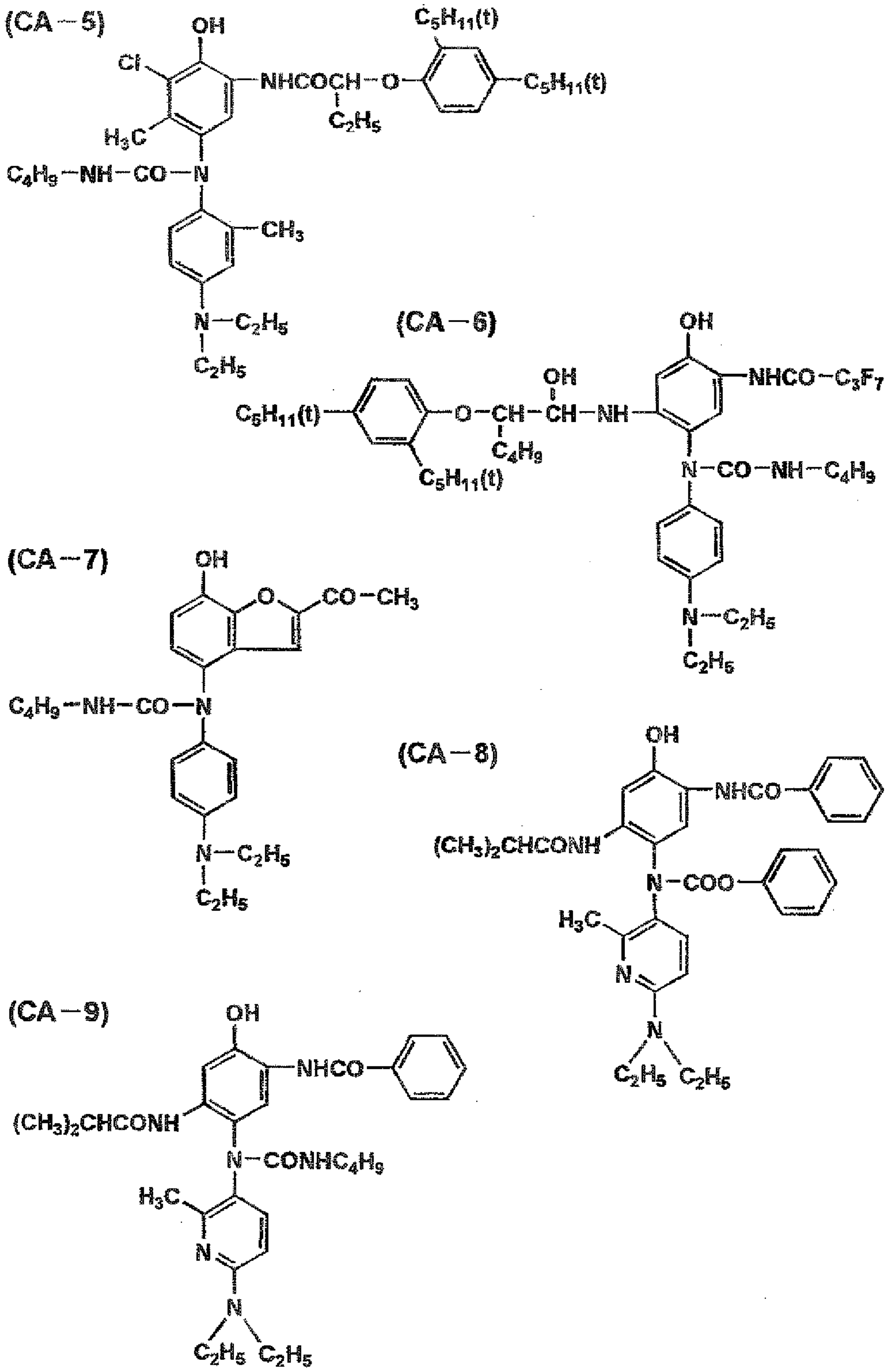

(CA-6)

(CA-7)

(CA-8)

(CA-9)

(CA-10)

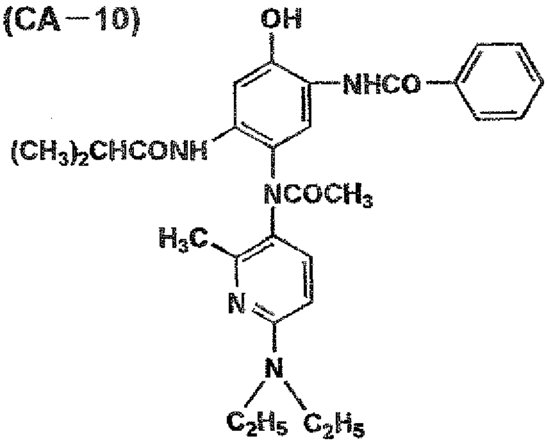

(CA-11)

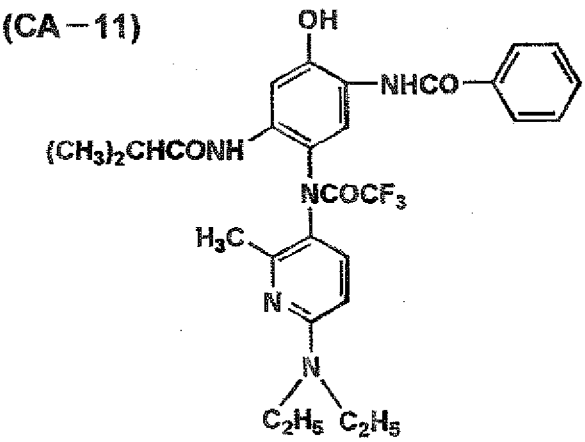

(CA-12)

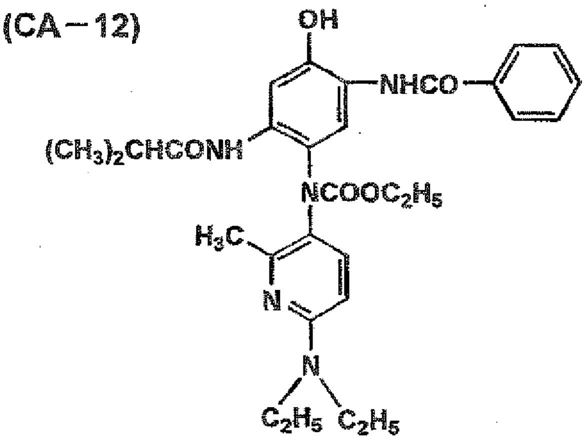

The addition amount of a cyan coloring leuco dye is generally 0.00001 - 0.05 mol/Ag 1 mol, preferably 0.0005 - 0.02 mol/Ag 1 mol and more preferably 0.001 - 0.01 mol/Ag 1 mol. The addition ratio of a cyan coloring leuco dye against the total of reducing agents represented by aforesaid Formulas (RD1) and (RD2) is preferably 0.001 - 0.2 and more preferably 0.005 - 0.1 based on a mol ratio.

In a silver salt photothermographic dry imaging material, the total of the maximum densities at a maximum absorption wavelength of a dye image formed by a cyan leuco dye is preferably 0.01 - 0.50, more preferably 0.02 - 0.30

and specifically preferably 0.03 - 0.10.

In this invention, it is possible to control further delicate tone by incorporating a magenta coloring leuco dye or a yellow coloring leuco dye in addition to the above-described cyan coloring leuco dye in combination.

Compounds represented by Formulas (YA) and (YB) and cyan coloring leuco dyes can be added in a similar manner to the addition method of a reducing agent represented by Formula (RD1), and can be incorporated in a coating solution to be incorporated in a photosensitive material by any method such as a solution form, an emulsified dispersion form and solid micro-particle dispersion form.

Compounds represented by Formulas (RD1), (RD2), (YA) and (YB), and a cyan coloring leuco dye are preferably added in a photosensitive layer (an image forming layer) containing organic silver salt; however, one may be contained in a photosensitive layer and the other in a photo-insensitive layer adjacent to said photesnsitive layer; or the both may be added in a photo-insensitive layer. Further, when a photosensitive layer is comprised of plural layers, each may be contained in a separate layer.

[Binder]

In a silver salt photothermographic dry imaging material, a binder can be incorporated in a photosensitive layer and a photoinsensitive layer according to this invention for various purposes.

A binder incorporated in a photosensitive layer according to this invention is capable of holding organic silver salt, silver halide grains, a reducing agent and other components; and a suitable binder is transparent or translucent and generally colorless, and includes natural polymers, synthetic polymer, copolymer and other media to form film, such as described in paragraph "0069" of JP-A No. 2001-330918.

Among them, specifically preferable examples include methacrylic acid alkyl esters, methacrylic acid aryl esters and styrenes. Among such polymer compounds, polymer having an acetal group is preferably utilized. And among polymer having an acetal group, polyvinyl acetal having an acetoacetal structure is more preferable, which includes polyvinyl acetal described in such as USP Nos. 2,358,836, 3,003,879 and 2,828,204; and British Patent No. 771.155.

As polymer having an acetal group, compounds represented by Formula (V) described in paragraph "150" of JP-A 2002-287299 are specifically preferable.

A preferable binder for a photosensitive layer according to this invention is polyacetals, and polyvinyl butyral is specifically preferable to be utilized as the primary binder. The primary binder refers to "a state wherein the above-described polymer occupies not less than 50 weight% of the total binder". Therefore, other polymer may be blended in a range of less than 50 weight%. Such polymer is not specifically limited provided being a solvent in which polymer of this invention is soluble. More preferably, listed are such as polyvinylacetate, polyacrylic resin, urethane resin.

A glass transition temperature (Tg) of a binder utilized in this invention is preferably 70 - 105 °C with respect to obtaining sufficient image density in image formation.

A binder of this invention has a number average molecular weight of 1,000 - 1,000,000 and preferably 10,000 - 500,000; and a polymerization degree of approximately 50 - 1,000.

Further, for an over-coat layer and an under-coat layer, specifically for a photo-insensitive layer such as a protective layer and a back coat layer, polymer having a higher softening point such as cellulose esters and specifically such as triacetyl cellulose and cellulose acetate butyrate is preferable. Herein, as described above, not less than two types of binders may be appropriately utilized in combination.

Such binders are utilized in a range of effectively functioning as a binder. The effective range can be easily determined by the manufacturer in the corresponding field. For example, as an index of the case of holding organic silver salt in a photosensitive layer (an image forming layer), the ratio of a binder to organic silver salt is preferably 15/1 - 1/2 (weight ratio) and specifically preferably 8/1 - 1/1. That is, the amount of a binder in a photosensitive layer is preferably 1.5 - 6 $g/m^2$ and more preferably 1.7 - 5 $g/m^2$. When it is less than 1.5 $g/m^2$, density in an unexposed portion may significantly increased, resulting in making the material unusable.

An organic gelatinizing agent may be contained in an image forming layer. Herein, an organic gelatinizing agent refers to a compound provided with a function to lose or decrease the fluidity of the system by being added into an organic liquid to provide the system with a yield value, similar to such as polyhydric alcohols.

A silver salt photothermographic dry imaging material of this invention can be also prepared via a manufacturing process to utilize a photosensitive layer coating solution containing water-based dispersed polymer latex. In this case, a water-based dispersion preferably occupies not less than 50 weight% of the total binder in a photosensitive layer coating solution. Further, in the case that polymer latex is utilized in preparation of a photosensitive layer, polymer arising from polymer latex preferably occupies not less than 50 weight% and more preferably not less than 70 weight%.

Herein, polymer latex is water-insoluble hydrophobic polymer being dispersed in a water-soluble dispersion medium as micro-particles. The dispersed state may be any of polymer being emulsified in a dispersion medium, being emulsion polymerized, being micellarly dispersed, or being provided with a hydrophilic structure partly in the polymer molecule to enable the molecular chain itself being molecularly dispersed.

As polymer latex utilized in a silver salt photothermographic dry imaging material of this invention, polymer latex of a so-called core/shell type can be employed in addition to ordinary polymer latex having a uniform structure. In this case, it may be preferable to change the Tg depending on the core and the shell.

The minimum film forming temperature (MFT) of polymer latex according to this invention is approximately preferably -30 - 90 °C and more preferably 0 - 70 °C. Further, to control the minimum film forming temperature, an aid for film formation may be added.

Polymer types utilized for polymer latex include such as acryl resin, vinyl acetate resin, polyester resin, polyurethane resin, rubber type resin, vinyl chloride resin, vinylidene chloride resin, polyolefin resin and copolymers thereof. Polymer may be either straight chain polymer, branched chain polymer or cross-linked polymer. Further, polymer may be either a homopolymer in which a single monomer has polymerized, or a copolymer in which at least two types of monomers have polymerized. In the case of a copolymer, either a random copolymer or a block copolymer may be utilized. The molecular weight of polymer is approximately generally 5,000 - 1,000,000 and preferably 10,000 - 100,000, based on a number average molecular weight. The dynamic strength of a photosensitive layer becomes insufficient when the molecular weight is too small, while the film forming property becomes deteriorated when the molecular weight is too large; both cases are not preferable.

The polymer latex is provided with an equilibrium water content at 25 °C·60% RH (relative humidity) of preferably 0.01 - 2 weight% and more preferably 0.01 - 1 weight%. The definition and measurement method of the equilibrium water content can be referred to, for example, "Polymer Technology Course 14, Polymer Material Test Methods (edited by The Society of Polymer Science, published by Chijin Shokan Co., Ltd.)". Specific examples of polymer latex include each of latex described in paragraph "0173" of JP-A 2002-287299. These polymers may be utilized alone or at least two types may be appropriately blended. The polymer type of polymer latex is preferably those containing a carboxylic acid component such as an acrylate or methacrylate component of approximately 0.1 - 10 weight%.

Further, a hydrophilic polymer such as gelatin, polyvinyl alcohol, methyl cellulose, hydroxypropyl cellulose, carboxymethyl cellulose and hydroxypropylmethyl cellulose may be appropriately added in a range of not more than 50 weight% against the total binder. The addition amount of these hydrophilic polymers is preferably not more than 30 weight% against the total binder in the aforesaid photosensitive layer.

With respect to the addition order of an organic silver salt and water-base dispersed polymer latex in preparation of a photosensitive layer coating solution, either of them may be added first or they may be simultaneously added, however, the polymer latex is preferably added later.

(Cross-linking Agent)

In a photosensitive layer according to this invention, a cross-linking agent, which can connect binders according to this invention each other by a cross-linking bond, can be incorporated. It has been known that film adhesion is improved and uneven development is decreased by employing a cross-linking agent against the above-described binder, however, there are also effects of depressing fog during storage and depressing generation of printout silver after development.

As a cross-linking agent, various cross-linking agents conventionally employed for photographic materials, such as an aldehyde type, an epoxy type, an ethyleneimine type, a vinylsulfon type, a sulfonic acid ester type, an acryloyl type, a carbodiimide type or silane compound type cross-linking agents, which are described in JP-A No. 50-69216, are utilized; and an isocyanate type, a silane compound type, epoxy compounds and acid anhydrides, which will be described below, are preferable.

Isocyanate type cross-linking agents are isocyanates provided with at least two isocyanate groups, and adducts thereof, and more specifically include aliphatic diisocyanates, aliphatic diisocyanates provided with a cyclic group, benzene diisocyanates, naphthalene didisocyanates, biphenyl isocyanates, diphenylmethane diisocyanates, triphenylmethane diisocyanates, triisocyanates, tetraisocyanates, adducts of these isocyanates, and adducts of these isoyanates with secondary or tertiary polyhydric alcohols. As specific examples, isocyanate compounds described in pp. 10 - 12 of JP-A 56-5535 can be utilized.

Herein, adducts of isocyanate with polyhydric alcohol improve inter-layer adhesion to be provided with a high capability of preventing generation of layer peeling, image slippage and bubbles. Such isocyanate may be incorporated in any portion of a heat developable material. For example, the cross-linking agent can be added in a support (in particular, in the case of a support being paper, can be contained in the sizing composition), or in any layer on the photosensitive layer side of a support such as a photosensitive layer, a surface protective layer, an intermediate layer, an anti-halation layer and an under coat layer, and can be added in one of or at least two of these layers.

Further, as an isocyanate type cross-linking agent applicable in this invention, compounds provided with thioisocyanate structures corresponding to the above-described isocyanates are also useful.

The using amount of the above cross-linking agent is in a range of generally 0.001 - 2 mol and preferably of 0.005 - 0.5 mol, per 1 mol of silver.

Examples of a silane compound include compounds represented by general (1) - (3) disclosed in JP-A

2001-264930.

Further, epoxy compounds utilizable as a cross-linking agent are those provided with at least one epoxy group, and there are no limitation with respect to the number of epoxy groups, molecular weight and others. The epoxy group is preferably contained in the molecule as a glycidyl group via an ether bond or an imino bond. Further, epoxy compounds may be any of such as monomer, oligomer and polymer, and the number of epoxy groups existing in a molecule is generally approximately 1 - 10 and preferably 2 - 4. In the case of an epoxy compound being a polymer, either a homopolymer or a copolymer may be employed, and the mean number average molecular weight Mn is specifically preferably in a range of approximately 2,000 - 20,000.

An acid anhydride utilized in this invention is a compound provided with at least one acid unhydride group represented by the following structural formula. There are no limitation with respect to the number of acid unhydride groups, the molecular weight and others, provided that having at least one such acid unhydride group.

-CO-O-CO-

The above-described epoxy compounds and acid unhydrides may be utilized alone or in combination of at least two types. The addition amount is not specifically limited, however, preferably in a range of $1 \times 10^{-6}$ - $1 \times 10^{-2}$ mol/m$^2$ and more preferably $1 \times 10^{-5}$ - $1 \times 10^{-3}$ mol/m$^2$. These epoxy compounds and acid anhydrides may be incorporated in any layer on the photosensitive layer side of a support such as a photosensitive layer, a surface protective layer, an intermediate layer, an anti-halation layer and an under coat layer and can be added in one of or in at least two of these layers.

[Silver Saving Agent]

In a photosensitive layer or a photo-insensitive layer according to this invention, a silver saving agent can be incorporated. A silver saving agent utilized in this invention refers to a compound which can reduce the required amount of silver to obtain a predetermined silver image density.

Various mechanisms of this reducing function may be considered, however, a compound provided with a function to improve covering power of developed silver is preferred. Herein, covering power of developed silver refers to an optical density per unit amount of silver. This silver saving agent can be incorporated in a photosensitive layer, a photo-insensitive layer or in the both of the layers. Preferable examples of a silver saving layer include hydrazine derivative compounds, vinyl compounds, phenol derivatives, naphthol derivatives, quaternary onium compounds and silane compounds. Specific examples include silver saving agents disclosed in paragraphs "0195" - "0235" of JP-A 2003-270755.

Specifically preferable silver saving agents according to this invention are compounds represented by the following Formulas (SE1) and (SE2).

Formula (SE1) $Q_1$-NHNH-$Q_2$

In the Formula $Q_1$ is an aromatic group or a heterocyclic group which bonds to -NHNH-$Q_2$ via a carbon atom, and $Q_2$ is a carbamoyl group, an acyl group, an alkoxycarbonyl group, an aryloxycarbonyl group, a sulfonyl group or a sulfamoyl group.

An aromatic group or a heterocyclic group represented by $Q_1$ in Formula (SE1) is preferably a 5 - 7 member unsaturated ring. Preferable examples include each ring of benzene, pyridine, pyrazine, pyrimidine, pyridazine, 1,2,4-triazine, 1,3,5-triazine, pyrrole, imidazole, pyrazole, 1,2,3-triazole, 1,2,4-triazole, tetrazole, 1,3,4-thiazole, 1,2,4-thiazole, 1,2,5-thiazole, 1,3,4-oxathiazole, 1,2,4-oxathiazole, 1,2,5-oxathiazole, thiazole, oxazole, isothiazole, isooxazole and thiophene; and further also preferable are condensed rings in which these rings are condensed each other.

Formula (SE2)

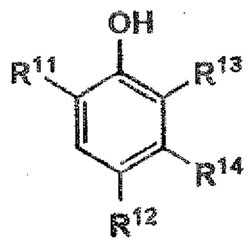

In the formula, $R^{11}$ is preferably an alkyl group, an acyl group, a sulfonamido group, an alkoxycarbonyl group or a carbamoyl group. $R^{12}$ is a hydrogen atom, a halogen atom, an alkyl group, an alkoxy group, an aryloxy group, an alkylthio group, an arylthio group, an acyloxy group or a carbonic acid ester group. $R^{13}$ and $R^{14}$ each are a group capable of substitution on a benzene ring. $R^{13}$ and $R^{14}$ may bond to each other to form a condensed ring.

In Formula (SE2), when $R^{13}$ and $R^{14}$ connect to each other to form a condensed ring, the condensed ring is specifically preferably a naphthalene ring. When Formula (SE2) is a naphthol type compound, $R^{11}$ is preferably a carbamoyl group. Among them, a benzoyl group is specifically preferable. $R^{13}$ is preferably an alkoxy group or an aryloxy group, and specifically preferably an alkoxy group.

There was a problem of increase of density unevenness under a low humidity condition when a conveying speed is increased to not less than 33 mm/sec to shorten the processing time. With respect to this problem, significant improvement has been made by use of a highly active reducing agent (a compound of RD1a), however, density unevenness has been greatly decreased by further utilizing a compound of Formula (SE1) or (SE2) in combination.

In the following, specific examples of preferable development accelerators of this invention will be listed; however, this invention is not limited thereto.

(SE1-1)

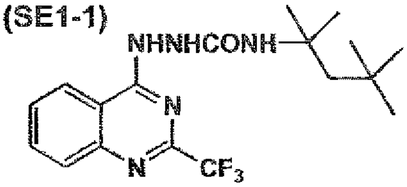

(SE1-2)

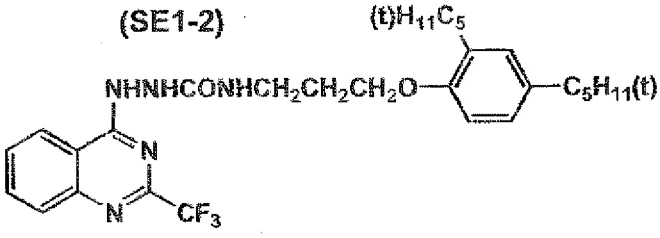

(SE1-3)

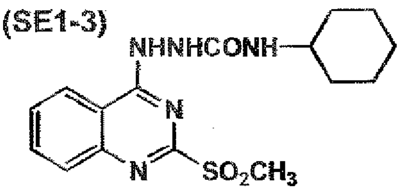

(SE1-4)

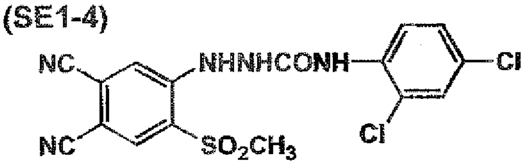

(SE1-5)

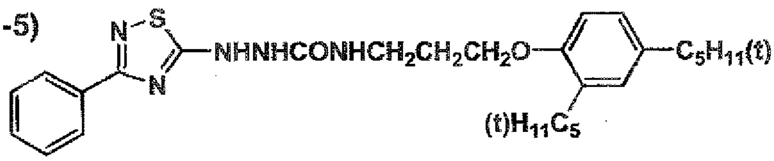

(SE2-1)

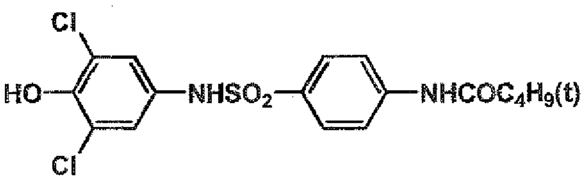

(SE2-2)

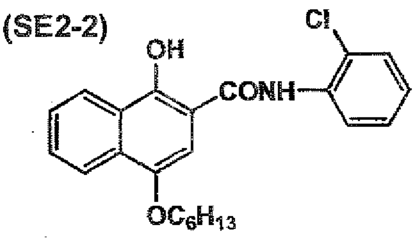

(SE2-3)

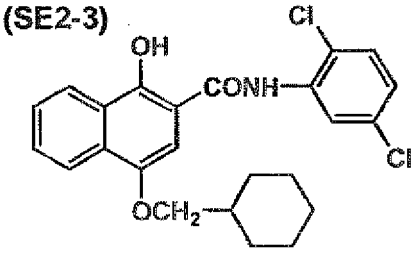

(SE2-4)

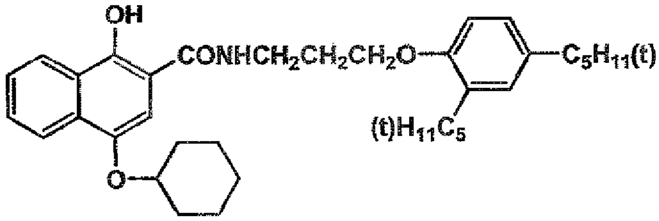

(SE2-5)

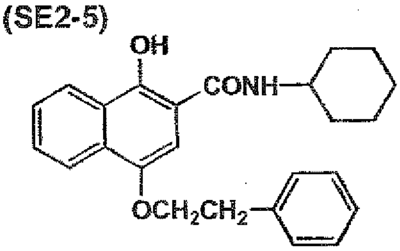

(SE2-6)

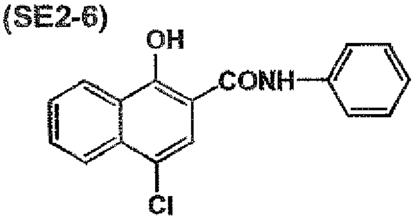

(SE2-7)

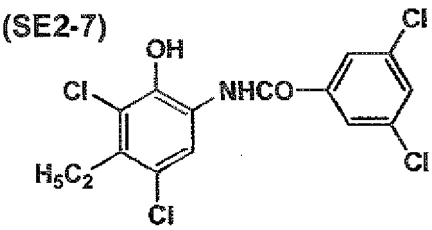

(Thermal Solvent)

A thermal solvent is preferably contained in a silver salt photothermographic dry imaging material of this invention. Herein, a thermal solvent is defined as a material which can lower the heat development temperature of a silver salt photothermographic dry imaging material containing a thermal solvent by not less than 1 °C compared to a silver salt photothermographic dry imaging material containing no thermal solvent. It is more preferably a material being able to lower the heat development temperature by not less than 2 °C and specifically preferably by not less than 3 °C. For example, when a photothermographic dry imaging material containing a thermal solvent is A and a photothermographic dry imaging material containing no thermal solvent is B, a thermal solvent is defined with respect to the case, in which the heat development temperature to obtain the density, which is obtained by exposing B and processing B at a heat development temperature of 120 °C and a heat development time of 20 seconds, by photothermographic dry imaging material A with the same exposure amount and the same heat development time becomes not higher than 119 °C.

A thermal solvent is provided with a polar group as a substituent and is preferably represented by Formula (TS), however, is not limited thereto.

Formula (TS) $(Y)_nZ$

In Formula (TS), Y is an alkyl group, an alkenyl group, an alkynyl group, an aryl group or a heterocyclic group Z is a group selected from a hydroxyl group, a carboxy group, an amino group, an amido group, a sulfonamido group, a phosphoric acid amide group, a cyano group, an imido group, an urido group, a sulfoxide group, a sulfone group, a phosphine group, a phosphinoxide group or a nitrogen-containing heterocyclic group. n is an integer of 1 - 3; n is 1 when Z is a monovalent group; and n is identical to the valence of Z when Z is a group of not less than two valences. Plural number of Y may be same or different when n is not less than 2.

Y may be further provided with a substituent, which may be a group represented by Z. Y will be further detailed. In Formula (TS), Y is a straight chain, branched chain or cyclic alkyl group (having a carbon number of preferably 1 - 40, more preferably 1 -30 and specifically preferably 1 -25, and includes such as methyl, ethyl, n-propyl, iso-propyl, sec-butyl, t-butyl, t-octyl, n-amyl, t-amyl, n-dodecyl, n-tridecyl, octadecyl, icosyl, docosyl, cyclopentyl and cyclohexyl), an alkenyl group (preferably having a carbon number of preferably 2 - 40, more preferably 2 - 30 and specifically preferably

2 - 25, and includes such as vinyl. allyl, 2-butenyl and 3-pentenyl), an aryl group (preferably having a carbon number of preferably 6 - 40, more preferably 6 - 30 and specifically preferably 6 - 25, and includes such as phenyl, P-methylphenyl and naphthyl), a heterocyclic group (preferably having a carbon number of preferably 2 - 20, more preferably 2 - 16 and specifically preferably 2 - 12, and includes such as pyridyl, pyradyl, imidazoyl and pyrrolidyl). These substituents may be further substituted by other substituent. Further, these substituents may form a ring by bonding to each other.

Y may be further provided with a substituent, and examples of the substituent include the substituents described in "0015" of JP-A 2004-21068. The reason why development becomes active by utilizing a thermal solvent is considered that a thermal solvent is fused at near development temperature to become compatible with substances related to development, which enables a reaction at a lower temperature compared to the case without a thermal solvent. Since heat development is a reducing reaction, in which carboxylic acid and a silver ion transporting substance, having a relatively high polarity, participate, it is preferable to form a reaction field provided with a suitable polarity by a thermal solvent having a polar group.

A melting point of a thermal solvent preferably utilized in this invention is not lower than 50°C and not higher than 200 °C, and more preferably is not lower than 60 °C and not higher than 150 °C. Such as the purpose of this invention, in a heat developable photosensitive material which regards stability against outer environment such as image storage stability as important, preferred is a thermal solvent having a melting point of not lower than 100 °C and not higher than 150 °C.

Specific examples of a thermal solvent include compounds described in "0017" of JP-A 2004-21068 and compounds described in "0027" of US Patent Application Publication No. 2002/0025498; that is, compounds MF-1 - MF-3, MF-6, MF-7, MF-9 - MF-12 and MF-15 - MF-22.

The addition amount of a thermal solvent in this invention is preferably 0.01 - 5.0 g/$m^2$, more preferably 0.05 - 2.5 g/$m^2$ and furthermore preferably 0 .1 - 1.5 g/$m^2$. A thermal solvent is preferably incorporated in a photosensitive layer. Further, the above-described thermal solvents may be utilized alone or in combination of at least two types. In this invention, a thermal solvent may be incorporated in a coating solution by any method such as a solution form, a emulsified dispersion form and a solid micro-particle dispersion form, to be contained in a photosensitive material.

Emulsifying dispersion methods well known include a method to mechanically prepare an emulsified dispersion by dissolution utilizing oil such as dibutylphthalate, tricresylphosphate, glyceryltriacetate or diethylphthalate, and an auxiliary solvent such as ethyl acetate and cyclohexanone.

Further, a solid micro-particle dispersion method includes a method in which a powder of a thermal solvent is dispersed in an appropriate solvent such as water by use of a ball mill, a vibration ball mill, a sand mill, a jet mill, a roller mill or ultrasonic wave to prepare a solid dispersion. Herein, at that time, a protective colloid (such as polyvinyl alcohol) and a surfactant (anionic surfactant such as sodium triisopropylnaphthalene sulfonate (a mixture of three compounds, isopropyl groups of which differ in substitution positions)) may be utilized. In the above-described mills, beads such as zirconia are generally utilized, and such as Zr dissolved from these beads may be mixed in the dispersion. The concentration depends on a dispersion conditions, however, is generally in a range of 1 - 1,000 ppm. It is not practically problematic, when a content of Zr in a photosensitive material is not more than 0.5 mg per 1 g of silver. An antiseptic agent (such as benzoisothiazolinone sodium salt) is preferably incorporated in a water dispersion.

[Antifoggant and Image Stabilizer]

In any of constituent layers of a silver salt photothermographic dry imaging material of this invention, an antifoggant to prevent fog generation during storage before heat development and an image stabilizer to prevent image deterioration after heat development are preferably incorporated.

Antifoggants and image stabilizers employed in a silver salt photothermographic dry imaging material of this invention will now be explained.

Since a reducing agent provided with a proton such as bisphenols and sulfonamide phenols as a reducing agent according to this invention is utilized, it is preferred to incorporate a compound which is able to stabilize these hydrogen and inactivate a reducing agent resulting in prevention of a reaction to reduce silver ion. Further, it is preferable to incorporate a compound which is capable of oxidation bleaching of a silver atom or metal silver (silver cluster) generated during storage of raw film or images. Specific examples provided with these functions include biimidazolyl compounds, iodonium compounds and compounds capable of releasing a halogen atom as an active species, which are described in paragraphs "0096" - "0128" of JP-A 2003-270755.

Further, preferable examples of an antifoggant and an image stabilizer include such as polymer provided with at least one repeating unit of monomer having a halogen releasing group such as disclosed in JP-A 2003-91054, vinyl sulfones and/or β-halosulfones described in paragraph "0013" of JP-A 6-208192, and a vinyl type restrainer provided with an electron attracting group described in Japanese Patent Application No. 2004-234206.

When a reducing agent utilized in this invention is provided with a hydroxyl group (-OH) and particularly is bisphenols, it is preferable to utilize a non-reducing compound, which is provided with a group capable of forming a

hydrogen bond with these groups, in combination. Specific examples of a specifically preferable hydrogen bonding compound include such as compounds (II-1) - (11-40) described in paragraphs "0061" - "0064" of JP-A 2002-90937.

Further, on the other hand, as an antifoggant and an image stabilizer, many compounds, which can release a halogen atom as an active species, are known. Specific examples of compounds generating an active halogen atom include compounds represented by general Formula (9) described in "0264" - "0271" of JP-A 2002-287299.

The addition amount of these compounds is preferably in a range which does not substantially cause a problem of increase of print out silver due to generation of silver halide by a reaction of halogen, which will be released from said compound, with silver ion. Specific examples of compounds generating an active halogen atom include, in addition to compounds described in the above-described Patent Publication, compounds (III-1) - (III-23) described in paragraphs "0086" - "0087" of JP-A 2002-169249, compounds 1-1a - 1-10 and 1-2a 1-20 described in paragraphs "0031" - "0034", and compounds 2a - 2z, 2aa - 211 and 2-1a - 2-1f described in paragraphs "0050" - "0056", of JP-A 2003-50441, compounds 4-1 - 4-32 described in paragraphs "0055" - "0058"" and compounds 5-1 - 5-10 described in paragraphs "0069" - "0072", of JP-A 2003-91054.

Antifoggants preferably utilized in this invention include, for example, example compounds a - j described in paragraph "0012" of JP-A 8-314059, thiosulfonate ester A - K described in paragraph "0028" of JP-A 7-206797, example compounds (1) - (44) described in from p.44 of JP-A 55-140833, compounds (I-1) - (1-6) described in paragraph "0063" and compounds (C-1) - (C-3) described in paragraph "0066", of JP-A 2001-13627, compounds (III-1) - (III-108) described in paragraph "0027" of JP-A 2002-90937, compounds VS-1 - VS-7 and compounds HS-1 - HS-5 described in paragraph "0013" of JP-A 6-208192 as compounds of vinyl sulfones and/or β-halosulfones, compounds KS-1 - KS-8 described in JP-A 2000-330235 as sulfonyl benzotriazole compounds, PR-01 - PR-08 described in Japanese Translation of PCT International Application Publication No. 2000-515995 as substituted propene nitril compounds, and compounds (1)-1 - (1)-132 described in paragraphs "0042" - "0051" of JP-A 2002-207273.

At least 0.001 mol of the above-described antifoggant is generally utilized against 1 mol of silver. The compound is utilized in a range of generally 0.01 - 5 mol and preferably 0.02 - 0.6 mol, against 1 mol of silver.

Herein, other than the above described compounds, in a silver salt photothermographic dry imaging material of this invention, various types of compounds, which are conventionally known as an antifoggant, may be contained, however, they may be either compounds capable of generating a reaction active species similar to the aforesaid compound or compounds having a different antifogging mechanism. For example, listed are compounds described in USP Nos. 3,589,903, 4,546,075 and 4,452,885, JP-A 59-57234, USP Nos. 3,874,946 and 4,756,999, JP-A Nos. 9-288328 and 9-90550. Further, other antifoggants include compounds described in USP No. 5, 028, 523, European Patent Nos. 600,587, 605, 981 and 631,176.

(Toning Agent)

A silver salt photothermographic dry imaging material of this invention forms a photographic image by heat development process, and is preferably contain a toning agent (a toner) to appropriately adjust tone of silver in a state of generally being dispersed in a (organic) binder matrix.

Examples of suitable toning agents utilized in this invention are disclosed in RD 17029, USP Nos. 4,123,282, 3,994,732, 3,846,136 and 4,021,249, and include the following.

Listed are imides (such as succinimide, phthalimide, naphthalimide, N-hydroxy-1,8-naphthalimide), mercaptanes (such as 3-mercapto-1,2,4-triazole), phthalazine derivatives or metal salts thereof (such as phthalazinone, 4-(1-naphthyl)phthalazinone, 6-chlorophthalazinone, 5,7-dimethyloxyphthalazinone and 2,3-dihydro-1,4-phthalazinedione), combinations of phthalazine and phthalic acids (such as phthalic acid, 4-methylphthalic acid, 4-nitrophthalic acid and tetrachlorophthalic acid), combinations of phthalazine with at least one compound selected from maleic acid anhydride; and phthalic acid, 2,3-naphthalene dicarboxylic acid or o-phenylenoic acid derivatives and anhydrides thereof (such as phthalic acid, 4-methyl phthalic acid, 4-nitrophtahlic acid and tetrachloro phthalic acid anhydride). Specifically preferable toner is phthalazinone, or a combination of phtahlazine with phthalic acids or phthalic acid anhydrides.

(Fluorine-Type Surfactant)

In this invention, to improve film conveying characteristics in a laser imager (heat development apparatus) and environmental adaptability (minimum accumulation in a humane body), a fluorine-type surfactant represented by aforesaid Formula (SF) is preferably utilized.

Formula (SF)

(Rf-(L)n-)p-(Y)m-(A)q

In the formula, Rf is a substituent containing a fluorine atom; L is a fluorine atom or a divalent connecting group;

Y is a (p + q)-valent connecting group containing no fluorine atom; A is an anionic group or salt thereof; n and m are 0 or 1; p is an integer of 1 - 3; and q is an integer of 1 - 3. However, n and m are never simultaneously 0, when q is 1.

In the aforesaid formula, Rf is a substituent containing a fluorine atom, and said substituent containing a fluorine atom includes, for example, a fluoroalkyl group having a carbon number of 1 - 25 (such as a trifluorometyl group, a trifluoroethyl group, a perfluoroethyl group, a perfluorobutyl group, a perfluorooctyl group, a perfluorododecyl group and a perfluorooctadecyl group), or a fluoroalkenyl group (such as a perfluoropropenyl group, a perfluorobutenyl group, a perfluorononenyl group and a perfluorododecenyl group). Rf is preferably provided with a carbon number of 2 - 8 and more preferably of 2 - 6. Further, Rf is preferably provided with a fluorine atom number of 2 - 12 and more preferably of 3 - 12.

L is a divalent connecting group having no fluorine atom, and said divalent connecting group having no fluorine atom includes, for example, an alkylene group (such as a methylene group, an ethylene group and a butylene group), an alkyleneoxy group (such as a methyleneoxy group, an ethyleneoxy group and a butylenesoxy group), an oxyalkylene group (such as an oxymethylene group, an oxyethylene group and an oxybutylene group), an oxyalkyleneoxy group (such as an oxymethyleneoxy group, an oxyethyleneoxy group and an oxyehtyleneoxyethyleneoxy group), a phenylene group, an oxyphenylene group, a phenyleneoxy group, an oxyphenyloxy group or combination groups thereof.

A is an anionic group or salt thereof and includes carboxylic acid or salt thereof (sodium salt, potassium salt and lithium salt), sulfonic acid or salt thereof (sodium salt, potassium salt and lithium salt), sulfuric acid half ester or salt thereof (sodium salt, potassium salt and lithium salt) and phosphoric acid or salt thereof (such as sodium salt and potassium salt).

Y is a (p + q) valent connecting group containing no fluorine atom, and, for example, 3- or 4-valent connecting group containing no fluorine atom includes atomic groups constituted of a nitrogen atom or a carbon atom as a center atom. n1 is an integer of 0 or 1 and is preferably 1.

Fluorine-type surfactants represented by Formula (SF) can be prepared by further introducing an anionic group (A) into a compound prepared by an addition reaction or a condensation reaction of an alkyl compound having a carbon number of 1 - 12 introduced with a fluorine atom (a compound provided with such as a trifluoromethyl group, a pentafluoroethyl group, a perfluorobutyl group, a perfluorooctyl group and a perfluorooctadecyl group), an alkenyl compound (a compound provided with such as a perfluorohexenyl group and a perfluorononenyl group), with an alkanol compound having a 3 - 6 valency without being introduced with a fluorine atom and an aromatic compound or a hetero compound having 3 - 4 hydroxyl groups, by such as sulfuric acid esterification.

The above-described alkanol compounds having 3 - 6 valency include such as glycerin, pentaerithritol, 2-methl-2-hydroxymethyl-1,3-propanediol, 2,4-dihydroxy-3-hydroxymethylpentene, 1,2,6-hexatriol, 1,1,1-tris(hydroxymethyl) propane, 2,2-bis(butanol)-3-aliphatic triol, tetramethirolmethane, D-sorbitol, xylitol and D-mannitol.

The above-described aromatic compounds and hetero compounds, which are provided with 3 - 4 hydroxyl groups, include such as 1,3,5-trihydroxybenzene and 2,4,6-trihydroxypyridine.

Preferable specific examples of fluorine-type surfactants represented by Formula (SF) will be shown below.

SF-1

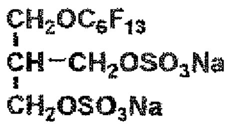

SF-2

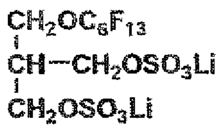

SF-3

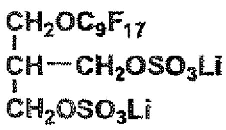

SF-4

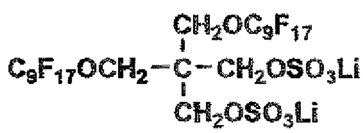

SF-5

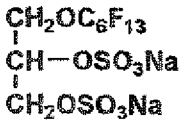

SF-6

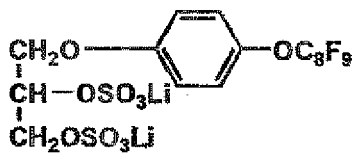

SF-7

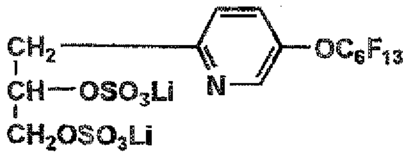

SF-8

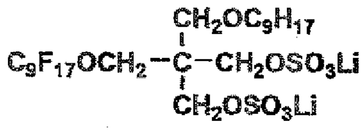

SF-9

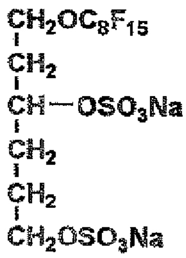

SF-10

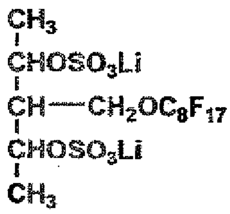

SF-11

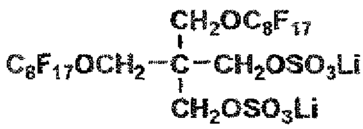

SF-12

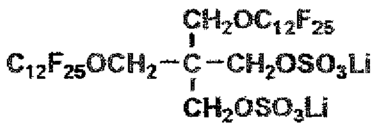

SF-13

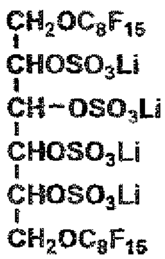

SF-14

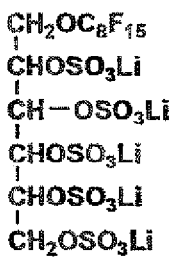

SF−15

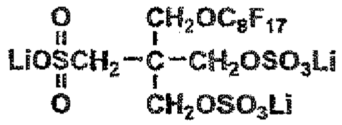

SF−16

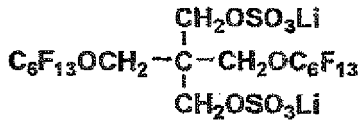

SF−17

$LiO_3S-C_3F_6-SO_3Li$

SF−18

$LiO_3S-C_4F_8-SO_3Li$

SF−19

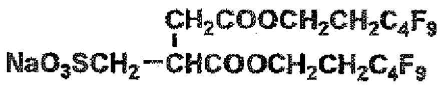

SF−20

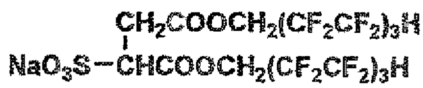

SF−21

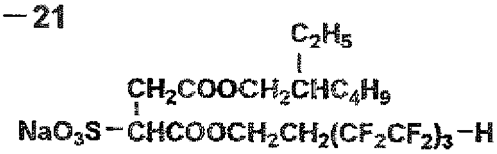

A fluorine-type surfactant represented by Formula (SF) of this invention can be added into a coating solution according to a method well known in the art. That is, it can be added by dissolving in such as a polar solvent like alcohols such as methanol and ethanol, ketones such as methyl ethyl ketone and acetone, dimethylsulfoxide and dimethylfolmamide. Further, it can be added also by being dispersed as micro-particles having a grain size of not more than 1 μm in water or an organic solvent by means of sand mill dispersion, jet mill dispersion, ultrasonic dispersion and homogenizer dispersion. Many technologies have been disclosed with respect to micro-particle dispersion, and dispersion can be carried out according to these technologies. A fluorine-type surfactant represented by Formula (SF) is preferably incorporated in the outermost protective layer.

The addition amount of a fluorine-type surfactant represented by Formula (SF) of this invention is preferably $1 \times 10^{-8}$ - $1 \times 10^{-1}$ mol and more preferably $1 \times 10^{-5}$ - $1 \times 10^{-2}$ mol, per 1 $m^2$. When it is less than the aforesaid range, an antistatic property may not be obtained, while when over the aforesaid range, temperature dependence of an antistatic property may become large resulting in deterioration of storage stability under high humidity.

[Surface Physical Property Adjustment/Organic Solid Lubricant Particles]

A silver salt photothermographic dry imaging material is often accept unfavorable influence by contact of various apparatus with a heat developable photosensitive material or contact of heat developable photosensitive materials each other such as a photosensitive surface and a backing surface at the time of winding, unwinding and coveying of said photosensitive material in such as manufacturing processes of coating, drying and converting. For example, it is such as generation of abrasion on the surface of said photosensitive material and deterioration of conveying behavior of said photosensitive material in such as a developing apparatus.

Therefore, in a silver salt photothermographic dry imaging material, to prevent abrasion on the surface and deterioration of a conveying behavior, it is preferable to incorporate such as a lubricant and a mating agent in any constituent layer of said material and particularly in the outermost layer in a support to adjust surface physical properties of said material.

In a silver salt photothermographic dry imaging material, it is preferable that organic solid lubricant particles having a mean grain size of 1 - 30 μm are contained in the outermost layer on a support and these organic solid lubricant

particles are dispersed by a polymer dispersant. Further, a melting point of said organic solid lubricant particles is preferably not lower than a heat development temperature, preferably not lower than 80 °C and more preferably not lower than 110 °C.

A organic solid lubricant particles utilized in a silver salt photothermographic dry imaging material is referably a compound which lowers the surface energy, and includes such particles formed by grinding polyethylene, polypropylene, polytetrafluoroethylene and copolymer thereof.

In the following, an example of organic solid lubricant particles comprising polyethylene and polypropylene will be shown; however, this invention is not limited thereto.

| | | [Melting point °C] |
|---|---|---|
| PW-1: | polytetrafluoroethylene | 321 |
| PW-2: | polypeopylene/polyethylene copolymer | 142 |
| PW-3: | polyethylene (low density) | 113 |
| PW-4: | polyethylene (high density) | 126 |
| PW-5: | polypropylene | 145 |

In a silver salt photothermographic dry imaging material of this invention, organic solid lubricant particles are preferably compounds represented by following Formula (6).

Formula (6)

$(R_{61})_{p6}$-$X_{61}$-$L_6$-$X_{62}$- $(R_{62})_{q6}$

In the formula, $R_{61}$ and $R_{62}$ each are an alkyl group, alkenyl group, an aralkyl group or an aryl group, which may be either substituted or unsubstituted, having a carbon number of 6 - 60; and plural number of $R_{61}$ and $R_{62}$ may be identical to or different from each other when p6 or q6 is not less than 2. $X_{61}$ and $X_{62}$ each are a divalent connecting group containing a nitrogen atom. $L_6$ is an alkyl group, alkenyl group, an aralkyl group or an aryl group, which may be either substituted or unsubstituted, having (p6 + q6) valences.

In compounds represented by aforesaid Formula (6), the total carbon number is not specifically limited; however, is generally not less than 20 and more preferably not less than 30. Examples of a substituent, with which an alkyl group, alkenyl group, an aralkyl group or an aryl group in the definition of $R_{61}$ and $R_{62}$ may be provided, include such as a halogen atom, a hydroxyl group, a cyano group, an alkoxy group, an aryl group, an alkylthio group, an arylthio group, an alkoxycarbonyl group, an aryloxycarbonyl group, an amino group, an acylamino group, a sulfonylamino group, an ureido group, a carbamoyl group, a sulfamoyl group, an acyl group, a sulfonyl group, a sulfinyl group, an ary group and an alkyl group. These groups may be further provided with a substituent. The preferable substituents are a halogen atom, a hydroxyl group, an alkoxy group, an alkylthio group, an alkoxycarbonyl group, an acylamino group, a sulfonylamino group, an acyl group and an alkyl group. The halogen atom is preferably a fluorine atom or a chloride atom.

The alkyl component in an alkoxy group, an alkylthio group and an alkoxycarbonyl group is identical to the alkyl group of $R_{62}$ which will be described later. The amino group of an acylamino group and a sulfonylamino group may be a N-substituted amino group and the substituent is preferably an alkyl group. A group, which bonds to the carbonyl group of an acyl amino group and an acyl group and the sulfonyl group of a sulfonylamino group, is an alkyl group or an aryl group, however, is preferably the aforesaid alkyl group .

$R_{61}$ and $R_{62}$ each are an alkyl group, alkenyl group, an aralkyl group or an aryl group, which may be either substituted or unsubstituted, having a carbon number of 6 - 60, preferably a carbon number of 6 - 40 and more preferably a carbon number of 10 - 30; and these alkyl group, alkenyl group and aralkyl group may contain any of a straight chain, branched chain or cyclic structure, and may contain a mixture thereof. Examples of preferable $R_{61}$ and $R_{62}$ include such as each group of octyl, t-octyl, dodecyl, tetradecyl, hexadecyl, 2-hexyldecyl, octadecyl, $C_nH_{2n-1}$ (n is 20 - 60), eicosyl, docosanyl, merysinyl, octenyl, myristrayl, oleyl, eisyl, phenyl, naphthyl, benzyl, nonylphenyl, dipentylphenyl and cyclohexyl; and groups provided with the aforesaid substituents.

$X_{61}$ and $X_{62}$ are a divalent connecting group containing a nitrogen atom, and preferably are $-CONR_3-$, $-NR_4CONR_5-$ or $-NR_6COO-$.

$L_6$ is an alkyl group, alkenyl group, an aralkyl group or an aryl group, which may be either substituted or unsubstituted, having (p6 + q6) valences. The carbon number of a hydrocarbon group is not specifically limited, however, is preferably 1 - 60, more preferably 1 - 40 and furthermore preferably 10 - 40. "(p6 + q6) valences" in a (p6 + q6) valent hydrocarbon group indicates that (p6 + q6) of hydrogen atoms in hydrocarbon are removed and p6 of -X61 groups and q6 of -X62 groups bond thereto. P6 and q6 is an integer of 0 - 6, wherein $1 \leq p6 + q6 \leq 6$, and preferably $1 \leq p6 + q6 \leq 4$. Further, it is preferable that either of p6 and q6 is 1.

A compound represented by the above-described Formula (6) may be either a synthetic substance or a natural

substance. Whether it is a natural substance or a synthetic substance, a synthetic substance comprising a raw material of higher fatty acid or higher fatty alcohol natural substance contains those having a different carbon number or a straight chain and a branched chain to be a mixture thereof, it does not mind to utilize these mixed substances. A synthetic substance is preferred in view of stability of quality.

In the following, specific examples of compounds represented by Formula (6) will be shown; however, this invention is not limited thereto.

| | | [melting point 6 °C] |
|---|---|---|
| OW-1: | lauric acid amide | 87 |
| OW-2: | palmitic acid amide | 100 |
| OW-3: | stearic acid amide | 101 |
| OW-4: | behenic acid amide | 98 |
| OW-5: | hydroxysteraic acid amide | 107 |
| OW-6: | oleic acid amide | 75 |
| OW-7: | erucic acid amide | 81 |
| OW-8: | ricinoleic acid amide | 62 |
| OW-9: | N-lauryllauric acid amide | 77 |
| OW-10: | N-palmitylpalmitic acid amide | 91 |
| OW-11: | stearylstearic acid amide | 95 |
| OW-12: | oleyloleic acid amide | 65 |
| OW-13: | N-stearyloleic acid amide | 67 |
| OW-14: | oleylstearic acid amide | 74 |
| OW-15: | stearylerucic acid amide | 69 |
| OW-16: | N-oleylpalmitic acid amide | 68 |
| OW-17: | N-stearyl-12-hydroxystearic acid amide | 102 |
| OW-18: | N-oleyl-12-hydroxystearic acid amide | 90 |
| OW-19: | methylol stearic acid amide | 110 |
| OW-20: | methylol behenic acid amide | 110 |
| OW-21: | methylene bisstearic acid amide | 142 |
| OW-22: | methylene bislaulic acid amide | 131 |
| OW-23: | methylene bishydroxystearic acid amide | 143 |
| OW-24: | ethylene biscaprylic acid amide | 165 |
| OW-25: | ethylene biscapric acid amide | 161 |
| OW-26: | ethylene bislauric acid amide | 157 |
| OW-27: | ethylene bisstearic acid amide | 145 |
| OW-28: | ethylene bisisostearic acid amide | 106 |
| OW-29: | ethylene bishydroxystearic acid amide | 145 |
| OW-30: | ethylene bisbehenic acid amide | 142 |
| OW-31: | hexamethylene bisstearic acid amide | 140 |
| OW-32: | hexamethylene bisbehenic acid amide | 142 |
| OW-33: | hexamethylene bishydroxystearic acid amide | 135 |
| OW-34: | butylene bishydroxystearic acid amide | 140 |
| OW-35: | N,N'-distearyladipic acid amide | 141 |
| OW-36: | N,N'-distearylsebacic acid amide | 136 |
| OW-37: | methylene bisoleic acid amide | 116 |
| OW-38: | ethylene bisoleic acid amide | 119 |
| OW-39: | ethylene biserucic acid amide | 120 |
| OW-40: | hexamethylene bisoleic acid amide | 110 |
| OW-41: | N,N'-dioleyladipic acid amide | 118 |
| OW-42: | N,N'-dioleylsebacic acid amide | 113 |
| OW-43: | m-xylanestearic acid amide | 123 |
| OW-44: | N,N'-distearylisophthalic acid amide | 125 |
| OW-45: | ethanolamine distearate | 82 |

(continued)

| | | [melting point 6 °C] |
|---|---|---|
| OW-46: | N-butyl-N'-stearyl urea | 94 |
| OW-47: | N-phenyl-N'-stearyl urea | 99 |
| OW-48: | N-stearyl-N'-stearyl urea | 109 |
| OW-49: | xylene bisstearyl urea | 166 |
| OW-50: | toluylene bisstearyl urea | 172 |
| OW-51: | hexamethylene bisstearyl urea | 173 |
| OW-52: | diphenylmethane bisstearyl urea | 206 |

An organic solid lubricant in this invention is preferably utilized by having been dispersed in a coating solution in advance. An organic solid lubricant often has insufficient compatibility with an organic solvent due to the slippery surface in accordance with the naming, and aggregation or precipitation may be sometimes caused in a coating solution when stability of the dispersion is poor. Aggregation or precipitation in a coating solution is not preferable because it will be a cause of coating defects at the time of being produced to form film. A means to increase stability of the dispersion includes such as a method to utilize an electrostatic effect by modifying the surface, and a method to utilize a steric hindrance effect utilizing a surface adsorption layer by a polymer dispersant. The former is a general dispersion stabilizing method; however, the latter is preferred since there is an anxiety of influence of a surface modifier itself to other abilities with respect to being utilized in a photothermographic material as well as the effect is easily exhibited either in a water phase and a non-water phase.

Herein, as a polymer dispersant, a binder utilized in said photosensitive material can be utilized. Specifically, such as polyvinyl butyral, polyvinyl acetal, polyvinyl alcohol, cellulose acetate butyrate and cellulose acetate propionate can be utilized.

The amount of a polymer dispersant is preferablyl in a range of 1 - 200 weight% against organic solid lubricant particles as a substance to be dispersed. A dispersion method is not specifically limited, and such as a dissolver type, an ultrasonic type and a pressure type, and dispersion is preferably conducted by use of a homogenizer equipped with a cooling device not to run a temperature.

The mean grain size of the above-described organic solid lubricant particles is a mean grain size after dispersion according to the following method. A dispersion containing a compound according to this invention is diluted and titrated on a grid attached with a carbon support film followed by being dried to prepare a sample, after which is photographed at a direct magnification of 5,000 times by use of a transmission electronmicroscope (for example, 2000FX Type manufactured by JEOL Ltd.), the negative is read as a digital image by a scanner, each grain size (equivalent circle diameter) of not less than 300 particles being measured by use of a suitable image processing software, and then a mean grain size can be determined by arithmetically averaging them.

In a photosensitive material of this invention, it is preferable that at least one layer on a support contains a compound represented by aforesaid Formula (6) and also contains a nonionic fluorine-containing surfactant and an anionic fluorine-containing surfactant.

A nonionic fluorine-containing surfactant utilized in this invention is not specifically limited, however, is preferably a compound represented by following Formula (A).

Formula (A)

$Rf_1$- $(AO)_n$-$Rf_2$

wherein, $Rf_1$ and $Rf_2$ are a fluorine-containing aliphatic group, and may be same with or different from each other. AO is a group having at least one alkyleneoxy group, and n is an integer of 1 - 30.

In Formula (A), a fluorine-containing aliphatic group represented by $Rf_1$ and $Rf_2$ includes aliphatic groups comprising a straight chain, a branched chain or a cyclic structure or a combination thereof, such as a alkylcyclo aliphatic group. A preferable fluorine-containing aliphatic group is a fluoroalkyl group, (such as $-C_4F_9$ and $C_8F_{17}$), a sulfofluoroalkyl group (such as $-C_7F_{15}SO_3$, and $-C_8F_{17}SO_3$), a $C_nF_{2n+1}SO_2N(R_1)R_2$- group ($R_1$ is a hydrogen atom, an alkyl group, an alkoxyu group, an alkylcarboxyl group or an aryl group, each of which has a carbon number of 1 - 20; $R_2$ is an alkylene group or an alkylene carboxyl group, each of which has a carbon number of 1 - 20; n is an integer of 1 - 20, such as $C_7F_{15}SO_2N (C_2H_5) CH_2$- and $-C_8F_{17}SO_2N(CH_2COOH) CH_2CH_2CH_2$-), each of which has a carbon number of 1 - 20; and these may be provided with a substituent.

AO is a group having an alkylene oxy group such as an ethyleneoxy group, a propyleneoxy group and an i-propyleneoxy group, and these may be provided with a substituent such as an amino group at the terminal, and these may be further provided with an amino group. N is preferably an integer of 5 - 15.

A-1: $C_{12}F_{25}(CH_2CH_2O)_{24}C_{12}F_{25}$
A-2: $C_8F_{17}(CH_2CH_2O)_8C_8F_{17}$
A-3: $C_7F_{15}CH_2CH(OH)CH_2(CH_2CH_2O)_{15}CH_2CH(OH)CH_2C_7F_{15}$
A-4: $C_7F_{15}(CH_2CH_2O)_{10}C_7F_{15}$
A-5: $C_{12}F_{25}(CH_2CH_2O)_{15}C_{12}F_{25}$
A-6: $C_8F_{17}CH_2CH(OH)CH_2(CH_2CH_2O)_{20}CH_2CH(OH)CH_2C_8F_{17}$
A-7: $C_8F_{17}(CH_2CH_2O)_{18}C_8F_{17}$
A-8: $C_8F_{17}(CH_2CH_2O)_{20}C_8F_{17}$
A-9: $C_7F_{15}SO_2N(C_2H_5)CH_2(CH_2CH_2O)_{22}CH_2N(CH_3)SO_2C_7F_{15}$
A-10 $C_9F_{17}O(CH_2CH_2O)_{22}C_9F_{17}$

Further, a fluorine-containing anionic surfactant is not specifically limited, and includes the following specific example compounds; however, this invention is not limited thereto.

FA−1

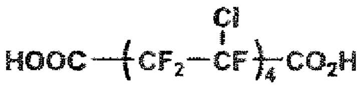

FA−2

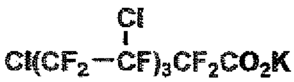

FA−3

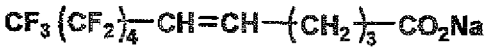

FA−4

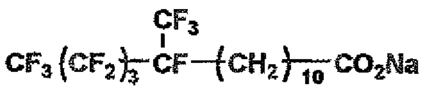

FA−5

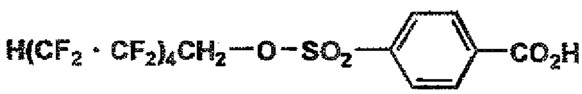

FA−6

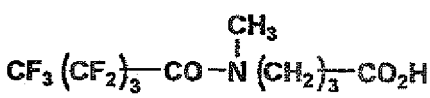

FA-7

$$Cl\left(CF_2-CF_2\right)_3-CO_2Na$$

FA-8

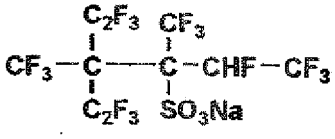

FA-9

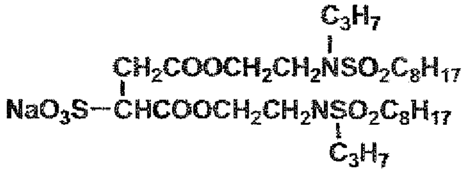

FA-10

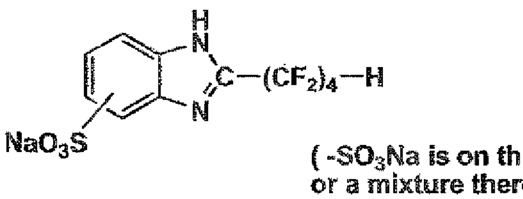

( $-SO_3Na$ is on the 4- or 5- position ; or a mixture thereof )

FA-11

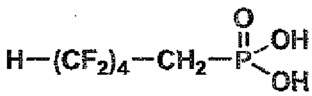

FA-12

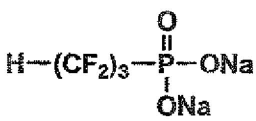

FA-13

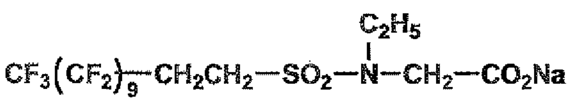

FA-14

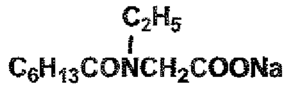

FA-15

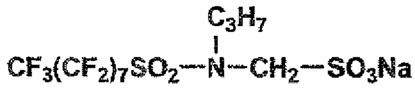

FA-16

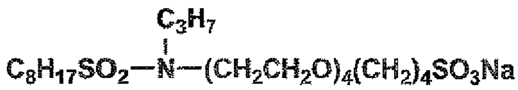

FA-17

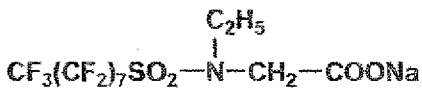

FA-18

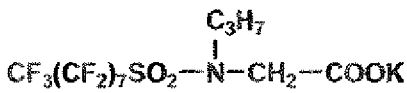

FA-19

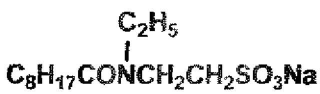

FA-20

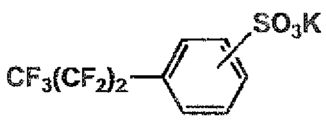

( $-SO_3Na$ is on the m- or p- position ; or a mixture thereof )

FA-21

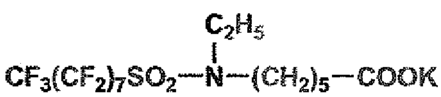

**FA-22** $CF_3(CF_2)_{11}$-$CH_2$-O-$SO_3Na$
**FA-23** $CF_3(CF_2)_6$-COO$(CH_2)_3$-$SO_3K$
**FA-24** $H(CF_2)_4$-$CH_2$-O-$(CH_2)_3$-$SO_3Na$

FA-25

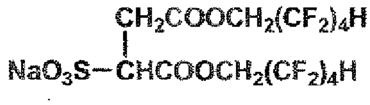

FA－26

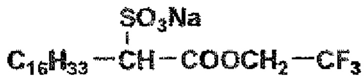

FA－27

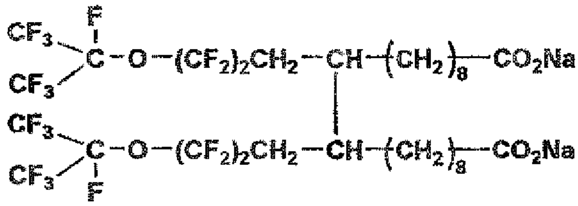

FA－28

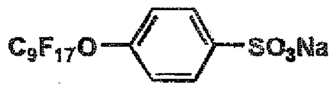

FA－29

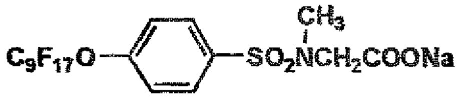

FA－30

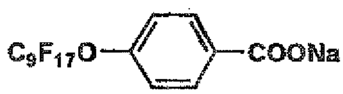

FA－31

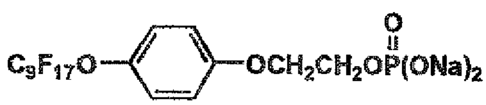

FA－32

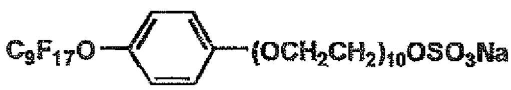

FA-33

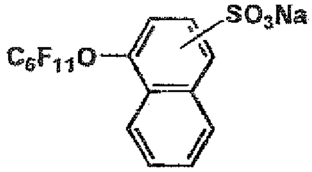

FA-34

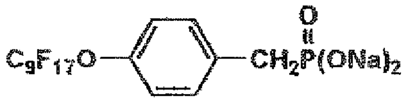

FA-35

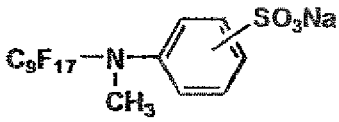

FA-36

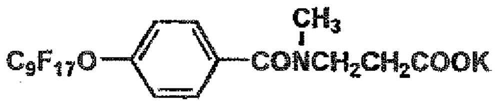

FA-37

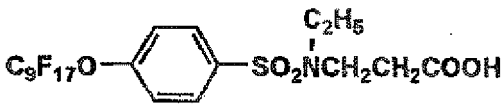

FA-38 $C_9F_{17}OCH_2CH_2SO_3Na$

FA-39

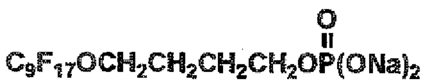

FA-40

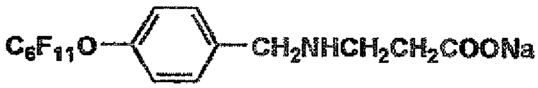

FA-41

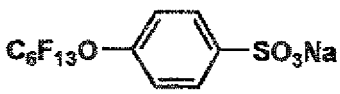

FA-42

$HCF_2(CF_2)_8OCH_2CH_2CH_2SO_3Na$

FA-43

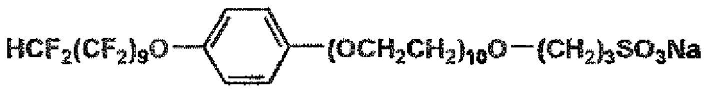

FA-44 $C_8F_{17}SO_3K$

FA-45

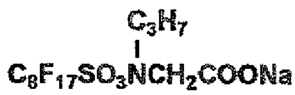

FA-46

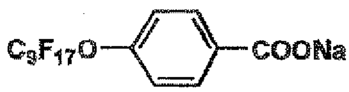

FA-47

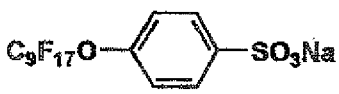

FA-48

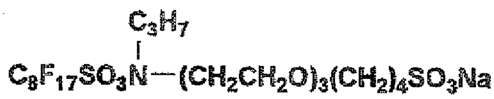

FA-49

$C_7F_{15}COOH$

FA-50

$H-(CF_2)_8-CH_2COONH_4$

FA-51

$C_8F_{17}SO_3Li$

FA-52

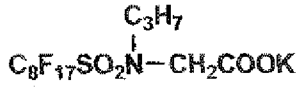

FA-53

$H-(CF_2)_6-COOCH_2CH_2CH_2SO_3Na$

FA-54

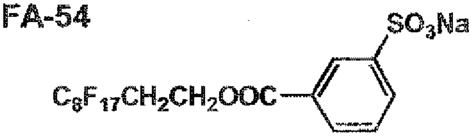

FA-55

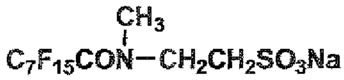

FA-56

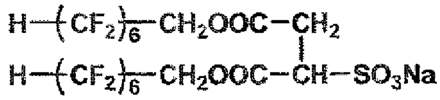

FA-57

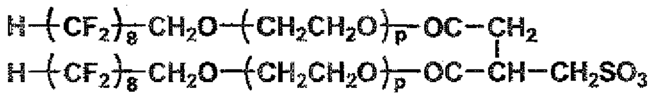

p: average 3

FA-58

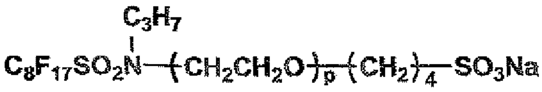

p: average 4

FA-59

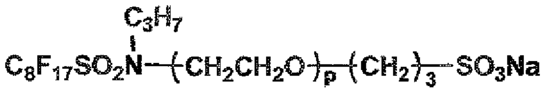

p: average 7

FA-60

$C_{10}F_{21}CH_2CH_2O-(CH_2CH_2O)_p-(CH_2)_4-SO_3Na$ p: average 6

FA-61

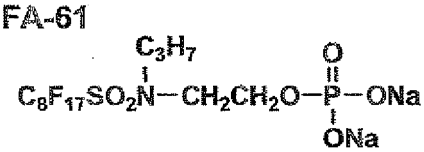

FA-62

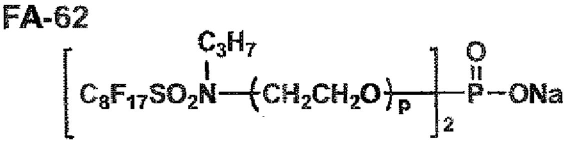

p: average 5

FA-63

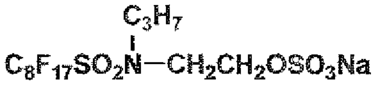

FA-64

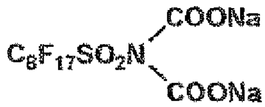

FA-65

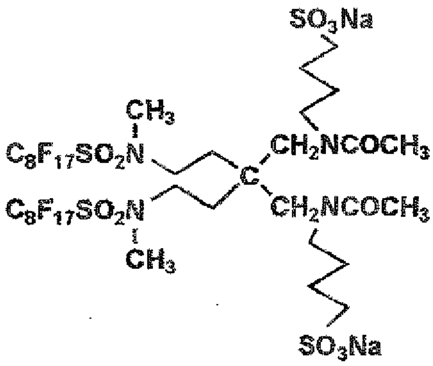

FA-66

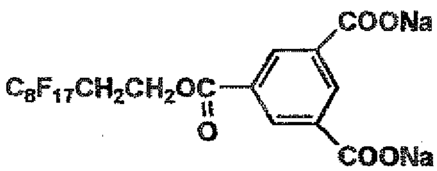

FA-67

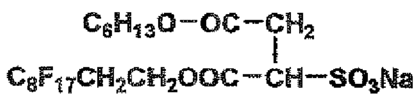

FA-68

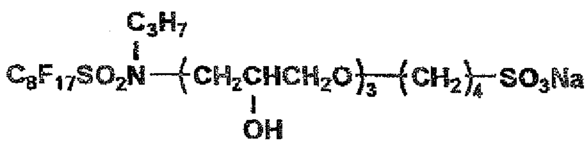

FA-69

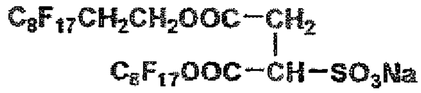

The using amount of each fluorine-containing surfactant according to this invention is generally 0.01 - 1 g, preferably 10 - 500 mg and more preferably 50 -- 300 mg, per 1 $m^2$ of a photosensitive material.

As a fluorine-containing surfactant utilized in this invention, in addition to the above, ionic fluorine type surfactants described in JP-A Nos. 60-244945, 63-306437 and 1-24245; and fluorine type surfactants of anion-cation combined use described in JP-A Nos. 5-197068 and 5-204115 can be utilized.

The addition layer of a fluorine-containing surfactant utilized in this invention is not specifically limited and may be any layer, however, is preferably the outermost surface layer.

[Dye, Pigment]

(Dyes and Pigments)

In a silver salt photothermographic dry imaging material of this invention, to control the quantity or wavelength distribution of light to pass through a photosensitive layer, it is preferable to form a filter layer on the photosensitive layer side or on the opposite side or to incorporate dye or pigment in a photosensitive layer.

As dye, utilized can be compounds well known in the art and absorbs light in various wavelength regions depending on the spectral sensitivity of the photosensitive material.

For example, in the case of utilizing a silver salt photothermographic dry imaging material of this invention as an image recording material by infrared light, it is preferable to utilize squalilium dye provided with a thiopyrilium nuclei (in this publication, referred to as thiopyrilium squalilium dye) and squalilium dye provided with a pyrilium nuclei (in this publication, referred to as pyrilium squalilium dye), or thiopyriliumcroconium dyes or pyriliumcroconium dyes which are similar to a squalilium dye, disclosed in JP-A 2001-83655.

Herein, a compound provided with a squalilium nuclei is a compound provided with 1-cyclobutene-2-hydroxy-4-one in the molecular structure, and a compound provided with a croconium nuclei is a compound provided with 1-cyclopentene-2-hydroxy-4,5-dione in the molecular structure. Herein, a hydroxyl group may be dissociated. Hereinafter in this publication, these dyes are called as a squalilium dye, in one lump for convenience. And, preferable dye also includes compounds of JP-A 8-201959.

In the following, infrared dye preferable in this invention will be detailed.

<Compounds represented by following Formula (1)>

Formula (1)

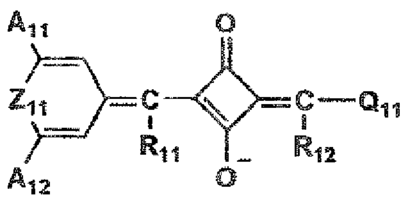

In Formula (1), $R_{11}$ and $R_{12}$ each independently are a hydrogen atom or a substituent. A substituent represented by $R_{11}$ and $R_{12}$ includes an alkyl group, a cycloalkyl group, an alkenyl group, an alkynyl group, an aryl group, a heterocyclic group, a halogen atom and a cyano group. It is preferably a hydrogen atom, an alkyl group or an aryl group, and more preferably a hydrogen atom or an alkyl group.

$Z_{11}$ is O, S, N-$R_1$, Se or Te, wherein $R_1$ is an alkyl group or an aryl group. It is preferably O, S or N-$R_1$, and more preferably O or S.

$Q_{11}$ is a 6-member heterocyclic group, which includes pyrilium, thiopyrilium, selenopyrilium, tellunopyrilium, pyridinium, benzpyrilium, benzthiopyrilium and benzselenopyrilium, however, preferably pyrilium, thiopyrilium or selenopyrilium, and more preferably pyrilium or thiopyrilium. These heterocyclic groups may be provided with a substituent, which includes an alkyl group, a cycloalkyl group, an alkyl halogenide group, an alkenyl group, an alkynyl group, an aryl group, a heterocyclic group, a halogen atom, a cyano group, a hydroxyl group, a carboxyl group, an alkoxy group, an aryloxy group, a silyloxy group, a heterocyclicoxy group, an acyloxy group, a carbamoyloxy group, an alkoxycarbonyloxy group, an aryloxycarbonyloxy group, an amino group, an aniline group, an acylamino group, an aminocarbonylamino group, an alkoxycarbonylamino group, an aryloxycarbonylamino group, a sulfamoylamino group, an alkyl- and arylsulfamoylamino group, a mercapto group, an alkylthio group, an arylthio group, a heterocyclicthio group, a sulfamoyl group, a sulfo group, an alkyl- and aryl-sulfamoyl group, an acyl group, an aryloxycarbonyl group, an alkoxycarbonyl group, a carbamoyl group, an arylheterocyclic-azo group, an imido group, a silyl group, a hydrazino group, an ureido group, a phoronic acid group, a phosphate group, a sufite group and other substituents well known in the art.

$A_{11}$ and $A_{12}$ each independently are a substituent, which includes an alkyl group, a cycloalkyl group, an alkenyl group, an alkynyl group, an aryl group, a hetrocyclic group, a halogen atom and a cyano group; these groups may be further provided with a substituent. However, $A_{11}$ and $A_{12}$ are never the same substituent to each other.

<Compounds represented by Formula (2)>

Formula (2)

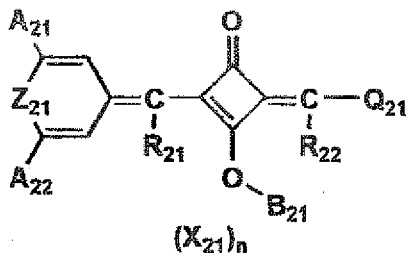

In Formula (2), $R_{21}$ and $R_{22}$ each independently are a hydrogen atom or a substituent. A substituent represented by $R_{21}$ and $R_{22}$ includes an alkyl group, a cycloalkyl group, an alkenyl group, an alkynyl group, an aryl group, a heterocyclic group, a halogen atom and a cyano group. It is preferably a hydrogen atom, an alkyl group or an aryl group, and more preferably a hydrogen atom or an alkyl group.

$Z_{21}$ is O, S, N-$R_1$, Se or Te, wherein $R_2$ is an alkyl group or an aryl group. It is preferably O, S or N-$R_2$, and more preferably O or S.

$Q_{21}$ is a 6-member heterocyclic group, which includes pyrilium, thiopyrilium, selenopyrilium, tellunopyrilium, pyridinium, benzpyrilium, benzthiopyrilium and benzselenopyrilium, however, preferably pyrilium, thiopyrilium or selenopyrilium, and more preferably pyrilium or thiopyrilium. These heterocyclic groups may be provided with a substituent, which includes an alkyl group, a cycloalkyl group, an alkyl halogenide group, an alkenyl group, an alkynyl group, an aryl group, a heterocyclic group, a halogen atom, a cyano group, a hydroxyl group, a carboxyl group, an alkoxy group, an aryloxy group, a silyloxy group, a heterocyclicoxy group, an acyloxy group, a carbamoyloxy group, an alkoxycarbonyloxy group, an aryloxycarbonyloxy group, an amino group, an aniline group, an acylamino group, an aminocarbonylamino group, an alkoxycarbonylamino group, an aryloxycarbonylamino group, a sulfamoylamino group, an alkyl- and arylsulfamoylamino group, a mercapto group, an alkylthio group, an arylthio group, a heterocyclicthio group, a sulfamoyl group, a sulfo group, an alkyl- and aryl-sulfamoyl group, an acyl group, an aryloxycarbonyl group, an alkoxycarbonyl group, a carbamoyl group, an arylheterocyclic-azo group, an imido group, a silyl group, a hydrazino group, an ureido group, a phoronic acid group, a phosphate group, a sufite group and other substituents well known in the art.

$A_{21}$ and $A_{12}$ each independently are a substituent, which includes an alkyl group, a cycloalkyl group, an alkenyl group, an alkynyl group, an aryl group, a hetrocyclic group, a halogen atom and a cyano group; these groups may be further provided with a substituent. However, $A_{21}$ and $A_{22}$ are never the same substituent to each other.

$B_{21}$ is an alkyl group or an aryl group, and preferably an alkyl group. $X_{21}$ is an ion to compensate a charge in a molecule. n is 0 or 1, and 0 when intra-molecular salt is formed.

<Compounds represented by Formula (3)>

Formula (3)

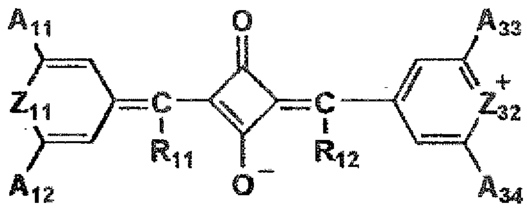

In Formula (3), $R_{11}$ and $R_{12}$ are identical to $R_{11}$ and $R_{12}$ of aforesaid Formula (1).

$Z_{11}$ is identical to $Z_{11}$ of aforesaid Formula (1).

$A_{11}$ and $A_{12}$ are identical to $A_{11}$ and $A_{12}$ of aforesaid Formula (1).

$Z_{32}$ is O, S, N-$R_3$, Se or Te, wherein $R_3$ is an alkyl group or an aryl group. It is preferably O, S or N-$R_3$, and more preferably O or S.

$A_{33}$ and $A_{34}$ each independently are a hydrogen atom or a substituent, which includes an alkyl group, a cycloalkyl group, an alkenyl group, an alkynyl group, an aryl group, a hetrocyclic group, a halogen atom and a cyano group; these groups may be further provided with a substituent.

<Compounds represented by Formula (4)>

Formula (4)

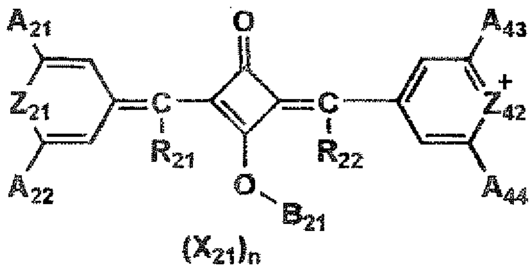

In Formula (4), $R_{21}$ and $R_{22}$ are identical to $R_{21}$ and $R_{22}$ of aforesaid Formula (2).

$Z_{21}$ is identical to $Z_{21}$ of aforesaid Formula (2).

$A_{21}$ and $A_{12}$ are identical to $A_{21}$ and $A_{22}$ of aforesaid Formula (2).

$B_{21}$ is identical to $B_{21}$ of aforesaid Formula (2).

$X_{21}$ is identical to $X_{21}$ of aforesaid Formula (2).

n is identical to n of Formula (2).

$Z_{42}$ is O, S, N-$R_4$, Se or Te, wherein $R_4$ is an alkyl group or an aryl group. It is preferably O, S or N-$R_4$, and more preferably O or S.

$A_{43}$ and $A_{44}$ each independently are a hydrogen atom or a substituent, which includes an alkyl group, a cycloalkyl group, an alkenyl group, an alkynyl group, an aryl group, a hetrocyclic group, a halogen atom and a cyano group; these groups may be further provided with a substituent. <Compounds represented by Formula (5)>

Formula (5)

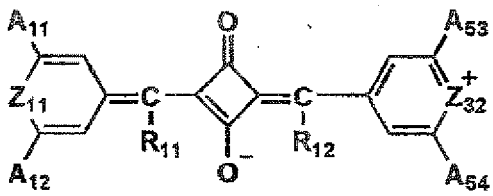

In Formula (5), $R_{11}$ and $R_{12}$ are identical to $R_{11}$ and $R_{12}$ of aforesaid Formula (1).
$Z_{11}$ is identical to $Z_{11}$ of aforesaid Formula (1).
$A_{11}$ and $A_{12}$ are identical to $A_{11}$ and $A_{12}$ of aforesaid Formula (1).
$Z_{32}$ is identical to $Z_{32}$ of aforesaid Formula (3).
$A_{53}$ and $A_{54}$ each independently are a substituent, which includes an alkyl group, a cycloalkyl group, an alkenyl group, an alkynyl group, an aryl group, a hetrocyclic group, a halogen atom and a cyano group; these groups may be further provided with a substituent. However, $A_{53}$ and $A_{54}$ are never the same substituent to each other.

<Compounds represented by Formula (6)>

Formula (6)

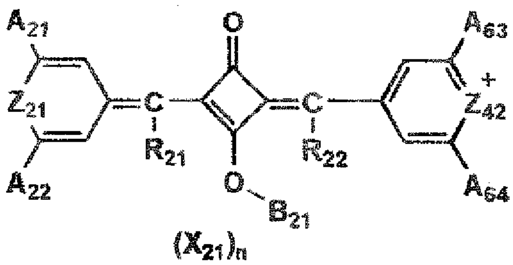

In Formula (6), $R_{21}$ and $R_{22}$ are identical to $R_{21}$ and $R_{22}$ of aforesaid Formula (2).
$Z_{21}$ is identical to $Z_{21}$ of aforesaid Formula (2).
$A_{21}$ and $A_{12}$ are identical to $A_{21}$ and $A_{22}$ of aforesaid Formula (2).
$B_{21}$ is identical to $B_{21}$ of aforesaid Formula (2).
$X_{21}$ is identical to $X_{21}$ aforesaid Formula (2).
n is identical to n of aforesaid Formula (2).
$Z_{42}$ is identical to $Z_{42}$ of aforesaid Formula (4).
$A_{63}$ and $A_{64}$ each independently are a substituent, which includes an alkyl group, a cycloalkyl group, an alkenyl group, an alkynyl group, an aryl group, a hetrocyclic group, a halogen atom and a cyano group; these groups may be further provided with a substituent. However, $A_{63}$ and $A_{64}$ are never the same substituent to each other.

<Compounds represented by Formula (7)>

Formula (7)

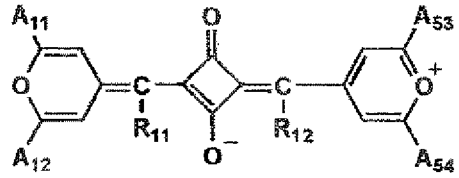

In Formula (7), $R_{11}$ and $R_{12}$ are identical to $R_{11}$ and $R_{12}$ of aforesaid Formula (1).
$A_{11}$ and $A_{12}$ are identical to $A_{11}$ and $A_{12}$ of aforesaid Formula (1).
$A_{53}$ and $A_{54}$ are identical to $A_{53}$ and $A_{54}$ of aforesaid Formula (5).

<Compounds represented by Formula (8)>

Formula (8)

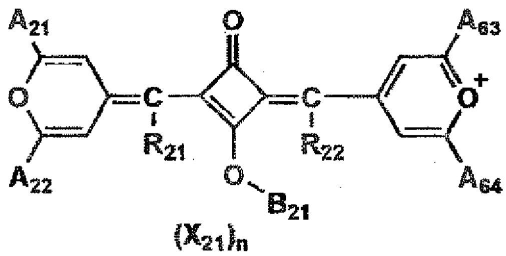

In Formula (8), $R_{21}$ and $R_{22}$ are identical to $R_{21}$ and $R_{22}$ of aforesaid Formula (2).
$A_{21}$ and $A_{12}$ are identical to $A_{21}$ and $A_{22}$ of aforesaid Formula (2).
$B_{21}$ is identical to $B_{21}$ of aforesaid Formula (2).
$X_{21}$ is identical to $X_{21}$ aforesaid Formula (2).
n is identical to n of aforesaid Formula (2).
$A_{63}$ and $A_{64}$ are identical to $A_{63}$ and $A_{64}$ of aforesaid Formula (6).
In the following, specific examples represented by Formulas (1) - (8) will be shown; however, this invention is not limited thereto.

sq-1

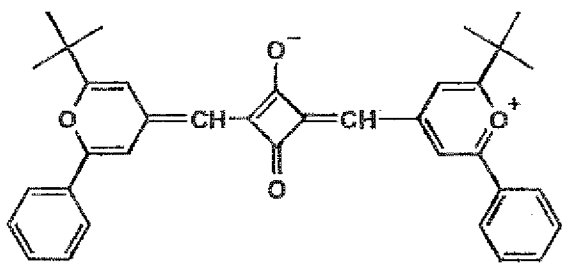

sq−2

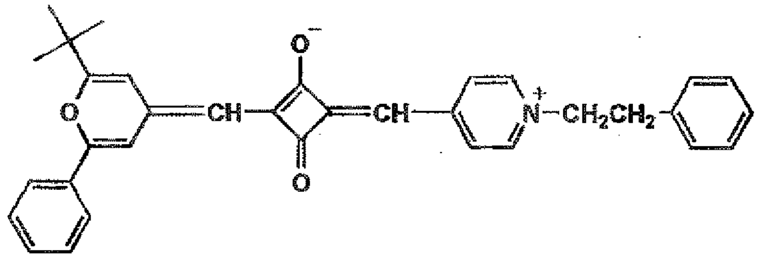

sq−3

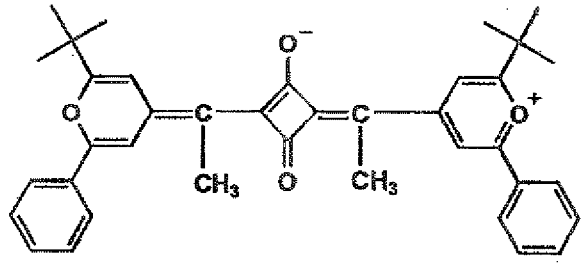

sq−4

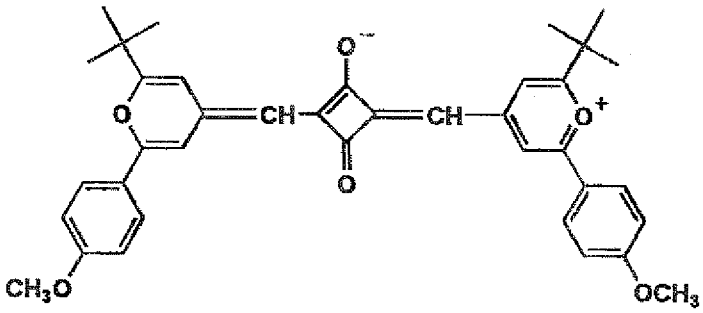

sq−5

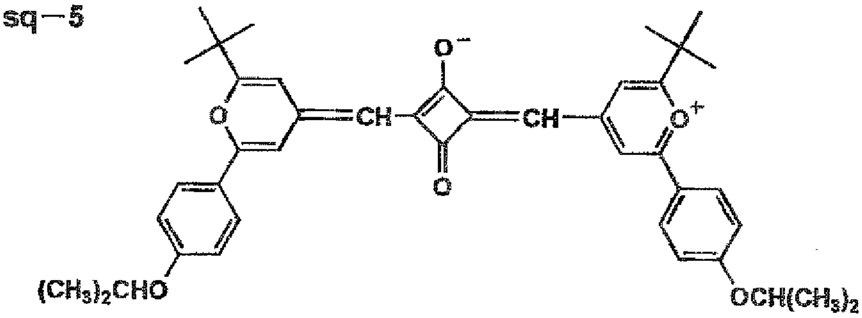

sq−6

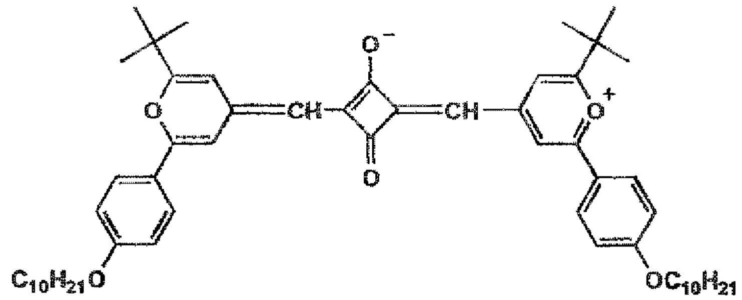

sq−7

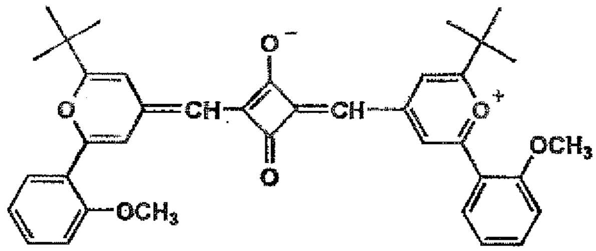

sq−8

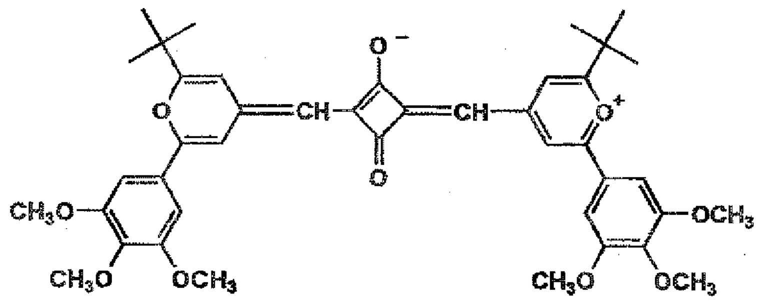

sq−9

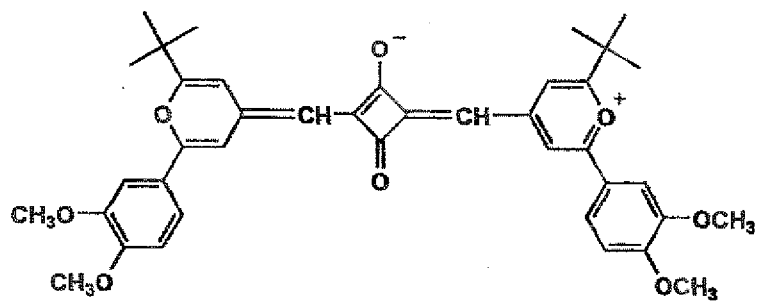

sq−10

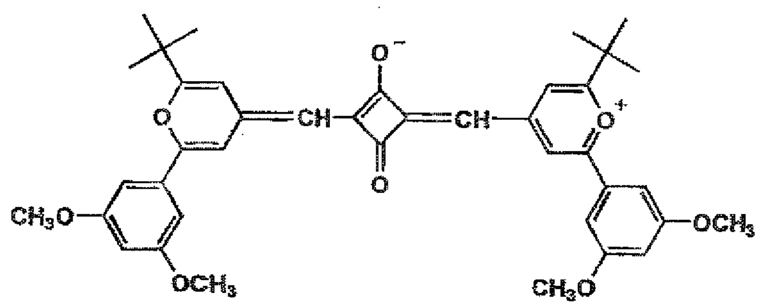

sq−11

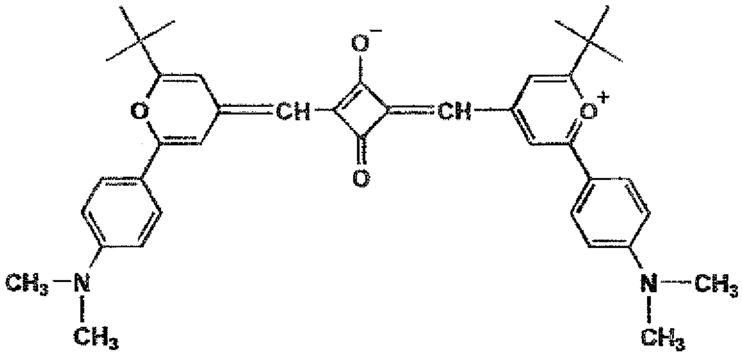

sq−12

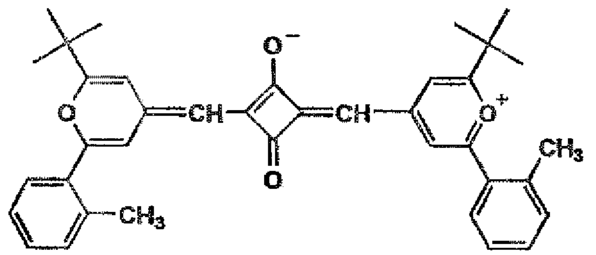

sq−13

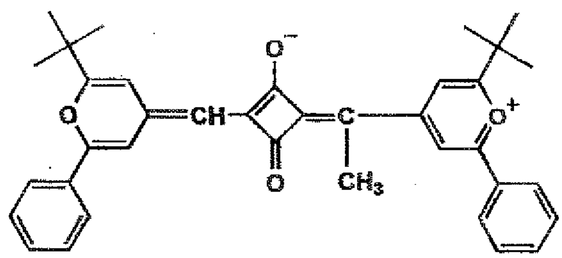

sq−14

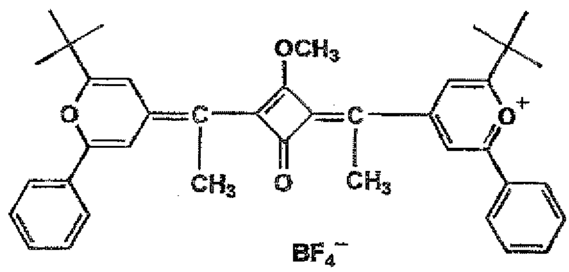

sq-15

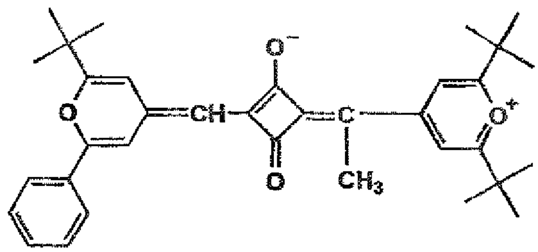

sq-16

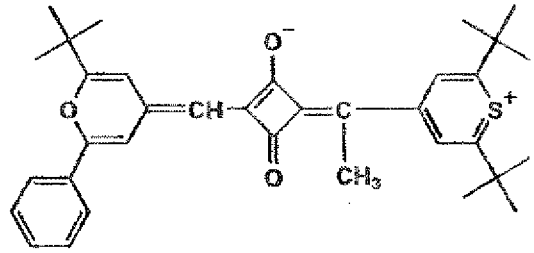

sq-17

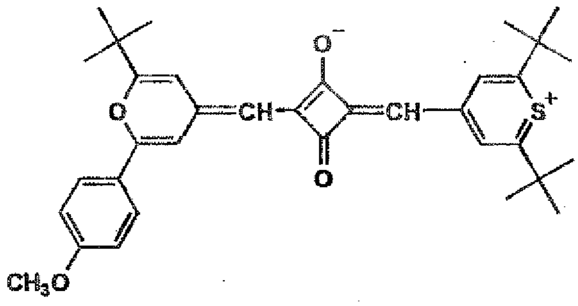

sq-18

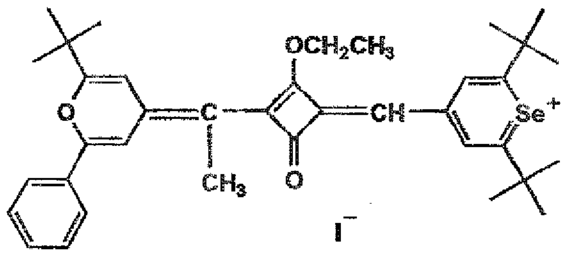

sq-19

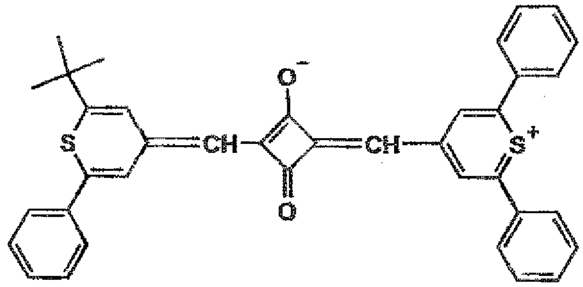

sq-20

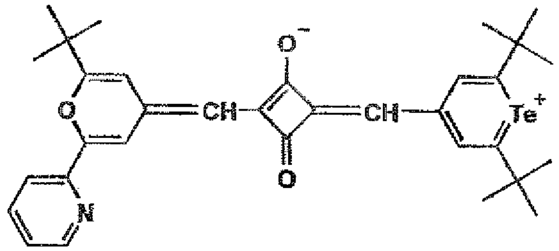

sq-21

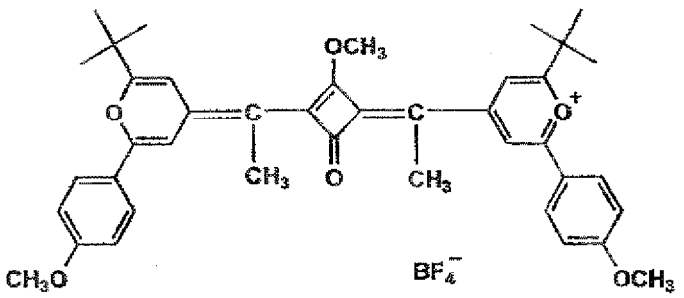

sq-22

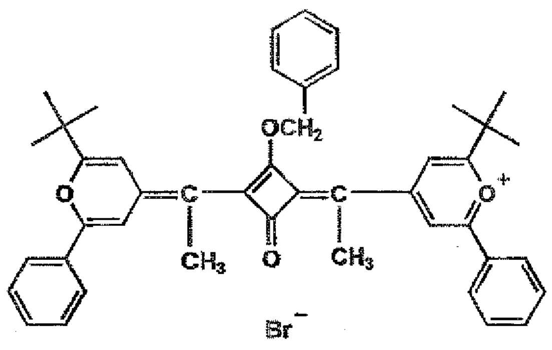

sq-23

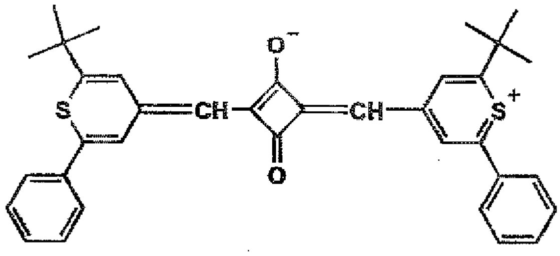

sq-24

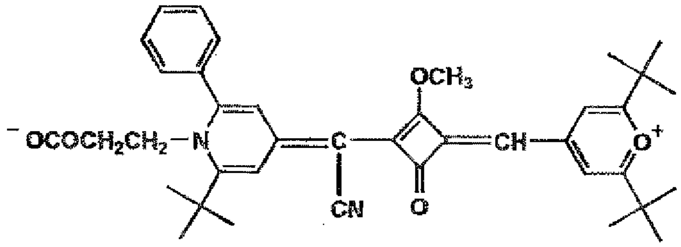

sq-25

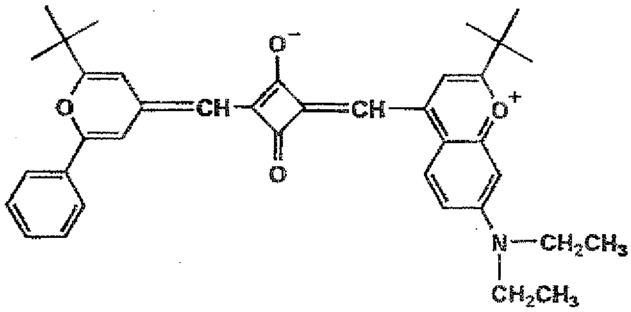

sq-26

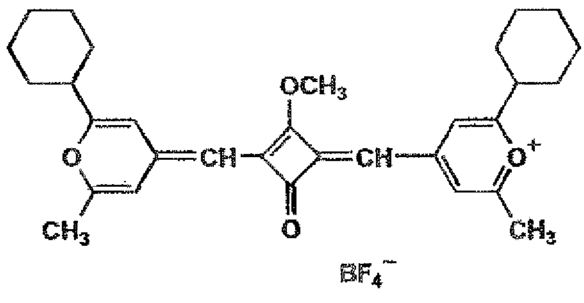

sq−27

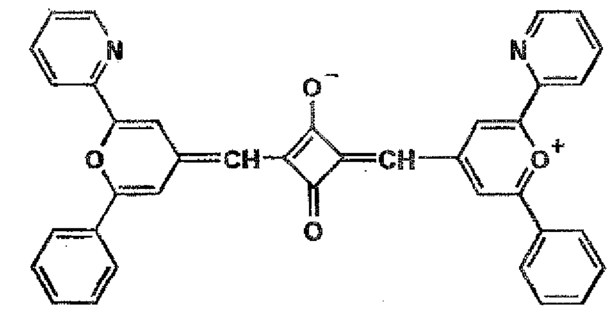

sq−28

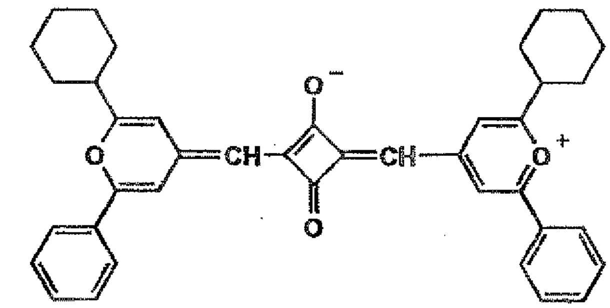

sq−29

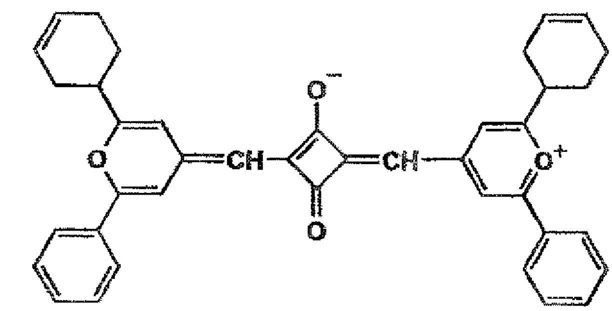

sq−30

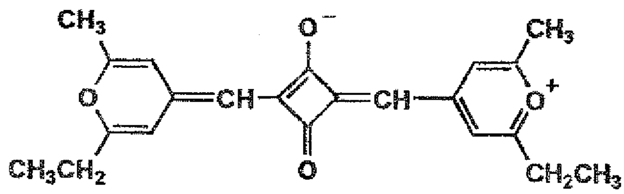

sq−31

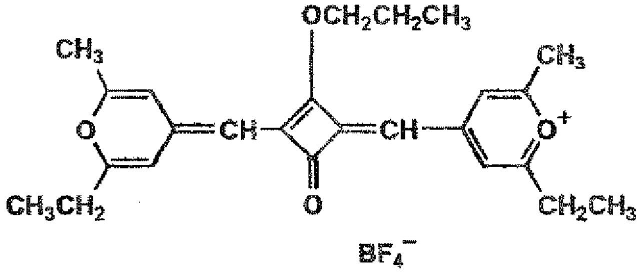

sq−32

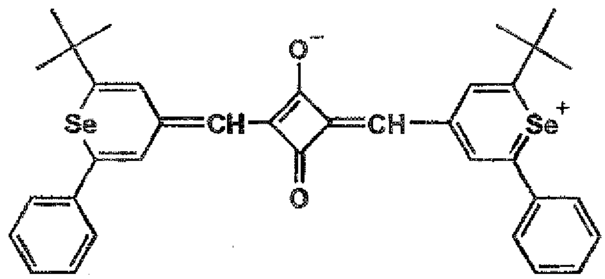

sq−33

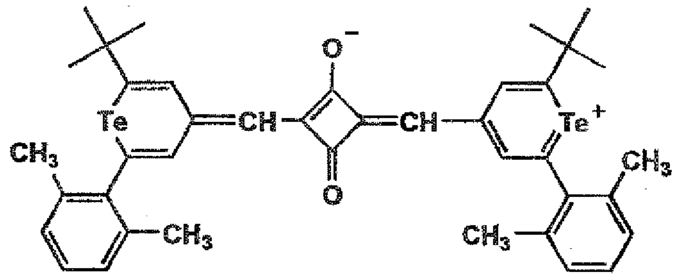

sq−34

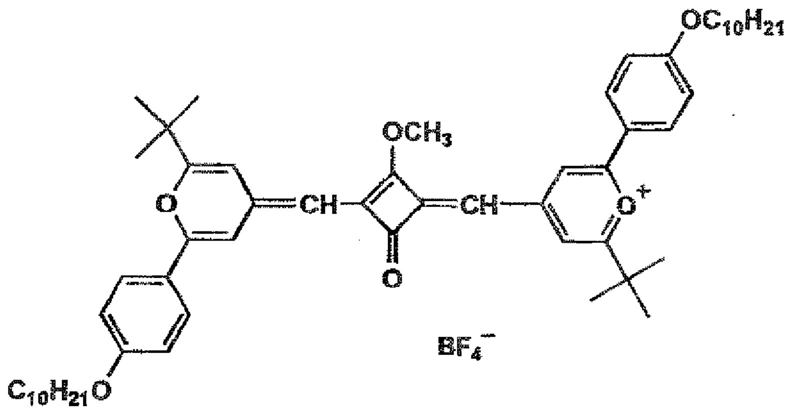

sq−35

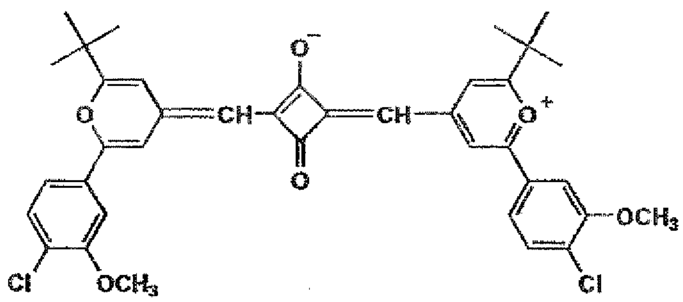

sq-36

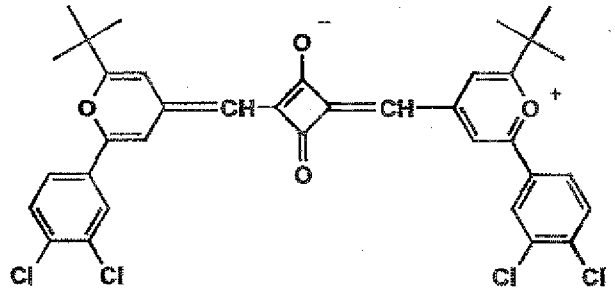

sq-37

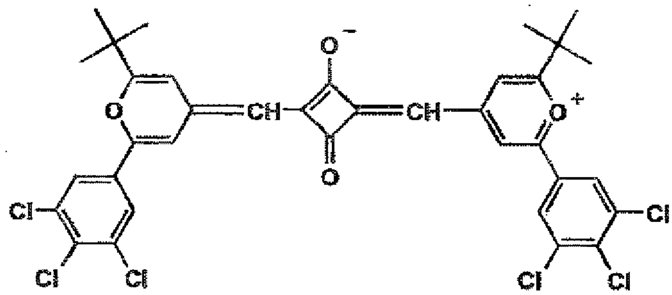

sq-38

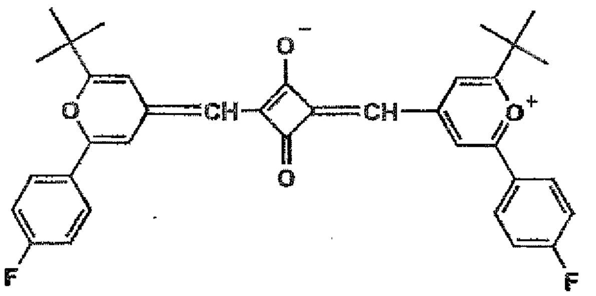

sq-39

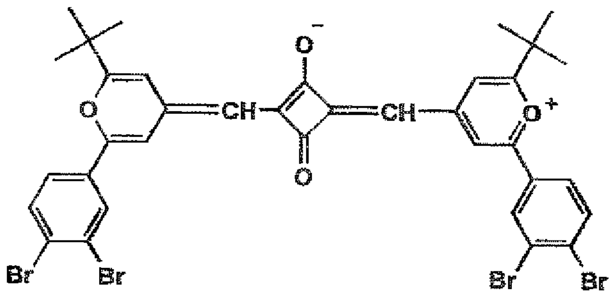

sq-40

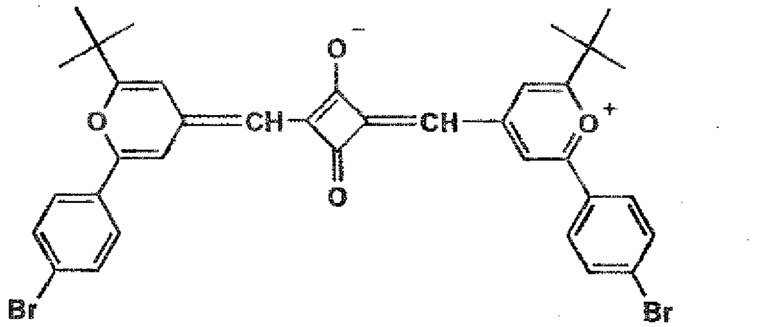

sq-41

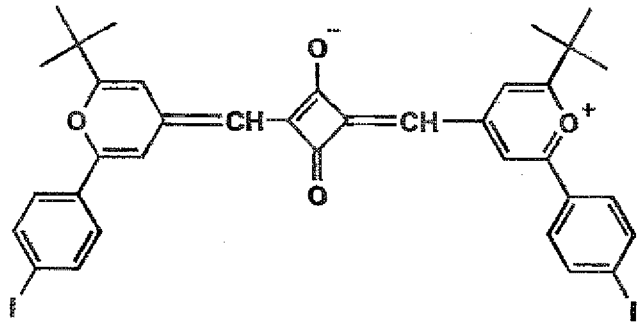

sq-42

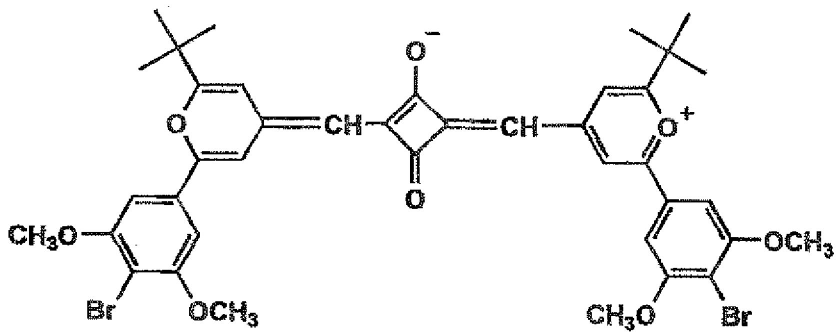

A compound represented by Formulas (1) - (8) may be added in any layer of a photothermographic material, however, is preferably added in a photosensitive layer, a photo-insensitive layer on the photosensitive layer side against a support, or a filter layer formed on the opposite side against the photo-insensitive layer; and is furthermore preferably added in a photo-insensitive layer on the photosensitive layer side against a support or in a filter layer formed on the opposite side against the photo-insensitive layer. The addition amount of a compound represented by Formula (1) - (8) is preferably $1 \times 10^{-5}$ - 10 mmol, more preferably $1 \times 10^{-4}$ - 1 mmol and most preferably $1 \times 14^{-3}$ - $1 \times 10^{-1}$ mmol per 1 $m^2$.

Compounds represented by Formulas (1) - (8) can be added according to a method well known in the art. That is, these compounds can be added in a coating solution by being dissolved in a polar solvent in alcohols such as methanol and ethanol, ketones such as methyl ethyl ketone and acetone, and a polar solvent such as dimethylsulfoxide and dimethylformamide. Further, the compounds can be added by being made into microparticles of not more than 1 μm and dispersed in water or an organic solvent. Many technologies have been disclosed with respect to a microparticle dispersion technology, according to which these compounds can be dispersed.

[Support]

A material of a support utilized in a silver salt photothermographic dry imaging material includes such as various

types of polymer materials, glass, wool cloth, cotton cloth, paper, metal (such as aluminum), however, a flexible sheet or materials capable of being processed into a roll is suitable, with respect to handling as a information recording material. Therefore, as a support in a photothermographic dry imaging material of this invention, plastic film such as cellulose acetate film, polyester film, polyethylene terephthalate (PET) film, polyethylene naphthalate (PEN) film, polyamide film, polyimide film, cellulose triacetate film (TAC) or polycarbonate film (PC), and bi-axially stretched PET is specifically preferred. The thickness of a support is approximately 50 - 300 μm and preferably 70 - 180 μm.

To restrain static charging buildup, conductive compounds such as a metal oxide and/or a conductive polymer can be incorporated in a constituting layer. These may be incorporated in any layer, however, preferably in a backing layer, or a surface protective layer or an under coat layer on the photosensitive layer side. Such as conductive compounds described in columns 14 - 20 of USP. 5,244,773 are preferably utilized. Among them, in this invention, it is preferable to incorporate a conductive metal oxide compound in a surface protective layer of the backing layer side.

Herein, a conductive metal oxide is crystalline metal oxide particles and such as those containing oxygen defects and those containing a small amount of a hetero atom which forms a donor against utilized metal oxide are specifically preferable, generally speaking, because of high conductivity, and the latter is specifically preferable because it provides no fog to silver halide emulsion. Examples of a metal oxide is preferably such as ZnO, $TiO_2$, $SnO_2$, $Al_2O_3$, $In_2O_3$, $SiO_2$, MgO, BaO, $MoO_3$ and $V_2O_5$ and complex oxides thereof, and specifically preferably ZnO, $TiO_2$ and $SnO_2$. As examples containing a hetero atom, addition of such as Al and In to ZnO, addition of such as Sb, Nb, P and a halogen element to $SnO_2$, and addition of such Nb and Ta to $TiO_2$ are effective. The addition amount of these hetero atoms is in a range of preferably 0.01 - 30 mol% and specifically preferably 0.1 - 10 mol%. Further, a silicon compound may be added at the time of micro-particle preparation to improve micro-particle dispersibility and transparency.

Metal oxide micro-particles utilized in this invention are provided with conductivity, and the volume specific resistance is preferably not more than $10^7$ Ω·cm and specifically preferably not more than $10^5$ Ω·cm. These oxides are described in such as JP-A Nos. 56-143431, 56-120519 and 58-62647. In addition to these, utilized may be conductive materials, in which the above-described metal oxide adheres to other crystalline metal oxide particles or fiber form substances (such as titanium oxide), as described in Examined Japanese Patent Application Publication No. 59-6235.

The grain size utilized is preferably not more than 1 μm; however, the stability after dispersion is excellent to be easily handled when it is not more than 0.5 μm. Further, when conductive particles of not more than 0.3 μm are utilized to minimize light scattering, it is specifically preferable because a transparent photosensitive material can be prepared. Further, when the conductive metal oxide is a needle-form or a fiber-form, a length of not more than 30 μm and a diameter of not more than 1 μm are preferable, and a length of not more than 10 μm, a diameter of not more than 0.3 μm and a length/diameter ratio of not less than 3 are specifically preferable. Herein, $SnO_2$ is available on the market from Ishihara Sangyo Kaisha, Ltd., and utilized can be such as SNS-10M, SN-100P, SH-100D and FSS-10M.

A silver salt photothermographic dry imaging material of this invention is provided with at least one photosensitive layer as an image forming layer on a support. Only a photosensitive layer may be formed on a support, however, it is preferable to form at least one photo-insensitive layer on the photosensitive layer. For example, a protective layer is preferably provided on a photosensitive layer for the purpose of protecting the photosensitive layer, and a back-coat layer is preferably provided on the opposite side of a support to prevent "adhesion" between photosensitive materials each other or between a photosensitive material and a roller.

A binder utilized in these protective layer and back-coat layer is selected from polymers, having a glass transition temperature (Tg) of higher than that of a photosensitive layer and hardly generating abrasion or deformation, such as cellulose acetate, cellulose acetatebutyrate and cellulose acetatepropionate.

Herein, to adjust such as gradation, at least two photosensitive layers may be provided on one side of or the both sides of a support.

(Coating of Constituent Layers)

A silver salt photothermographic dry imaging material of this invention is preferably formed by preparing coating solutions, in which above-described materials of each constituent layer are dissolved or dispersed in a solvent, and by performing a heating treatment after the coating solutions having been simultaneously multi-coated. Herein, "simultaneous multi-coating" means that a coating solution of each constituent layer is prepared and each constituent layer (such as a photosensitive layer and a protective layer) is formed by simultaneously multilayer-coating under a state of also capable of being dried simultaneously without repeating coating and drying for each separate layer, at the time of coating the solution on a support. That is, to provide an upper layer before a residual amount of the total solvent in the under layer becomes not more than 70 weigh% (more preferably not more than 90 weight%).

A simultaneous multi-layer coating method of each constituent layer is not specifically limited, and a method well known in the art such as a bar coater method, a curtain coat method, an immersion method, an air-knife method, a hopper coat method, a reverse roll coat method, a gravure coat method and an extrusion coat method can be utilized.

Among the above-described various methods, more preferable are a slide coat method and an extrusion coat

method. These coating methods were described with respect to the side provided with a photosensitive layer, however, it is similar also in the case of preparing a back-coat layer which is coated together with an under coat layer. A simultaneous multi-layer coating method in a photothermographic dry imaging material is detailed in JP-A No. 2000-15173.

Herein, in this invention, the coating weight of silver is suitably selected depending on purposes of a silver salt photothermographic material, however, in the case of images for medical application, it is preferably 0.3 - 1.5 g/$m^2$ and more preferably 0.5 - 1.5 g/$m^2$. Among said coating weight of silver, that arising from silver halide occupies preferably 2 - 18 weight% and more preferably 5 - 15 weight%, against the total silver weight.

Further, in this invention, the coating density of silver halide grains of not smaller than 0.01 μm (as an equivalent spherical particle diameter) is preferably $1 \times 10^{14}$ - $1 \times 10^{18}$ particles/$m^2$ and more preferably $1 \times 10^{15}$ - $1 \times 10^{17}$ particles/$m^2$.

Further, the coating density of photo-insensitive silver long chain aliphatic carboxylate is preferably $1 \times 10^{-17}$ - $1 \times 10^{-14}$ g and more preferably $1 \times 10^{-16}$ - $1 \times 10^{-15}$ g per one particle of silver halide grain of not smaller than 0.01 μm (as an equivalent spherical particle diameter).

In the case of coating being performed under the conditions of the above-described range, a preferable result is obtained with respect to an optical maximum density of silver image per a predetermined coated silver weight, that is, with respect to a silver covering amount (covering power) and tone of a silver image.

In this invention, a solvent is preferably contained at a range of 5 - 1,000 mg/$m^2$ in a silver salt photothermographic dry imaging material at the time of heat development. It is more preferably adjusted to 10 - 150 mg/$m^2$. Thereby, it is possible to prepare a heat developable photosensitive material which exhibits high sensitivity, low fog and high density. The solvent includes those described in paragraph "0030" of JP-A 2001-264930. However, this invention is not limited thereto. Further, these solvents can be utilized alone or in combination of a few types.

The content of the above-described solvent in a heat developable photosensitive material can be adjusted by changing the conditions of such as temperature in such as a drying process after a coating process. Further, the content of said solvent can be measured by means of gas chromatography under conditions suitable to detect the contained solvent.

[Technologies to prevent odor-contamination]

A preferable embodiment as a technology to reduce prevent odor and contamination due to vaporization of such as a low molecular weight compound from a silver salt photothermographic dry imaging material of this invention in a heat development processor (a laser imager) at the time of heat development of said material will be explained.

In a silver salt phtothermographic dry imaging material of this invention, a protective layer preferably has a function to prevent contaminating substances generated during heat development from evaporation or adhesion to the outside of said photosensitive material. For the purpose, a binder of a protective layer is preferably cellulose acetate having an acetylation degree of not less than 50 and not more than 58%, and polymer provided with a vinyl alcohol unit having a saponification degree of not more than 75%. Specifically preferable are vinyl acetate polymer and polyvinyl alcohol.

As cellulose acetate, cellulose acetate having an acetylation degree of not less than 50% and not more than 58% is preferred. On the other hand, as polyvinyl alcohol, low crystallizing polyvinyl alcohol, having a saponification degree of not more than 75%, is preferred. The under limit of the saponification degree is preferably 40% and more preferably 60%.

Further, in a protective layer, polymer other than the above-described ones such as described in USP Nos. 6,352,819, 6, 352, 820 and 6,350,561 can be utilized in combination. The using ratio is preferably 0 - 90 volume% and more preferably 0 - 40 volume%.

As a cross-linking agent for the above-described binder, an isocyanate type compound, a silane compound, an epoxy compound or acid anhydride are preferred.

Further, it is preferable to reduce the amount of substances vaporized from said photosensitive material at the time of heat development by utilizing an acid group capturing agent. An acid group capturing agent includes an isocyanate type represented by following Formula (X-1), an epoxy type represented by following Formula (X-2), a phenol type represented by following Formula (X-3), an amine type or a diamine type represented by following Formula (X-4) and a carbodiimide type represented by Formula (CI), which will be described later. Specifically preferable is a carbodiimide type compound.

**Formula (X-1)** $R_x$-NCO

Formula (X-2)

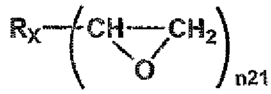

Formula (X-3)

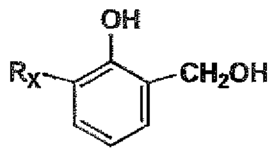

Formula (X-4)

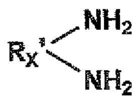

In the formulas, Rx is a substituent; Rx' is a divalent connecting group; and n21 is 1 - 4.

[Packaging]

In the case of a silver salt photothermographic dry imaging material of this invention being stored, to prevent density variation and fog generation due to aging or to reduce such as curling and core set property, a packaging material having a low oxygen permeability and/or moisture permeability is utilized for the packaging. The oxygen permeability at 25 °C is preferably not more than 50 ml/atm·m$^2$·day (herein, 1 atm is 1.01325 x $10^5$ Pa), more preferably not more than 10 ml/atm·m$^2$·day and most preferably not more than 1.0 ml/atm·m$^2$·day. The moisture permeability is preferably not more than 0.01 g/m$^2$·40 °C·90%RH·day (according to a cup method of JIS Z0208), more preferably not more than 0.005 g/m$^2$·40 °C·90%RH·day and most preferably not more than 0.001 g/m$^2$·40 °C·90%RH·day.

Specific examples of a packaging material for a heat developable photosensitive material are those described in such as JP-A Nos. 8-254793, 2000-206653, 2000-235241, 2002-062625, 2003-015261, 2003-057790, 2003-084397, 2003-098648, 2003-098635, 2003-107635, 2003-131337, 2003-146330, 2003-226439 and 2003-228152. Further, the vacancy ratio of the inside of a package is 0.01 - 10% and preferably 0.02 - 5%, and a nitrogen partial pressure of the inside of a package is set at not less than 80% and preferably at not less than 90% by nitrogen sealing. Further, a relative humidity of the inside of a package is set at 10 - 60% and preferably at 40 - 55%.

## EXAMPLES

Example 1

[Preparation of Support having been provided with Under-coat Layer]

After the both surfaces of polyethylene terephthalate film, which has a blue dye density of 0.135 and having been biaxially stretched had been subjected to a corona discharge treatment of 10 W/m$^2$·min, the following back surface side lower under-coat layer coating solution was coated on the one surface so as to make a dry layer thickness of 0.06 μm, followed by being dried at 140 °C, and then the following back surface side upper under-coat layer coating solution was coated so as to make a dry layer thickness of 0.2 μm, followed by being dried at 140 °C. Further, on the opposite surface, the following photosensitive layer side lower under-coat layer coating solution was coated so as to make a dry layer thickness of 0.25 μm, followed by being dried at 140 °C, and then the following photosensitive layer side upper under-coat layer coating solution was coated so as to make a dry layer thickness of 0.06 μm, followed by being dried at 140 °C. This sample was dried at 140 °C for 2 minutes to prepare an under-coated sample.

<Back Surface Side Lower Under-coat Layer Coating Solution>

| | |
|---|---|
| Copolymer latex of styrene/glycidyl methacrylate/butyl acrylate (20/20/40) (solid content of 30%) | 16.0 g |
| Copolymer latex of styrene/butyl acrylate/hydroxymethyl methacrylate (25/45/30) (solid content of 30%) | 4.0 g |

(continued)

| | |
|---|---|
| $SnO_2$ sol (solid content of 10%) (synthesized by a method described in JP-A 10-059720) | 91 g |
| Surfactant A | 0.5 g |

The above composition was added with distilled water to be made up to 1,000 ml, whereby a coating solution was prepared.

<Back Side Surface Upper Under-coat Layer Coating Solution>

| | |
|---|---|
| Modified water-based polyester A (solid content of 18%) | 215.0 g |
| Surfactant A | 0.4 g |
| True-spherical silica matting agent: Seahoster KE-P50 (produced by Nippon Shokubai Co., Ltd.) | 0.3 g |

The above composition was added with distilled water to be made up to 1000 ml, whereby a coating solution was prepared.

<Synthesis of Modified Water-based Polyester A>

After 35.4 weight parts of dimethyl terephthalate, 33.63 weigh parts of dimethyl isophthalate, 17.9 weight parts of sodium salt of dimethyl 5-sulfo-isophthalate, 62 weigh parts of ethylene glycol, 0.065 weigh parts of calcium acetate monohydrate and 0.022 weight parts of manganese acetate tetrahydrate were charged in a polymerization reaction vessel to perform an ester exchange reaction while distillation eliminating methanol at 170 - 220°C under a nitrogen atmosphere, 0.04 weight parts of trimethyl phosphate, 0.04 weight parts of antimony trioxide and 6.8 weight parts of 1,4-cyclohexane dicarboxylic acid were added as a polycondensation catalyst to perform esterification by distillation eliminating an approximately theoretical amount of water at 220 - 235 °C. Thereafter, the inside of the reaction system was brought into a state of reduced pressure and raised temperature over approximately 1 hour and finally a polycondensation reaction for approxiomately 1 hour was performed at 280 °C and not higher than 133 Pa, whereby a precursor of modified water-based polyester A was prepared. The intrinsic viscosity of the precursor was 0.33.

Pure water of 850 ml was charged in a three neck distillation flask of 2L equipped with a stirrer, a reflux condenser and a thermometer, and 150 g of the above-described precursor was gradually added while rotating the stirring fun. After stirring at room temperature for 30 minutes as it is, the system was heated over 1 hour so as to make 98 °C of the interior temperature, and was heat dissolved at this temperature for 3 hours. After finish of heating, the system was cooled down to room temperature over one hour and was kept for one night, whereby a precursor having a solid concentration of 15 weight% was prepared.

The aforesaid precursor solution of 1,900 ml was charged in a four neck distillation flask of 3L equipped with a stirrer, a reflux condenser, a thermometer and a dropping funnel, and the interior temperature was heated up to 80°C while rotating the stirrer. Therein, 6.52 ml of a 24% aqueous solution of ammonium peroxide were added, a mixed monomer solution (28.5 g of glycidyl methacrylate, 21.4 g of ethylacrylate, 21.4 g of methylmethacrylate) being titrated over 30 minutes, and the reaction was continued for further 3 hours. Then, the system was cooled down to 30°C and was filtered, whereby a solution of modified polyester A having a solid concentration of 18 weight% was prepared.

<Photosensitive Layer Side Lower Under-coat Layer Coating Solution>

| | |
|---|---|
| Copolymer latex of styrene/acetoacetoxyethyl methacrylate/glycidyl methacrylate/n-butyl acrylate (40/40/20/0.5) (solid content of 30%) | 70 g |
| Surfactant A | 0.3 g |

The above composition was added with distilled water to be made up to 1,000 ml, whereby a coating solution was prepared.

<Photosensitive Layer Side Upper Under-coat Layer Coating Solution>

| | |
|---|---|
| Modified water-based polyester B (solid content of 18%) | 80.0 g |
| Surfactant A | 0.4 g |
| True-spherical silica matting agent: Seahoster KE-P50 (produced by Nippon Shokubai Co., Ltd.) | 0.3 g |

The above composition was added with distilled water to be made up to 1000 ml, whereby a coating solution was prepared.

<Synthesis of Modified Water-based Polyester B>

A solution of modified water-based polyester B was prepared in a similar manner to preparation of modified polyester A, except that the precursor solution was changed to 1,800 ml and the composition of a mixed monomer solution was changed to 31 g of styrene, 31 g of acetoacetoxyethyl methacrylate, 61 g of glycidyl methacrylate and 7.6 g of n-butyl acrylate.

Surfactant A

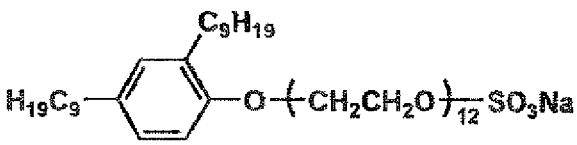

<Preparation of Silver Halide Emulsion>

<Solution A1>

| | |
|---|---|
| Phenylcarbamoyl gelatin | 66.2 g |
| HO $(CH_2CH_2O)_n$- $(CH(CH_3)\ CH_2O)_{17}$-$(CH_2CH_2O)_mH$ (m + n= 5 - 7) (10% methanol solution) | 10 ml |
| Potassium bromide | 0.32 g |
| Water to make | 5429 ml |
| <Solution B1> | |
| 0.67 mol/L silver nitrate aqueous solution | 2635 ml |
| <Solution C1> | |
| Potassium bromide | 51.55 g |
| Potassium iodide | 1.47 g |
| Water to make | 660 ml |
| <Solution D1> | |
| Potassium bromide | 154.9 g |
| Potassium iodide | 4.41 g |
| Potassium iron (II) hexacyanide (0.5% solution) | 15 ml |
| Potassium iridium (III) hexachloride (1% solution) | 0.93 ml |
| Water to make | 1982 ml |

(continued)

| | |
|---|---|
| <Solution E1> | |
| 0.4 mol/L potassium bromide aqueous solution an amount controlling the later mentioned silver potential | |
| <Solution F1> | |
| Potassium hydroxide | 0.71 g |
| Water to make | 20 ml |
| <Solution G1> | |
| 56% acetic acid aqueous solution | 10.0 ml |
| <Solution H1> | |
| Sodium carbonate anhydride | 1.16 g |
| Water to make | 107 ml |

Employing a mixing stirrer described in Examined Japanese Patent Application Publication No. 58-58288, added to solution A1 were a 1/4 amount of solution B1 and the total amount of solution C1 over 4 minutes 45 seconds utilizing a double-jet method, while adjusting the temperature to 35°C and the pAg to 8.09, whereby nuclei were formed. After 1 minute, the total amount of solution F1 was added. During mixing, the pAg was appropriately adjusted employing solution E1. After 6 minutes, added to the resulting solution were 3/4 amount of solution B1 and the total amount of solution D1 over 14 minutes 15 seconds employing a double-jet method, while adjusting the temperature to 35°C, and the pAg to 8.09. After said solution was stirred for 5 minutes, it was cooled to 30 °C, and was added with the total amount of solution G1, whereby a silver halide emulsion was precipitated. The resulting supernatant was then removed while leaving 2,000 ml of resulting precipitation, to which 10 liters of water were added. After stirring, silver halide was precipitated again. Subsequently, the resulting supernatant was removed while leaving 1,500 ml of the precipitation, to which 10 liters of water were added again. After stirring, silver halide was precipitated. After removing the supernatant while leaving 1500 ml of resulting precipitation, to which solution H1 was added and the resulting mixture was heated to 60 °C and stirred for further 100 minutes. Finally, the pH was adjusted to 5.8 and water was added so as to obtain a total weight of 1,161 g per mol of silver, whereby a photosensitive silver halide emulsion was prepared.

Said emulsion was comprised of monodispersed cubic silver iodobromide grains having an average grain size of 0.043 μm and a [100] plane ratio of 92%.

(Preparation of Silver Aliphatic Carboxylate Grains)

Aliphatic carboxylic acid (a composition ratio of 85 mol% of behenic acid, 11 mol% of arachidic acid and 4 mol% of stearic acid) of 450 g and 90% of pure water to adjust the concentration to 5 weight% were added with 252 ml of a 5 M/L KOH aqueous solution over 5 minutes while stirring at 85 °C to be reacted for 60 minutes, and finally being added with pure water to make up 5 weight%, whereby a potassium aliphatic carboxylate aqueous solution was prepared. Further, a silver nitrate aqueous solution of 4,289 ml having a concentration of 5 weight% and warmed at 10 °C was prepared.

The total amount of the aforesaid potassium aliphatic carboxylate aqueous solution and a silver nitrate aqueous solution each were simultaneously added at a constant addition rate over 10 minutes while stirring by TK Pipeline Homomixer Type M, produced by Primix Corp., at 10,000 rpm and the system was kept at 30°C. Then, the solid portion was separated by filtration and washed with water until to make a conductivity of the filtrate of 30 μS/cm. The obtained cake having been dehydrated was dried at 50 °C to prepare powder of silver aliphatic carboxylate having been dried. The equivalent spherical mean diameter of the prepared silver aliphatic carboxylate grains was 0.36 μm and the standard deviation was 0.23 μm.

<Preparation of Preliminary Dispersion A>

Dissolved in 1,457 g of methyl ethyl ketone were 14.57 g of polyvinylbutyral resin BL-SHP (produced by Sekisui Chemical Co., Ltd.), to which 500 g of powdered silver aliphatic carboxylate were gradually adding with stirring by use of a dissolver, DISPERMAT CA-40M, produced by VMA-Getzmann Co. and the system was sufficiently mixed to prepare a preliminary dispersion.

<Preparation of Photosensitive Emulsion Dispersion>

By employing a pump, preliminary dispersion prepared above was supplied into a medium type homogenizer, Dispermat SL-C12EX Type (produced by VMA-Getzmann Co.) filled with 0.5 mm diameter zirconia beads (Torayceram,

produced by Toray Industries Inc.) in an amount of 80% of the interior volume, so as to obtain a retention time in the mill of 1.5 minutes, and was dispersed at a circumferential mill speed of 8 m/s and 25 °C, whereby a photosensitive emulsion dispersion was prepared.

(Addition of Silver Halide Grain Emulsion)

<Synthesis of Polymer for Dispersion of Silver Halide Grains>

A four neck separable flask of 0.5 L; which is equipped with a dropping funnel, a thermometer, a nitrogen gas introducing tube, a stirrer and a reflux condenser; was charged with each monomer comprising 50 g of methyl ethyl ketone, 45 g of DMMA, 20g of PME-400 and 20 g of PSE-400, and further with 0.12 g of lauryl peroxide; followed by being heated at 80°C. Further, a solution comprising 15 g of NIPAM monomer having been dissolved in 33 g of methyl ethyl ketone was titrated into the flask over 2 hours. Thereafter, the system was heated over 1 hour to be in a reflux state, then a solution comprising 0.17 g of lauryl peroxide having been dissolved in 33 g of methyl ethyl ketone was titrated in to the flask over 2 hours, and reaction was continued for further 3 hours at the same temperature. Then, the system was added with a solution comprising 0.33 g of methylhydroquinone having been dissolved in 107 g of methyl ethyl ketone and cooled, whereby a polymer solution having 30 weight% of polymer was prepared. The molecular weigh was determined by means of GPC as a polystyrene conversion weight average molecular weight.
PME-400: methacrylate provided with $-(EO)_m-CH_3$ (approximately, m = 9)
PSE-400: methacrylate provided with $-(EO)_m-C_{18}H_{37}$ (approximately, m = 9)
(EO: ethyleneoxy group)
All the above are produced by NOF Corp.
NIPAM: N-isopropyl acrylamide
DAAM: diacetone acrylamide (Kyowa Hakko Kogyo Co., Ltd.)

Preparation of Polymer Dispersion of Silver Halide Emulsion (Silver Halide Grains in Methyl Ethyl Ketone Solvent.)

A polymer solution of 33 g was made up to 121 g with methanol and was stirred at 45 °C for 30 minutes. Therein, the aforesaid silver halide emulsion (59.2 g) kept at 45 °C was titrated over 20 minutes, and the system was further stirred for 30 minutes. After the system was cooled down to 32 °C over 30 minutes, 600 g of methyl ethyl ketone was titrated in to the system, whereby a polymer dispersion of silver halide emulsion was prepared.

(Preparation of Stabilizer Solution)

A stabilizer solution was prepared, by dissolving 1.0 g of stabilizer 1 and 0.31 g of potassium acetate in 17.79 g of methanol.

(Preparation of Infrared Sensitizing Dye Solution A)

Infrared sensitizing dye solution A was prepared by dissolving 30 mg of infrared sensitizing dye 1, 1.40 mg of infrared sensitizing dye 2, 2.5 g of 2-chloro-benzoic acid, 21.5 g of stabilizer 2 and 130 mg of 5-methyl-2-mercaptobenzimidazole in 140 g of MEK, in a dark place.

<Preparation of Additive Solution "a">

Additive solution "a" was prepared by dissolving 27.98 g of developer A, 2.28 g of 4-methylphthalic acid, 111 mg of the aforesaid infrared dye (described in Table 1), 365 mg of leuco dye YA-10 and 172 g of polyvinyl acetal resin BL-5Z (Sekisui Chemical Co., Ltd.) in 110 g of MEK.

<Preparation of Additive Solution "b">

Additive solution "b" was prepared by dissolving 3.31 g of antifoggant 2 in 46.9 g of MEK.

<Preparation of Additive Solution C>

Additive solution C was prepared by dissolving 3.34 g of phthalazine in 23.0 g of MEK.

<Preparation of Additive Solution "d">

Additive solution "d" was prepared by dissolving 0.05 g of silver saving agent (SE2-1) in 39.95 g of MEK.

<Preparation of Additive Solution "e">

Additive solution "e" was prepared by dissolving 0.05 g of silver saving agent (SE2-2) in 39.95 g of MEK.

<Preparation of Photosensitive Layer Coating Solution>

Under an inert gas atmosphere (comprising 97% nitrogen gas), the aforesaid photosensitive emulsion dispersion (50 g) and 8.80 g of MEK were heated at 18 °C while stirring, into the mixture added were 23.4 g of a polymer dispersion of silver halide emulsion and then 0.44 g of antifoggant 1 (11% methanol solution), followed by stirring for 1 hour. Further, 0.66 g of calcium bromide (11% methanol solution) were added and followed by stirring for 20 minutes. Successively, after 0.62 g of the aforesaid stabilizer solution was added and stirring for 10 minutes, 4.93 g of aforesaid infrared sensitizing dye solution A were added and followed by stirring for 1 hour. Thereafter, the resulting mixture was cooled to 13 °C and stirred for further 30 minutes. While maintaining the system at 13 °C, 12.5 g of polyvinyl butyral resin BL-5Z (produced by Sekisui Chemical Co., Ltd.) were added and stirred for 30 minutes, and 1.26 g of tetrachloro phthalic acid (3.7 weight% MEK solution) were added and stirred for 15 minutes. Further, while stirring, 24.8 g of additive solution "a", 2.26 g of Desmodur N3300/aliphatic isocyanate, produced by Mobay Co. (23.3% MEK solution), 5.03 g of additive solution "b" and 2.63 g of additive solution C were successively added and followed by stirring, whereby a photosensitive layer coating solution was prepared.

Infrared sensitizing dye 1

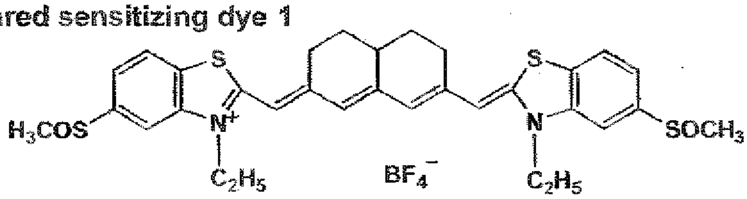

Infrared sensitizing dye 2

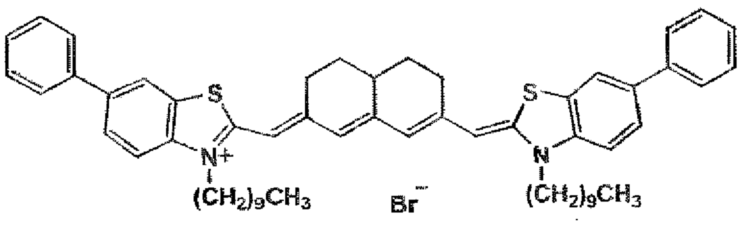

Sensitizing dye solubilizer

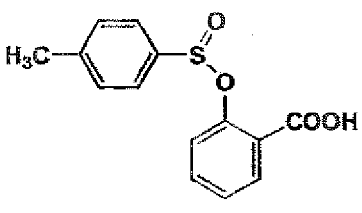

Stabilizer 1

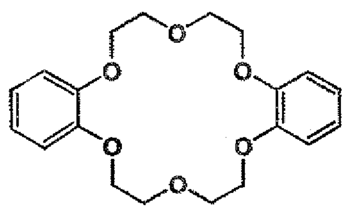

Developer A

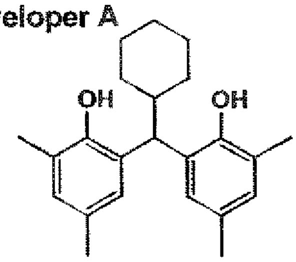

Comparative infrared dye 1

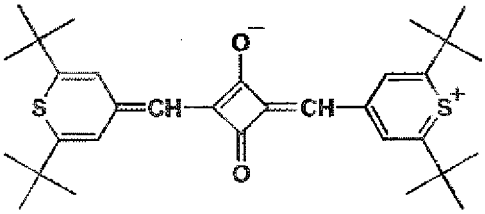

Comparative infrared dye 2

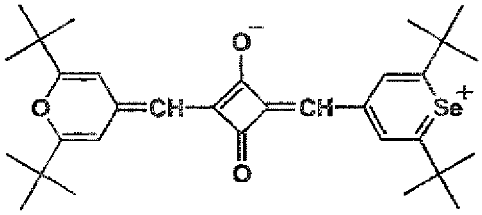

Antifoggant 1

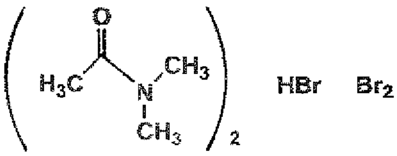

Antifoggant 2

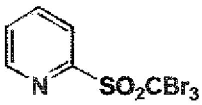

<Surface Protective Layer>

The following composition was prepared in a similar manner to a photosensitive layer coating solution and was coated on a photosensitive layer and dried to make the following coating amount (per 1 $m^2$), whereby a photosensitive layer protective layer was formed.

| | |
|---|---|
| Cellulose acetate propionate (CAP141-20 (produced by Eastman Chemical Corp.)) | 1.15 g |
| Polymethyl methacrylate (Palaroide A-21 (produced by Rhom & Haas Corp.)) | 45 mg |
| Silica matting agent (Sylysia 320(5) (produced by Fuji Sylysia Chemical Ltd.)) | 25 mg |
| 1,3-bis (vinylsulfonyl) -2-propanol | 20 mg |
| Benzoriazole | 15 mg |
| $C_9F_{17}O\ (CH_2CH_2O)_{23}C_9F_{17}$ | 42 mg |
| $LiO_3S\text{-}CF_2CF_2CF_2\text{-}SO_3Li$ | 1 mg |

<Back Layer>

A coating solution of the following composition was prepared and was coated on the opposite side to a photosensitive layer coated surface and dried to make the following coating amount (per 1 $m^2$), whereby a back layer was formed.

| | |
|---|---|
| Cellulose acetate propionate (CAP141-20 (produced by Eastman Chemical Corp.)) | 1.85 g |
| Polyester resin (Vitel 2200B (produced by Bostic Findley Corp.)) | 95 mg |
| Silica matting agent (Sylysia 450 (produced by Fuji Sylysia Chemical Ltd.)) | 15 mg |
| Ethylene bisstearic acidamide | 60 mg |
| Infrared Dye (described in Table 1) | 3.5 mg |

(continued)

| | |
|---|---|
| $C_9F_{17}O(CH_2CH_2O)_{23}C_9F_{17}$ | 100 mg |
| $LiO_3S\text{-}CF_2CF_2CF_2\text{-}SO_3Li$ | 18 mg |

<Preparation of Silver Salt Photothermographic Dry Imaging Materials 1 - 14>

The above-prepared photosensitive layer coating solution and surface protective layer coating solution were multi-layer coated on the above-prepared photosensitive layer side under coat layer on a support by use of an extrusion type coater well known in the art so as to make the total silver amount of 1.2 g/m2 as for a photosensitive layer solution and the above-described coating amount as for a surface protective layer coating solution. Successively, a back layer coating solution was coated on the opposite surface so as to make the above-described coating amount. Thereafter, drying was conducted employing drying wind having a drying temperature of 75°C and a dew point of 10 °C for 10 minutes, whereby samples 1 - 14 were prepared.

<Preparation of Silver Salt Phtothermographic Dry Imaging Material 15>

Sample 15 was prepared in a similar manner to preparation of silver salt hotothermographic dry imaging material 7, except that 4.20 g of developer (RD1-1) and 23.78 g of developer A (RD2-6) instead of 27.98 g of developer A (RD2-6) were utilized in (preparation of additive solution "a").

<Preparation of Silver Salt Phtothermographic Dry Imaging Material 16>

Sample 16 was prepared in a similar manner to preparation of silver salt hotothermographic dry imaging material 7, except that 4.20 g of developer (RD1-1) and 23.78 g of developer A (RD2-6) instead of 27.98 g of developer A (RD2-6) were utilized in (preparation of additive solution "a").

<Preparation of Silver Salt Phtothermographic Dry Imaging Material 17>

Sample 15 was prepared in a similar manner to preparation of silver salt hotothermographic dry imaging material 7, except that 27.98 g of developer (RD1-10) instead of 27.98 g of developer A (RD2-6) were utilized in (preparation of additive solution "a").

<Preparation of Silver Salt Phtothermographic Dry Imaging Material 18>

Sample 18 was prepared in a similar manner to preparation of silver salt hotothermographic dry imaging material 15, except that a photosensitive layer coating solution was prepared by further adding 2.0 g of additive solution "d" and stirring successive to 2.63 g of additive solution C in (preparation of a photosensitive layer coating solution).

<Preparation of Silver Salt Phtothermographic Dry Imaging Material 19>

Sample 19 was prepared in a similar manner to preparation of silver salt hotothermographic dry imaging material 16, except that a photosensitive layer coating solution was prepared by further adding 2.0 g of additive solution "e" and stirring successive to 2.63 g of additive solution C in (preparation of a photosensitive layer coating solution).

<Preparation of Silver Salt Phtothermographic Dry Imaging Material 20>

Sample 20 was prepared in a similar manner to preparation of silver salt hotothermographic dry imaging material 15, except that a photosensitive layer coating solution was prepared by further adding 2.0 g of additive solution "d" and stirring successive to 2.63 g of additive solution C in (preparation of a photosensitive layer coating solution).

<Preparation of Silver Salt Phtothermographic Dry Imaging Material 21>

Sample 21 was prepared in a similar manner to preparation of silver salt hotothermographic dry imaging material 7, except that 27.98 g of developer B instead of 27.98 g of developer A (RD2-6) were utilized in (preparation of additive solution "a").

Developer B

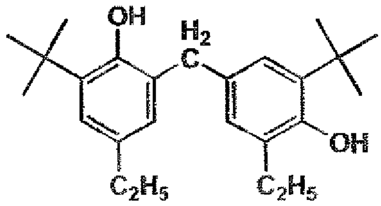

<Exposure and Development Process>

Photothermographic dry imaging materials 1 - 14 prepared in the above manner, after having been processed into a size of 34.5 cm x 43.0 cm, were thermally developed (51, 52 and 53 of Fig. 1 each are set to 100 °C, 123 °C and 123 °C, respectively, and samples were conveyed so as to make contact for 2 seconds, 2 seconds and 6 seconds, respectively, to make the total of 10 seconds) simultaneous with exposure by use of a heat development processor (a semiconductor laser of 810 nm having a maximum output power of 50 mW is mounted, a required floor area of 0.35 $m^2$). Herein, "to thermally develop simultaneous with exposure" means that, in one sheet of a photosensitive material, development is started in a part of the sheet which has been already exposed, while a part of the sheet is exposed. The distance between an exposure part and a development part was 12 cm, and the line speed at this time was 30 mm/second. In this case, a conveying speed from a photosensitive material supplying device part to an image exposure device part, a conveying speed in an exposure part and a conveying aped in a development part each were 30 mm/second. The bottom position of a photosensitive material stock tray which is located at the undermost part was 45 cm high from the floor surface.

Photothermographic dry imaging materials 15 - 21 were subjected to exposure and development in a similar manner except that the line speed in a heat development part was changed from 30 mm/second to 40 mm/second.

(Image Quality Evaluation)

A type of infrared dye, a material of focusing lens, a sealing degree of scanning exposure portion 55, presence or absence of humidity controlling agent 559, presence or absence of feed back by humidity sensor 558, and the heating surface of film F were varied as described in Table 1, and after a photosensitive material having been set in a heat development recorder under environment of 23 °C and 30% RH, 23 °C and 70% RH, 30 °C and 30% RH, 30 °C and 30% RH; a chest diagnostic image (an image sample obtained by use of a chest phantom) was output and was visually observed to evaluate the total evaluation comprising sharpness, graininess and density stability, according to the following criteria. The results will be shown in Table 1.

As a resin lens, a cycloolefin resin lens was utilized.

The shield degree was defined as (1 - area of opening part/surface area of case 550 without opening part) x 100 (%).

Table 1

| No. | Heat developable photosensitive material | Heat development recorder: | | | | | Image quality (Total evaluation of sharpness, graininess and density stability) | | | | *3 | Remarks |
|---|---|---|---|---|---|---|---|---|---|---|---|---|
| | Infrared dye | Focusing lens material | Shielding degree | Humidity controlling agent | Control by sensor | Heating surface | 25 °C 70%RH | 25 °C 30%RH | 30°C 70%RH | 30 °C 30%RH | 25 °C 20%RH | |
| 1 | ** 1 | Glass | 70% | No | No | *1 | 2.0 | 3.5 | 1.0 | 3.0 | 1.0 | Comp. |
| 2 | ** 2 | Glass | 95% | No | No | *1 | 2.5 | 3.5 | 1.5 | 3.0 | 1.5 | Comp. |
| 3 | ** 2 | Resin | 95% | No | No | *1 | 3.0 | 3.5 | 3.0 | 3.0 | 3.0 | Inv. |
| 4 | ** 2 | Resin | 95% | Yes | No | *1 | 3.5 | 3.5 | 3.0 | 3.5 | 3.0 | Inv. |
| 5 | ** 2 | Resin | 95% | Yes | Yes | *1 | 3.5 | 4.0 | 3.0 | 4.0 | 3.0 | Inv. |
| 6 | ** 2 | Resin | 95% | Yes | Yes | *2 | 4.0 | 4.0 | 3.5 | 4.0 | 3.0 | Inv. |
| 7 | sq-1 | Resin | 95% | Yes | Yes | *2 | 5.0 | 5.0 | 5.0 | 5.0 | 3.5 | Inv. |
| 8 | sq-3 | Resin | 95% | Yes | Yes | *2 | 5.0 | 5.0 | 5.0 | 5.0 | 3.5 | Inv. |
| 9 | sq-4 | Resin | 95% | Yes | Yes | *2 | 5.0 | 5.0 | 5.0 | 5.0 | 3.5 | Inv. |
| 10 | sq-5 | Resin | 95% | Yes | Yes | *2 | 5.0 | 5.0 | 5.0 | 5.0 | 3.5 | Inv. |
| 11 | sq-12 | Resin | 95% | Yes | Yes | *2 | 5.0 | 5.0 | 5.0 | 5.0 | 3.5 | Inv. |
| 12 | sq-16 | Resin | 95% | Yes | Yes | *2 | 5.0 | 5.0 | 5.0 | 5.0 | 3.5 | Inv. |
| 13 | sq-20 | Resin | 95% | Yes | Yes | *2 | 5.0 | 5.0 | 5.0 | 5.0 | 3.5 | Inv. |
| 14 | sq-24 | Resin | 95% | Yes | Yes | *2 | 5.0 | 5.0 | 5.0 | 5.0 | 3.5 | Inv. |
| 15 | sq-1 | Resin | 95% | Yes | Yes | *2 | 5.0 | 5.0 | 5.0 | 5.0 | 4.5 | Inv. |
| 16 | sq-1 | Resin | 95% | Yes | Yes | *2 | 5.0 | 5.0 | 5.0 | 5. 0 | 4.5 | Inv. |
| 17 | sq-1 | Resin | 95% | Yes | Yes | *2 | 5.0 | 5.0 | 5.0 | 5.0 | 4.5 | Inv. |
| 18 | sq-1 | Resin | 95% | Yes | Yes | *2 | 5.0 | 5.0 | 5.0 | 5.0 | 5.0 | Inv. |
| 19 | sq-1 | Resin | 95% | Yes | Yes | *2 | 5.0 | 5.0 | 5.0 | 5.0 | 5.0 | Inv. |
| 20 | sq-1 | Resin | 95% | Yes | Yes | *2 | 5.0 | 5.0 | 5.0 | 5.0 | 5.0 | Inv. |

(continued)

| No. | Heat developable photosensitive material | Heat development recorder: | | | | | Image quality (Total evaluation of sharpness, graininess and density stability) | | | | *3 | Remarks |
|---|---|---|---|---|---|---|---|---|---|---|---|---|
| | Infrared dye | Focusing lens material | Shielding degree | Humidity controlling agent | Control by sensor | Heating surface | 25 °C 70%RH | 25 °C 30%RH | 30°C 70%RH | 30 °C 30%RH | 25 °C 20%RH | |
| 21 | sq-1 | Resin | 95% | Yes | Yes | *2 | 2.0 | 2.5 | 1.5 | 3.0 | 1.5 | Comp. |

**; Comparative dye, *1: Photosensitive layer surface, *2: Photo-insensitive layer surface, *3: Density unevenness at heat development, Comp.: Comparison, Inv.: Invention

5: Being specifically superior in sharpness and graininess, and satisfactory image quality for a medical diagnostic image.
4: Sharpness and graininess satisfy required quality, and preferable image quality for a medical diagnostic image is obtained.
3: Sharpness and graininess are slightly inferior; however, density is stable to cause no problem in medical diagnosis.
2: Unsharpness is significant, and image quality of granular appearance is observed. It is slightly problematic for diagnosis.
1: Unsharpness and granular appearance are significant, and it is image quality to make diagnosis difficult.
With respect to image quality capability, it is preferable that the evaluation level is naturally high and is in a stable evaluation level even in any output environment.

<Density Unevenness at Heat development under Low Humidity Condition>

A sample, after having been rehumidified under environment of 25°C and a relative humidity of 20% for 24 hours, was thermally developed under environment of 25 °C and a relative humidity of 20% and conditions similar to the above-described conditions employed for image evaluation, density unevenness at these conditions was visually evaluated. Herein the conveying speed in a heat development part was changed from 30 mm/second to 40 mm/second. The results will be shown in Table 1.
Density unevenness after development was visually evaluated by 0.5 rank steps based on the following criteria.
5: No density unevenness is observed.
4: Slight unevenness is generated.
3: Weak density unevenness is partly generated.
2: Strong density unevenness is partly generated.
1: Strong density unevenness is generated all over the surface.
In this invention, a high quality image has been achieved as shown in Table 1.

## Claims

**1.** An image forming method comprising the steps of:

(1) applying a laser beam to a heat developable photosensitive material with a scanning exposure part comprising a semiconductor laser, a polygon mirror, and an imaging lens formed of a resin, the imaging lens comprising at least one of an fθ lens and a cylindrical lens, and
(2) thermally developing the exposed imaging material to record an image,

wherein the heat developable photosensitive material is provided on a support with a photosensitive layer, comprising an organic silver salt, a silver halide, a binder and a reducing agent on a support, and the reducing agent is a compound represented by following Formula (RD1):

Formula (RD1)

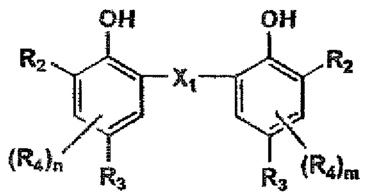

wherein $X_1$ is a chalcogen atom or $CHR_1$; $R_1$ is a hydrogen atom, a halogen atom, an alkyl group, an alkenyl group, an aryl group or a heterocyclic group; $R_2$ is an alkyl group, and a plurality of $R_2$s may be the same or different from each other; $R_3$ is a hydrogen atom or a group capable of substituing on a benzene ring; $R_4$ is a group capable of substituing on a benzene ring; and m and n are each an integer of 0 - 2.

**2.** The image forming method described in claim 1, wherein at least one of $R_2$ in the compound represented by Formula (RD1) is a secondary or tertiary alkyl group.

**3.** The image forming method described in claim 1 or 2,
wherein the photosensitive layer contains a compound represented by following Formula (SE1) or (SE2):

Formula (SE1)

$Q_1$-NHNH-$Q_2$

wherein $Q_1$ is an aromatic group or a hetrocyclic group bonding with -NHNH- via a carbon atom; and $Q_2$ is a carbamoyl group, an acyl group, an alkoxycarbonyl group, an aryloxycarbonyl group, a sulfonyl group or a sulfamoyl group, and

Formula (SE2)

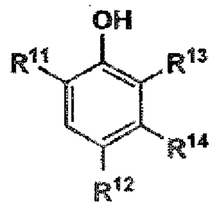

wherein $R^{11}$ is an alkyl group, an acyl group, an acyamino group, a sulfonamide group, an alkoxy group, a carbonyl group or a carbamoyl group; $R^{12}$ is a hydrogen atom, a halogen atom, an alkyl group, an alkoxy group, an aryloxy group, an alkylthio group, an arylthio group, an acyloxy group or a carboxylic acid ester group; $R^{13}$ and $R^{14}$ are each a group capable of substituing on a benzene ring; and $R^{13}$ and $R^{14}$ may bond to each other to form a condensed ring.

**4.** The image forming method described in any one of claims 1 - 3,
wherein the resin is cycloolefin polymer.

**5.** The image forming method described in any one of claims 1 - 4,
wherein the scanning exposure part is covered by a cover member.

**6.** The image forming method described in claims 5,
wherein a humidity controlling agent is provided in the interior of the cover member.

**7.** The image forming method described in any one of claims 1 - 6,
wherein a humidity sensor is provided in the interior of the cover member or in the conveying path of the heat developable photosensitive material.

**8.** The image forming method described in any one of claims 1 - 7,
wherein a thermo-sensor is provided in the interior of the cover member or in the conveying path of the heat developable photosensitive material.

**9.** The image forming method described in claim 7, wherein a development temperature is controlled based on a detection result of the humidity sensor.

**10.** The image forming method described in claim 7,
wherein a development time is controlled based on the detection result of the humidity sensor.

**11.** The image forming method described in claim 7, wherein output power of a semiconductor laser is controlled based on the detection result of the humidity sensor.

**12.** The image forming method described in claim 8,
wherein the development temperature is controlled based on a detection result of the thermo-sensor.

**13.** The image forming method described in claim 8,
wherein the development time is controlled based on the detection result of the thermo-sensor.

**14.** The image forming method described in claim 8, wherein output power of the semiconductor laser is controlled based on the detection result of the thermo-sensor.

**15.** The image forming method described in any one of claims 1 - 14, wherein a heat treatment is conducted from the photo-insensitive surface of the heat developable photosensitive material.

**16.** The image forming method described in claim 15, wherein the heat developable photosensitive material contains a compound represented by following Formula (1):

Formula (1)

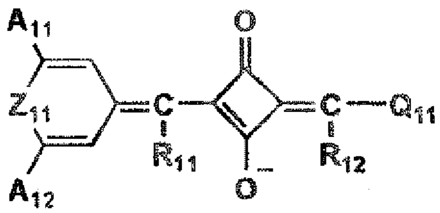

wherein, $R_{11}$ and $R_{12}$ are each independently a hydrogen atom or a substituent, $Z_{11}$ is O, S, N-$R_1$, Se or Te; $R_1$ is an alkyl group or an aryl group; $Q_{11}$ is a six-member heterocyclic ring; provided that $A_{11}$ and $A_{12}$ are each independently a substituent; provided that $A_{11}$ and $A_{12}$ are different from each other.

**17.** The image forming method described in any one of claims 1 - 16, wherein a sheet photosensitive material comprising a silver salt photothermographic dry imaging material formed into a sheet form is conveyed at a conveying rate of 33 - 150 mm/sec while being heated.

**18.** The image forming method described in any one of claims 1 - 16, wherein the sheet photosensitive material comprising the silver salt photothermographic dry imaging material formed into a sheet form is developed with a laser imager having a distance between an exposure part and a development part of not less than 0 cm and not more than 50 cm.

FIG. 1

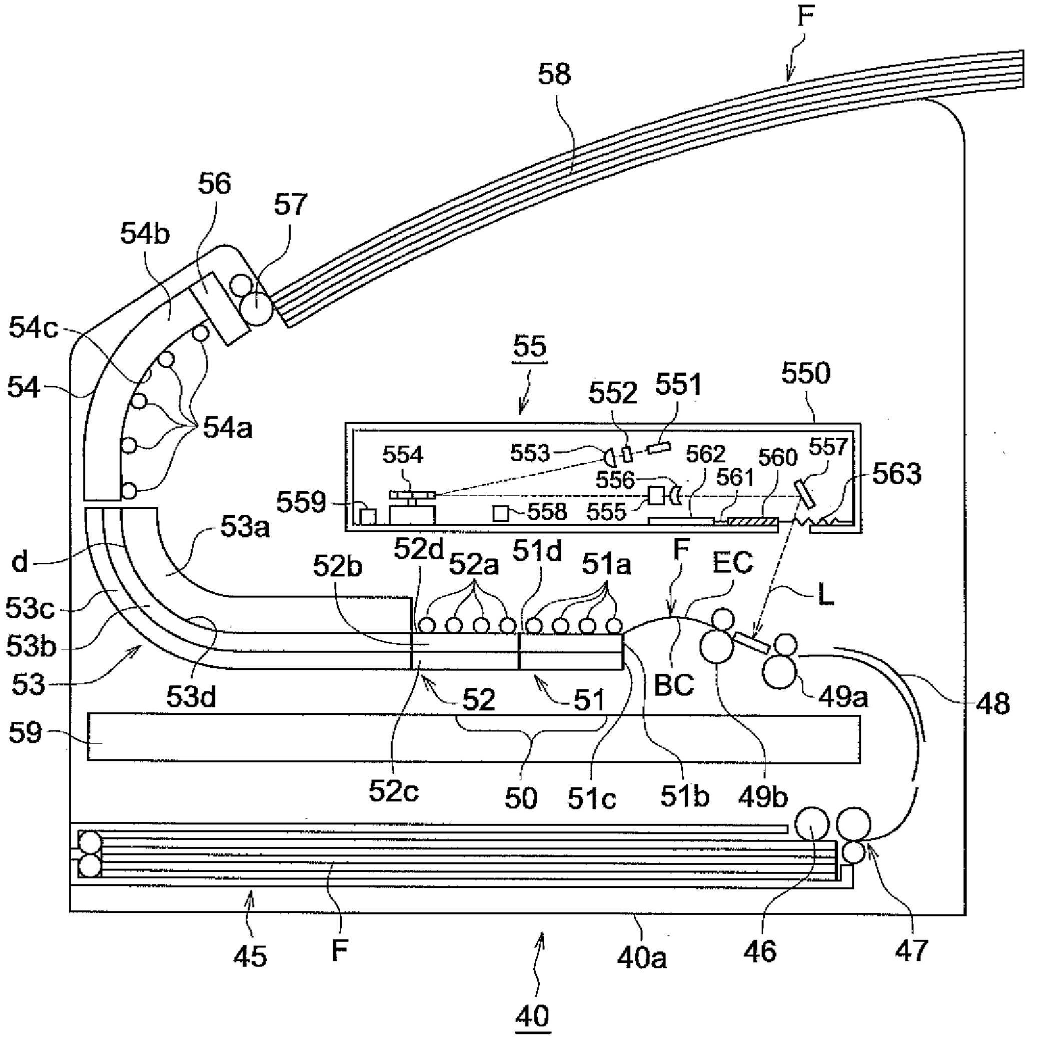
F
58
56
57
54b
54c
54
54a
55
552
551
550
553
554
562
560
557
563
556
561
559
558
555
53a
d
52b
52d
52a
51d
51a
F
EC
L
53c
53b
53
53d
52
51
BC
49a
48
59
50
52c
51c
51b
49b
45
F
40a
46
47
40

FIG. 2

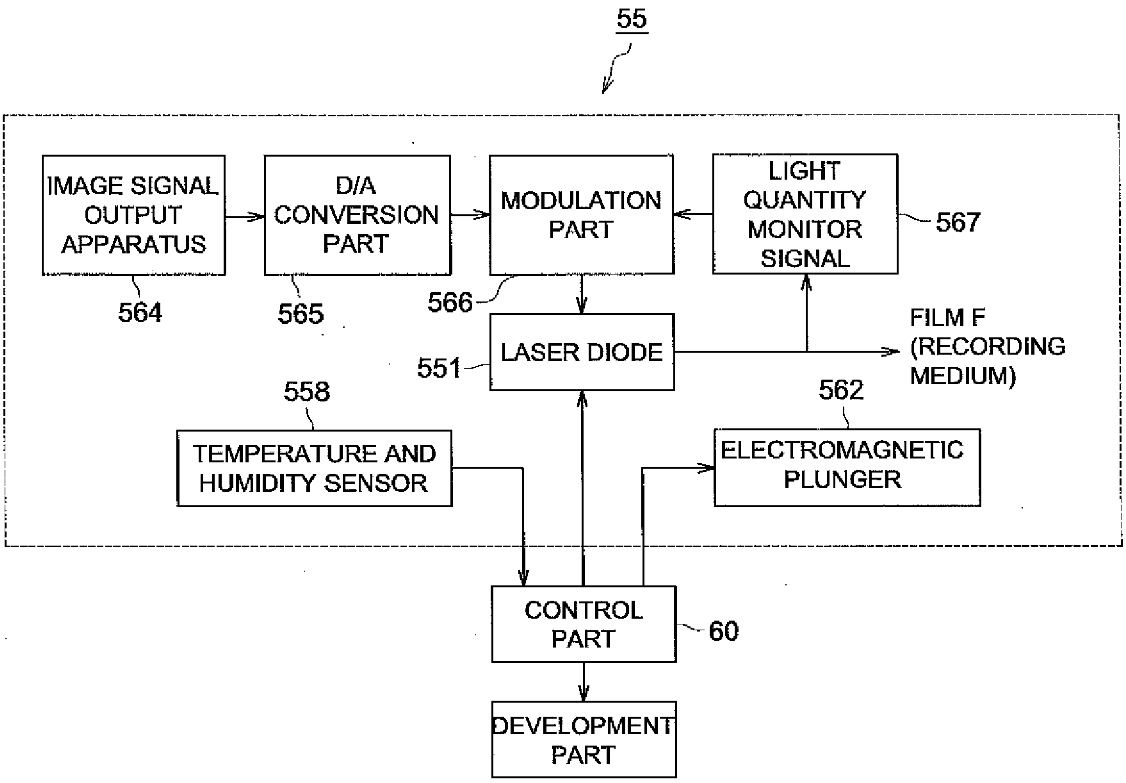
55
IMAGE SIGNAL OUTPUT APPARATUS
D/A CONVERSION PART
MODULATION PART
LIGHT QUANTITY MONITOR SIGNAL
567
564
565
566
LASER DIODE
551
FILM F (RECORDING MEDIUM)
558
562
TEMPERATURE AND HUMIDITY SENSOR
ELECTROMAGNETIC PLUNGER
CONTROL PART
60
DEVELOPMENT PART

## INTERNATIONAL SEARCH REPORT

International application No.
PCT/JP2006/313713

A. CLASSIFICATION OF SUBJECT MATTER
*G03C1/498*(2006.01)i, *G03B27/32*(2006.01)i, *G03C5/08*(2006.01)i, *G03D13/00*(2006.01)i

According to International Patent Classification (IPC) or to both national classification and IPC

B. FIELDS SEARCHED

Minimum documentation searched (classification system followed by classification symbols)
G03C1/498, G03B27/32, G03C5/08, G03D13/00, G02B3/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| Y | JP 2004-85660 A (Fuji Photo Film Co., Ltd.), 18 March, 2004 (18.03.04), Claims; Par. Nos. [0047] to [0066], [0078], [0079], [0130] to [0138], [0158] to [0166]; examples; drawings & US 2004/0038156 A1 | 1-15,17,18 |
| Y | JP 2003-131342 A (Fuji Photo Film Co., Ltd.), 09 May, 2003 (09.05.03), Claims; Par. Nos. [0024] to [0031], [0146] to [0159], [0163] to [0165], [0237] to [0240]; examples (Family: none) | 1-15,17,18 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 September, 2006 (26.09.06) | 03 October, 2006 (03.10.06) |
| Name and mailing address of the ISA/ Japanese Patent Office | Authorized officer |
| Facsimile No. | Telephone No. |

Form PCT/ISA/210 (second sheet) (April 2005)

INTERNATIONAL SEARCH REPORT

International application No. PCT/JP2006/313713

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2005-156879 A (Ricoh Co., Ltd.), 16 June, 2005 (16.06.05), Full text (Family: none) | 1-15,17,18 |
| Y | JP 2005-157125 A (Ricoh Co., Ltd.), 16 June, 2005 (16.06.05), Full text (Family: none) | 1-15,17,18 |
| Y | JP 2001-74915 A (Mitsui Chemicals, Inc.), 23 March, 2001 (23.03.01), Full text (Family: none) | 1-15,17,18 |
| A | JP 2002-202565 A (Fuji Photo Film Co., Ltd.), 19 July, 2002 (19.07.02), Claims; Par. No. [0017] (Family: none) | 6 |
| A | JP 3-153371 A (Fuji Photo Film Co., Ltd.), 01 July, 1991 (01.07.91), Claims (Family: none) | 6 |
| A | JP 2003-287861 A (Fuji Photo Film Co., Ltd.), 10 October, 2003 (10.10.03), Full text & US 2003/0185558 A1 | 7-14 |
| A | JP 2005-25043 A (Konica Minolta Medical & Graphic, Inc.), 27 January, 2005 (27.01.05), Full text (Family: none) | 8,12-14 |
| A | JP 2003-195467 A (Konica Corp.), 09 July, 2003 (09.07.03), Full text & US 2003/0118926 A1 & EP 1566276 A2 | 8,12-14 |
| E,A | JP 2006-251755 A (Konica Minolta Medical & Graphic, Inc.), 21 September, 2006 (21.09.06), Full text & US 2006/00788346 A1 & EP 1650598 A1 | 16 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003195203 A
- EP 1168069 A1
- JP 2002023303 A
- US 5264337 A
- US 5314798 A
- US 5320958 A
- JP 449497 A
- JP 5323487 A
- JP 6011780 A
- JP 2003270755 A
- JP 2003337269 A
- JP 2001249428 A
- JP 2001249426 A
- JP 60150046 A
- JP 4109240 A
- JP 11218874 A
- JP 11218875 A
- JP 11218876 A
- JP 11194447 A
- JP 3024537 A
- JP 63159841 A
- JP 60140335 A
- JP 63231437 A
- JP 63259651 A
- JP 63304242 A
- JP 63015245 A
- US 4639835 A
- US 4740455 A
- US 4741966 A
- US 4751175 A
- US 4835096 A
- JP 9034078 A
- JP 9054409 A
- JP 9080679 A
- US 4536473 A
- US 4515888 A
- US 4959294 A
- JP 9025500 A
- JP 434933 A
- JP 59019032 A
- JP 59192242 A
- JP 5341432 A
- JP 2001330918 A
- EP 1278101 A
- US 3770448 A
- US 3773512 A
- US 3593863 A
- JP 11119372 A
- JP 2002062616 A
- JP 2002006463 A
- JP 2000029164 A
- US 4123282 A
- US 3994732 A
- US 3846136 A
- US 4021249 A
- JP 11288057 A
- EP 1134611 A2
- US 3445234 A
- US 4021250 A
- US 4022617 A
- US 4368247 A
- US 4461681 A
- JP 50036110 A
- JP 59206831 A
- JP 5204087 A
- JP 11231460 A
- JP 2002169249 A
- JP 2002236334 A
- EP 1211093 A
- US 2358836 A
- US 3003879 A
- US 2828204 A
- GB 771155 A
- JP 2002287299 A
- JP 50069216 A
- JP 56005535 A
- JP 2001264930 A
- JP 2004021068 A
- US 20020025498 A
- JP 2003091054 A
- JP 6208192 A
- JP 2004234206 A
- JP 2002090937 A
- JP 2003050441 A
- JP 8314059 A
- JP 7206797 A
- JP 55140833 A
- JP 2001013627 A
- JP 2000330235 A
- JP 2000515995 W
- JP 2002207273 A
- US 3589903 A
- US 4546075 A
- US 4452885 A
- JP 59057234 A
- US 3874946 A
- US 4756999 A
- JP 9288328 A

- JP 9090550 A
- US 5028523 A
- EP 600587 A
- EP 605981 A
- EP 631176 A
- JP 60244945 A
- JP 63306437 A
- JP 1024245 A
- JP 5197068 A
- JP 5204115 A
- JP 2001083655 A
- JP 8201959 A
- US P5244773 A
- JP 56143431 A
- JP 56120519 A
- JP 58062647 A
- JP 59006235 A
- JP 2000015173 A
- US 6352819 B
- US 6352820 B
- US 6350561 B
- JP 8254793 A
- JP 2000206653 A
- JP 2000235241 A
- JP 2002062625 A
- JP 2003015261 A
- JP 2003057790 A
- JP 2003084397 A
- JP 2003098648 A
- JP 2003098635 A
- JP 2003107635 A
- JP 2003131337 A
- JP 2003146330 A
- JP 2003226439 A
- JP 2003228152 A
- JP 10059720 A
- JP 58058288 A

**Non-patent literature cited in the description**


- **T.TANI.** *J. Imaging Sci.,* 1985, vol. 29, 165
- **GRIFFIN W. C.** *J. Soc. Cosm. Chem.,* 1949, vol. 1, 311
- **C. J. PEDERSON.** *Journal of American Chemical Society,* 1967, vol. 86 (2495), 7017-7036
- **G. W. GOKEI ; S. H. KORZENIOWSKI.** Macrocyclic polyether synthesis. Springer-Vergal, 1982
- Chemistry of Crown Ether. 1978
- Host -Gest. 1979
- **SASAKI ; KOGA.** *Organic Synthetic Chemistry,* 1987, vol. 45 (6), 571-582
- The Theory of the Photographic Process. Macmillan Publishing Co., Ltd, 1977
- Fundamentals of Photographic Engineering (Silver Salt Photography. Corona Corp, 1977
- *Research Disclosure,* December 1978, 23
- *RD 18431,* August 1978, 437
- The Chemistry of Heterocyclic Compounds. **F. M. HARMER.** The Cyanine Dyes and Related Compounds. Interscience Corp, 1964, vol. 18
- *RD 17643,* December 1978, 23
- Polymer Technology Course. Polymer Material Test Methods. Chijin Shokan Co., Ltd, vol. 14